# EUROPEAN PATENT SPECIFICATION

(11) **EP 3 858 496 B1**
(45) Date of publication and mention of the grant of the patent: **07.01.2026**
(21) Application number: 19865588.8
(22) Date of filing: 05.09.2019
(51) Int. Cl.: B05D 7/24, B32B 17/06, C03C 17/30, C03C 23/00, C09D 171/00, C09K 3/18

(54) **SURFACE TREATMENT METHOD AND SURFACE-TREATED ARTICLE**
VERFAHREN ZUR OBERFLÄCHENBEHANDLUNG UND OBERFLÄCHENBEHANDELTER GEGENSTAND
PROCÉDÉ DE TRAITEMENT DE SURFACE ET ARTICLE DONT LA SURFACE A ÉTÉ TRAITÉE

(30) Priority: 28.09.2018 JP 2018185830
(43) Date of publication of application: 04.08.2021
(73) Proprietor: DAIKIN INDUSTRIES, LTD., Osaka-Shi, Osaka 530-0001 (JP)
(72) Inventor: NOSE, Masatoshi, Osaka-shi, Osaka 530-8323 (JP)
(74) Representative: Hoffmann Eitle
(86) International application number: PCT/JP2019/035033
(87) International publication number: WO 2020/066533

(56) References cited:
- EP-A1- 3 225 646
- WO-A1-03/002628
- WO-A1-2010/125964
- WO-A1-2018/056410
- WO-A1-2018/056410
- WO-A1-2018/056413
- JP-B1- 6 182 291
- JP-B2- S6 341 328
- US-A1- 2013 303 689
- US-B2- 10 851 204

## Description

### Technical Field

The present disclosure relates to a surface treatment method and a surface-treated article.

### Background Art

It is known that, in order to impart functionality such as water-repellency to a substrate such as a glass substrate, the substrate is treated with a surface-treating agent containing a fluorine-containing silane compound to form a surface-treating layer on the surface of the substrate.

Examples of applications of articles having a surface-treating layer formed on the surface of a substrate include automotive applications and building material applications. In such applications, a function is required that does not allow grime, water droplets, or the like to adhere to the surface, and, even when they adhere, makes it possible to easily remove them. For example, as an article for automotive applications or building material applications, in which the substrate surface is surface-treated, Patent Literature 1 discloses an automotive glass obtained by drycoating a glass substrate with an organometallic compound having a reactive group to form an undercoat layer and coating the undercoat layer with a fluoroether polymer Si compound to form a water-repelling layer. The glass substrate of Patent Literature 1 is described as having excellent water-repellency and lubricity. Patent Literature 2 (WO 2018/056410) concerns a compound to be suitably used for antifouling agents.

### Citation List

### Patent Literature

Patent Literature 1: International Publication No. WO 2010/125964 Patent Literature 2: International Publication No. WO 2018/056410

### Summary of Invention

### Technical Problem

Articles having a surface-treating layer on the substrate surface are required to have, in addition to water-repellency and the like as described in Patent Literature 1, high weather resistance and high ultraviolet resistance (hereinafter also referred to as "UV resistance") especially in applications for outdoor use, e.g., when used as automotive glass. However, it cannot be said that these functions are sufficient in Patent Literature 1.

Accordingly, an object of the present disclosure is to provide an article having, in addition to excellent weather resistance and UV resistance, sufficient water-repellency, oil-repellency, lubricity, friction durability, and chemical resistance, as well as a production method therefor.

### Solution to Problem

The present disclosure is in accordance with the appended claims.

### Effect of Invention

The method of producing an article of the present disclosure is capable of providing an article having, in addition to excellent weather resistance and UV resistance, sufficient water-repellency, oil-repellency, lubricity, friction durability, and chemical resistance. Having sufficient oil-repellency, lubricity, friction durability, and chemical resistance in addition to excellent weather resistance and UV resistance, the article of the present disclosure is capable of maintaining antifouling properties such as water-repellency and oil-repellency for a long period of time in various environments, for example, even in outdoor applications involving exposure to ultraviolet, wind and rain, and friction resulting from wiping or the like. In particular, the article of the present disclosure is excellent for outdoor applications, for example, as a building material and an automotive component, especially automotive glass.

### Brief Description of Drawing

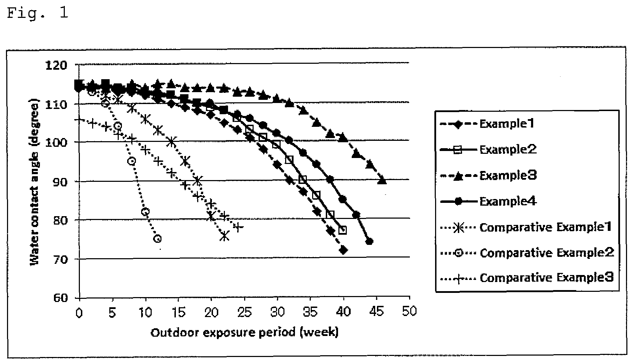

Figure 1 shows the evaluation results of Test Example 9 of water-repelling substrates 1 to 7.

### Description of Embodiments

The present disclosure provides a method of producing an article comprising a substrate and a layer on a surface of the substrate, the layer formed of a surface-treating agent comprising a polyether group-containing silane compound.

Below, the method of producing an article of the present disclosure will now be described in detail.

First, a substrate is provided. Preferably, the substrate usable in the present disclosure may be composed of a material having a hydroxyl group at least on a surface portion thereof. The hydroxyl group may be originally contained in the material that constitutes the substrate, or may be introduced otherwise. The substrate, or at least on a surface portion thereof, may be composed of a silicone compound having one or more other reactive groups such as a Si-H group, or a material containing alkoxysilane.

The substrate may be composed of any suitable material such as glass, metal (which may be a simple substance of a metal such as aluminum, copper, or iron, or a composite such as an alloy).

In one embodiment, the substrate is glass or sapphire glass.

Glass is preferably inorganic glass or organic glass having a functional group (such as a hydroxyl group, an amino group, or a thiol group) on the surface, or alkali-containing glass such as soda-lime-silicate glass. Non-alkali glass such as borosilicate glass is also usable. Glass may be laminated glass, tempered glass, or the like.

Glass is preferably, for example, soda-lime glass, alkali aluminosilicate glass, borosilicate glass, alkalifree glass, crystal glass, or quartz glass, and particularly preferably chemically strengthened soda-lime glass, chemically strengthened alkali aluminosilicate glass, and chemically bonded borosilicate glass.

Glass may be commercially available soda-lime glass for use in vehicles, vessels, aircrafts, construction, or the like.

The shape of the substrate is not limited. The surface region of the substrate on which a surface-treating layer is to be formed is at least a part of the substrate surface, and may be suitably determined according to the application of an article to be produced, specific specifications, and the like.

In one embodiment, glass is preferably inorganic transparent sheet glass of various kinds, such as float glass used in building window glass, vehicle window glass, or the like, especially the top surface thereof, or roll-out glass. Glass is not limited as to whether it is colorless or colored, and as to the type or color tone thereof, combination with another functional film on another surface, shape, and the like. Moreover, glass may be various kinds of tempered glass or strengthened glass in addition to being bent sheet glass, and can be used in the form of a flat plate or a single plate or, alternatively, can be used as double-glazed glass or laminated glass.

Before applying the surface-treating agent to the substrate, the substrate may be pre-treated. Examples of such a pre-treatment include a plasma treatment and ion beam irradiation.

In a preferable embodiment, the pre-treatment may be a plasma treatment. Such a plasma treatment can be suitably utilized to not only introduce or increase a point of reaction with the surface-treating agent onto the surface of the substrate, but also clean the substrate surface (removal of foreign matter and the like).

The plasma treatment may be performed under atmospheric pressure, reduced pressure, or vacuum, and the plasma treatment is preferably an atmospheric pressure plasma treatment and, more specifically, an atmospheric pressure plasma CVD method.

The apparatus and conditions used in the atmospheric pressure plasma treatment are not limited as long as the apparatus and conditions can bring the substrate surface into a desired state.

In a preferable embodiment, the atmospheric pressure plasma treatment can be performed using a jet-type atmospheric pressure plasma discharge treatment apparatus or a direct-type atmospheric pressure plasma discharge treatment apparatus. Preferably, a jet-type atmospheric pressure plasma discharge treatment apparatus is used in the atmospheric pressure plasma treatment.

The jet-type atmospheric pressure plasma discharge treatment apparatus is an apparatus having a plasma discharge treatment unit, an electric field application unit having two power sources, a gas supply unit, and an electrode temperature control unit. Such an atmospheric pressure plasma discharge treatment apparatus may be, for example, the apparatus described in International Publication No. WO 2010/125964.

In the above atmospheric pressure plasma discharge treatment apparatus, in the discharge space (i.e., between counter electrodes) between a first electrode (such as a rolled rotating electrode) and the second electrode (for example, a group of prismatic fixed electrodes), a first high frequency electric field having a frequency ω1, an electric field intensity V1, and an electric current I1 is applied to the first electrode from the first power source, and a second high frequency electric field having a frequency ω2, an electric field intensity V2, and an electric current I2 is applied to the second electrode from the respective second power sources corresponding thereto. In the atmospheric pressure plasma discharge treatment apparatus, the rolled rotating electrode may be the second electrode, and the group of prismatic fixed electrodes may be the first electrode.

The first power source is connected to the first electrode, and the second power source is connected to the second electrode. Preferably, the first power source applies a high frequency electric field intensity that is higher than that of the second power source (V1>V2). Moreover, the frequencies have the ability of being ω1<ω2.

In one embodiment, the electric currents may be I1<I2. Electric current I1 of the first high frequency electric field is preferably 0.3 to 20 mA/cm², and more preferably 1.0 to 20 mA/cm². Electric current I2 of the second high frequency electric field is preferably 10 to 100 mA/cm², and more preferably 20 to 100 mA/cm².

As for the first power source (specifically, a high frequency power source) to be provided in the atmospheric pressure plasma discharge treatment apparatus, those listed in the following table are preferably used.

**[Table 1]**

| Manufacturer | Frequency | Product name |
|---|---|---|
| SHINKO ELECTRIC CO., LTD. | 3 kHz | SPG3-4500 |
| SHINKO ELECTRIC CO., LTD. | 5 kHz | SPG5-4500 |
| KASUGA DENKI, INC. | 15 kHz | AGI-023 |
| SHINKO ELECTRIC CO., LTD. | 50 kHz | SPG50-4500 |
| HAIDENLABORATORY | 100 kHz* | PHF-6k |
| PEARL KOGYO Co., Ltd. | 200 kHz | CF-2000-200k |
| PEARL KOGYO Co., Ltd. | 400 kHz | CF-2000-400k |

As for the second power source (specifically, a high frequency power source) to be provided in the atmospheric pressure plasma discharge treatment apparatus, those listed in the following table are preferably used.

**[Table 2]**

| Manufacturer | Frequency | Product name |
|---|---|---|
| PEARL KOGYO Co., Ltd. | 800 kHz | CF-2000-800k |
| PEARL KOGYO Co., Ltd. | 2 MHz | CF-2000-2M |
| PEARL KOGYO Co., Ltd. | 13.56 MHz | CF-5000-13M |
| PEARL KOGYO Co., Ltd. | 27 MHz | CF-2000-27M |
| PEARL KOGYO Co., Ltd. | 150 MHz | CF-2000-150M |

Among the above power sources, "*" refers to a HAIDENLABORATORY impulse high frequency power source (100 kHz in continuous mode). Others are high frequency power sources capable of applying continuous sine waves only.

In the present disclosure, electrodes capable of maintaining a uniform, stable discharge state by applying such an electric field are preferably employed in the atmospheric pressure plasma discharge treatment apparatus.

In the above atmospheric pressure plasma treatment, the electric power applied across the facing electrodes supplies an electric power (a power density) of 1 W/cm² or more to the second electrode (the second high frequency electric field), thus excites discharge gas to produce plasma, gives energy to thin-film forming gas, and forms a thin film. The upper limit of the electric power supplied to the second electrode is preferably 50 W/cm², and more preferably 20 W/cm². The lower limit is preferably 1.2 W/cm². The discharge area (cm²) refers to the area of the electrode where discharge occurs.

Also, by supplying an electric power (a power density) of 1 W/cm² or more to the first electrode (the first high frequency electric field), the power density can be increased while maintaining the uniformity of the second high frequency electric field. Accordingly, a further uniform high density plasma can be produced, and a further increase of a film forming rate and increase of film quality can be simultaneously achieved. The electric power is preferably 5 W/cm² or more. The upper limit of the electric power supplied to the first electrode is preferably 50 W/cm².

The waveform of the high frequency electric field is not limited. There are, for example, a continuous oscillation mode having a continuous sine wave, which is referred to as a continuous mode, and an intermittent oscillation mode for intermittently performing ON/OFF, which is referred to as a pulse mode. While either of them may be employed, a continuous sine wave is preferable at least on the second electrode side (the second high frequency electric field) because a denser and higher-quality film can be obtained.

In the atmospheric pressure plasma treatment, control of film quality can also be achieved by controlling the electric power on the second power source side.

Examples of atmospheric pressure plasma discharge treatment apparatuses applicable to the atmospheric pressure plasma treatment include Si-Plasma(R) manufactured by Creating Nano Tech. Inc., and Dyne-A-Mite IT manufactured by Enercon Industries Corporation. Other than the above, further examples include the atmospheric pressure plasma discharge treatment apparatuses described in Japanese Patent Laid-Open No. 2004-68143, Japanese Patent Laid-Open No. 2003-49272, International Publication No. WO 02/48428, and the like.

The discharge gas used in the atmospheric pressure plasma treatment may be, for example, inert gas such as helium, neon, argon, krypton, xenon, radon, or nitrogen, and is preferably helium, argon, or nitrogen, and more preferably argon.

The reactive gas used in the atmospheric pressure plasma treatment is, for example, oxygen, ozone, hydrogen peroxide, carbon dioxide, carbon monoxide, hydrogen, methane, acetylene, carbon monoxide, carbon dioxide, ammonia, nitrous oxide, nitrogen oxide, nitrogen dioxide, oxygen, water (water vapor), fluorine, hydrogen fluoride, trifluoroalcohol, trifluorotoluene, hydrogen sulfide, sulfur dioxide, carbon disulfide, or chlorine, and is preferably oxygen.

In one embodiment, the atmospheric pressure plasma treatment may be performed in the presence of a silicon compound, or that is to say, a silicon compound may be caused to coexist with the reactive gas and the discharge gas. Performing an atmospheric pressure plasma treatment in the presence of a silicon compound makes it possible to obtain a surface-treating layer that has excellent surface-treating layer functions, especially weather resistance and friction durability.

Suitably selecting decomposition gases, various kinds of silicon carbide, silicon nitride, silicon oxide, silicon halide, and silicon sulfide can be obtained.

In one embodiment, by using the silicon compound as a raw material compound and using oxygen as reactive gas, silicon oxide can be obtained, and by using carbon dioxide as reactive gas, silicon carbonated product is produced.

Examples of the silicon compound include silane, tetramethoxysilane, tetraethoxysilane, tetra-n-propoxysilane, tetraisopropoxysilane, tetra-n-butoxysilane, tetra-t-butoxysilane, dimethyldimethoxysilane, dimethyldiethoxysilane, diethyldimethoxysilane, diphenyldimethoxysilane, methyltriethoxysilane, ethyltrimethoxysilane, phenyltriethoxysilane, (3,3,3-trifluoropropyl)trimethoxysilane, hexamethyldisiloxane, bis(dimethylamino)dimethylsilane, bis(dimethylamino)methylvinylsilane, bis(ethylamino)dimethylsilane, N,O-bis(trimethylsilyl)acetamide, bis(trimethylsilyl)carbodiimide, diethylaminotrimethylsilane, dimethylaminodimethylsilane, hexamethyldisilazane, hexamethylcyclotrisilazane, heptamethyldisilazan, nonamethyltrisilazane, octamethylcyclotetrasilazane, tetrakis-dimethylaminosilane, tetraisocyanate silane, tetramethyldisilazane, tris(dimethylamino)silane, triethoxyfluorosilane, allyldimethylsilane, allyltrimethylsilane, benzyltrimethylsilane, bis(trimethylsilyl)acetylene, 1,4-bistrimethylsilyl-1,3-butadiine, di-t-butylsilane, 1,3-disilabutane, bis(trimethylsilyl)methane, cyclopentadienyltrimethylsilane, phenyldimethylsilane, phenyltrimethylsilane, propargyltrimethylsilane, tetramethylsilane, trimethylsilylacetylene, 1-(trimethylsilyl)-1-propyne, tris(trimethylsilyl)methane, tris(trimethylsilyl)silane, vinyltrimethylsilane, hexamethyldisilane, octamethylcyclotetrasiloxane, tetramethylcyclotetrasiloxane, hexamethylcyclotetrasiloxane, and M silicate 51.

The combination of discharge gas and reactive gas used in the atmospheric pressure plasma treatment is preferably argon gas and oxygen gas.

The flow rate ratio of discharge gas to reactive gas used in the atmospheric pressure plasma treatment may be 1:5 to 5:1, preferably 1:3 to 3:1, and more preferably 2:3 to 3:2.

The treatment pressure in the atmospheric pressure plasma treatment is about 20 kPa to 110 kPa, and preferably 90 kPa to 105 kPa.

The output of the atmospheric pressure plasma treatment is, for example, 700 to 800 W, and preferably 720 to 770 W.

Then, a film of the surface-treating agent is formed on the surface of the substrate, this film is post-treated as necessary, and thereby a surface-treating layer is formed from the surface-treating agent.

The surface-treating agent used in the production method of the present disclosure contains a compound having a fluoropolyether group and a silane-containing reactive crosslinking group in an isocyanuric skeleton (hereinafter also referred to as "compound α").

The "hydrocarbon group", as used herein, means a group that contains carbon and hydrogen and that is obtained by eliminating one hydrogen atom from hydrocarbon. The hydrocarbon group is not limited, and examples include a hydrocarbon group that has 1 to 20 carbon atoms, optionally substituted with one or more substituents, such as an aliphatic hydrocarbon group and an aromatic hydrocarbon group. The "aliphatic hydrocarbon group" may be any linear, branched, or cyclic group, and may be any saturated or unsaturated group. The hydrocarbon group may contain one or more ring structures. The hydrocarbon group may have one or more N, O, S, Si, amide, sulfonyl, siloxane, carbonyl, carbonyloxy, and the like at an end thereof or in a molecular chain thereof.

The substituent of the "hydrocarbon group", as used herein, is not limited, and examples include a halogen atom; and one or more groups selected from a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group, and a 5 to 10-membered heteroaryl group each optionally substituted with one or more halogen atoms.

The "organic group", as used herein, means a group containing carbon. The organic group is not limited, and may be a hydrocarbon group. The "di- to decavalent organic group" means a di- to decavalent group containing carbon. The di- to decavalent organic group is not limited, and examples include a di- to decavalent group obtained by further eliminating 1 to 9 hydrogen atoms from a hydrocarbon group. For example, the divalent organic group is not limited, and examples include a divalent group obtained by further eliminating one hydrogen atom from a hydrocarbon group.

In one embodiment, compound α may be a compound represented by formula (α1) or formula (α2) below: 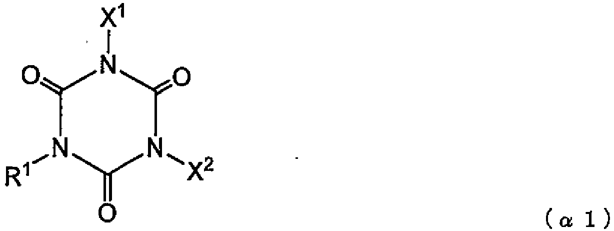 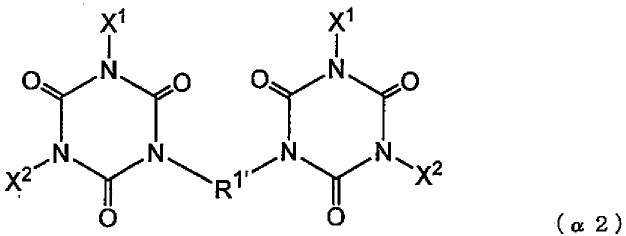 wherein
R¹ is a monovalent organic group containing a polyether chain,
R^{1'} is a divalent organic group containing a polyether chain,
the polyether chain is a chain represented by
formula: - (OC₆F₁₂)ₘ₁₁-(OC₅F₁₀)ₘ₁₂-(OC₄F₈)ₘ₁₃-(OC₃X¹⁰₆)ₘ₁₄-(OC₂F₄)m₁₅-(OCF₂)m₁₆-
   wherein m11, m12, m13, m14, m15, and m16 are independently an integer of 0 or 1 or more,
X¹⁰ is independently H, F, or Cl, and
the occurrence order of each repeating unit is arbitrary,
X¹ is independently a silane-containing reactive crosslinking group, and
X² independently represents a monovalent group.

R¹ is preferably a monovalent organic group containing a polyether chain (provided that those containing a urethane bond are excluded).

R^{1'} is preferably a divalent organic group containing a polyether chain (provided that those containing a urethane bond are excluded).

X¹⁰ is preferably F.

m11 to m16 are each preferably an integer of 0 to 200, and more preferably an integer of 0 to 100. The total of m11 to m16 is preferably 1 or more, more preferably 5 or more, and further preferably 10 or more. The total of m11 to m16 is preferably 200 or less, and more preferably 100 or less. The total of m11 to m16 is preferably 10 to 200, and more preferably 10 to 100.

In the polyether chain, each repeating unit may be linear or branched, and is preferably linear. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like, and is preferably - (OCF₂CF₂CF₂CF₂CF₂CF₂)-. -(OC₅F₁₀)- may be -(OCF₂CF₂CF₂CF₂CF₂)-, - (OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃))-, or the like, and is preferably -(OCF₂CF₂CF₂CF₂CF₂)-. -(OC₄F₈)- may be any of - (OCF₂CF₂CF₂CF₂)-, -(OCF (CF₃)CF₂CF₂)-, -(OCF₂CF(CF₃)CF₂)-, - (OCF₂CF₂CF(CF₃)) -, -(OC (CF₃)₂CF₂)-, - (OCF₂C(CF₃)₂)-, - (OCF (CF₃)CF (CF₃))-, -(OCF(C₂F₅)CF₂)-, and -(OCF₂CF(C₂F₅))-, and is preferably -(OCF₂CF₂CF₂CF₂)-. -(OC₃F₆)- may be any of -(OCF₂CF₂CF₂)-, -(OCF(CF₃)CF₂)-, and -(OCF₂CF(CF₃))-, and is preferably -(OCF₂CF₂CF₂)-. -(OC₂F₄)- may be any of - (OCF₂CF₂)- and -(OCF(CF₃))-, and is preferably -(OCF₂CF₂)-.

In one embodiment, the polyether chain is a chain represented by -(OC₃F₆)ₘ₁₄- (wherein m14 is an integer of 1 to 200). The polyether chain is preferably a chain represented by -(OCF₂CF₂CF₂)ₘ₁₄- (wherein m14 is an integer of 1 to 200) or a chain represented by -(OCF(CF₃)CF₂)ₘ₁₄-(wherein m14 is an integer of 1 to 200). In one embodiment, the polyether chain is a chain represented by -(OCF₂CF₂CF₂)ₘ₁₄-(wherein m14 is an integer of 1 to 200). In another embodiment, the polyether chain is a chain represented by - (OCF(CF₃)CF₂)ₘ₁₄- (wherein m14 is an integer of 1 to 200). m14 is preferably an integer of 5 to 200, and more preferably an integer of 10 to 200.

In another embodiment, the polyether chain is a chain represented by -(OC₄F₈)ₘ₁₃-(OC₃F₆)ₘ₁₄-(OC₂F₄)ₘ₁₅-(OCF₂)ₘ₁₆-(wherein m13 and m14 are each an integer of 0 to 30, and m15 and m16 are each an integer of 1 to 200; the total of m13 to m16 is 5 or more; and the occurrence order of each repeating unit is arbitrary). m15 and m16 are each preferably an integer of 5 to 200, and more preferably an integer of 10 to 200. The total of m13 to m16 is preferably 10 or more. The polyether chain is preferably -(OCF₂CF₂CF₂CF₂)ₘ₁₃-(OCF₂CF₂CF₂)ₘ₁₄-(OCF₂CF₂)ₘ₁₅-(OCF₂)ₘ₁₆-. In one embodiment, the polyether chain may be a chain represented by -(OC₂F₄)ₘ₁₅-(OCF₂)ₘ₁₆- (wherein m15 and m16 are each an integer of 1 to 200; and the occurrence order of each repeating unit is arbitrary). m15 to m16 are each preferably an integer of 5 to 200, and more preferably an integer of 10 to 200.

In yet another embodiment, the polyether chain is a group represented by -(R^{m1}-R^{m2})ₘ₁₇-. In the formula, R^{m1} is OCF₂ or OC₂F₄, and preferably OC₂F₄. In the formula, R^{m2} is a group selected from OC₂F₄, OC₃F₆, OC₄F₈, OC₅F₁₀, and OC₆F₁₂, or is a combination of two or three groups independently selected from these groups. Preferably, R^{m1} is a group selected from OC₂F₄, OC₃F₆, and OC₄F₈, a group selected from OC₃F₆, OC₄F₈, OC₅F₁₀, and OC₆F₁₂, or a combination of two or three groups independently selected from these groups. The combination of two or three groups independently selected from OC₂F₄, OC₃F₆, and OC₄F₈ is not limited, and examples include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₃F₄OC₄F₃-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄- - OC₃F₆OC₂F₄OC₃F₆-, -OC₃F₆OC₃F₆OC₂F₄-, and -OC₄FeOC₂F₄OC₂F₄-. m17 is an integer of 2 or more, preferably an integer of 3 or more, and more preferably an integer of 5 or more, and is an integer of 100 or less, and preferably an integer of 50 or less. In the formula, OC₂F₄, OC₃F₆, OC₄F₈, OC₅F₁₀, and OC₆F₁₂ may be linear or branched, and are preferably linear. In this embodiment, the polyether chain is preferably -(OC₂F₄-OC₃F₆)ₘ₁₇- or -(OC₂F₄OC₄F₈)ₘ₁₇-.

In yet another embodiment, the polyether chain is a group represented by -(OC₆F₁₂)ₘ₁₁-(OC₅F₁₀)ₘ₁₂- (OC₄F₈)ₘ₁₃-(OC₃F₆)ₘ₁₄-(OC₂F₄)ₘ₁₅-(OCF₂)ₘ₁₆- (wherein m15 is an integer of 1 or more and 200 or less; m11, m12, m13, m14, and m16 are each independently an integer of 0 or more and 200 or less; the sum of m11, m12, m13, m14, m15, and m16 is at least 1; and the occurrence order of each repeating unit enclosed in parentheses provided with m11, m12, m13, m14, m15, or m16 is arbitrary in the formula). m15 is preferably an integer of 1 or more and 100 or less, and more preferably 5 or more and 100 or less. The sum of m11, m12, m13, m14, m15 and m16 is preferably 5 or more, and more preferably 10 or more, for example, 10 or more and 100 or less.

In yet another embodiment, the polyether chain is - (OC₆F₁₂)ₘ₁₁- (OC₅F₁₀)ₘ₁₂- (OC₄F₈)ₘ₁₃-(OC₃F₆)ₘ₁₄-(OC2F₄)ₘ₁₅-(OCF₂)ₘ₁₆-(wherein m16 is an integer of 1 or more and 200 or less; m11, m12, m13, m14, and m15 are each independently an integer of 0 or more and 200 or less; the sum of m11, m12, m13, m14, m15 and m16 is at least 1; and the occurrence order of each repeating unit enclosed in parentheses provided with m11, m12, m13, m14, m15 or m16 is arbitrary in the formula). m16 is preferably an integer of 1 or more and 100 or less, and more preferably 5 or more and 100 or less. The sum of m11, m12, m13, m14, m15, and m16 is preferably 5 or more, and more preferably 10 or more, for example, 10 or more and 100 or less.

The ratio of m15 to m16 in the polyether chain (hereinafter, referred to as an "m15/m16 ratio") is 0.1 to 10, preferably 0.2 to 5, more preferably 0.2 to 2, further preferably 0.2 to 1.5 or less, and even more preferably 0.2 to 0.85. An m15/m16 ratio of 10 or less results in more increased lubricity, friction durability, and chemical resistance (for example, durability against artificial sweat) of the surface-treating layer. The lower the m15/m16 ratio is, the more increased the lubricity and friction durability of the surface-treating layer is. On the other hand, an m15/m16 ratio of 0.1 or more can result in more increased stability of the compound. The higher the m15/m16 ratio is, the more increased the stability of the compound is.

The polyether chain may be at least one chain selected from the group consisting of a chain represented by

formula: -(OCF₂CF₂CX¹¹₂)ₙ₁₁(OCF2CF (CF₃)) ₙ₁₂(OCF₂CF₂)ₙ₁₃(OCF2) ₙ₁₄(OC₄F₈)ₙ₁₅-
wherein n11, n12, n13, n14, and n15 are independently an integer of 0 or 1 or more;
   X¹¹ is independently H, F, or Cl; and
   the occurrence order of each repeating unit is arbitrary, and
a chain represented by

   formula: -(OCF₂-R¹¹)_{f}-
wherein R¹¹ is a group selected from OC₂F₄, OC₃F₆, and OC₄F₈; and f is an integer of 2 to 100.

X¹¹ is preferably F.

n11 to n15 are each preferably an integer of 0 to 200. The total of n11 to n15 is preferably 2 or more, more preferably 5 to 300, further preferably 10 to 200, and particularly preferably 10 to 100.

R¹¹ is a group selected from OC₂F₄, OC₃F₆ and OC₄F₈, or is a combination of two or three groups independently selected from these groups. The combination of two or three groups independently selected from OC₂F₄, OC₃F₆, and OC₄F₈ is not limited, and examples include -OC₂F₄OC₃F₆-, -OC₂F₄OC₄F₈-, -OC₃F₆OC₂F₄-, -OC₃F₆OC₃F₆-, -OC₃F₆OC₄F₈-, -OC₄F₈OC₄F₈-, - OC₄FeOC₃F₆-, -OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. f is an integer of 2 to 100, and preferably an integer of 2 to 50. In the formula, OC₂F₄, OC₃F₆, and OC₄F₈ may be linear or branched, and are preferably linear. In this embodiment, formula -(OC₂F₄-R¹¹)_{f}- is preferably formula -(OC₂F_{q}-OC₃F₆)_{f}- or formula -(OC₃F₄-OC₄F₃)_{f}-.

In the isocyanuric compound, the number average molecular weight of the polyether chain portion is not limited, and is, for example, 500 to 30,000, preferably 1,500 to 30,000, and more preferably 2,000 to 10,000. The number average molecular weight is a value obtained by ¹⁹F-NMR measurement.

In another embodiment, the number average molecular weight of the polyether chain portion may be 500 to 30,000, preferably 1,000 to 20,000, more preferably 2,000 to 15,000, and further preferably 2,000 to 10,000, for example, 3,000 to 6,000.

In another embodiment, the number average molecular weight of the polyether chain portion may be 4,000 to 30,000, preferably 5,000 to 10,000, and more preferably 6,000 to 10,000.

R¹ is preferably a monovalent organic group represented by

formula: R³-(OR²)ₐ-L-

wherein (OR²)ₐ is the above polyether chain,
R³ is an alkyl group or a fluorinated alkyl group, and
L is a single bond or a divalent linking group.

R^{1'} is preferably a monovalent organic group represented by

formula: -L'-(OR²)ₐ-L-

wherein (OR²)ₐ is the above polyether chain,
L is independently a single bond or a divalent linking group,
L' is independently a single bond or a divalent linking group,
L is bonded to the isocyanuric ring on the right side of formula (α2), and L' is bonded to the isocyanuric ring on the left side.

The number of carbon atoms of R³ is preferably 1 to 16, and preferably 1 to 8.

R³ may be a linear or branched chain, and is preferably a linear or branched alkyl group or fluorinated alkyl group having 1 to 16 carbon atoms, more preferably a linear or branched alkyl group or fluorinated alkyl group having 1 to 8 carbon atoms, further preferably a linear or branched alkyl group or fluorinated alkyl group having 1 to 6 carbon atoms, even more preferably a linear or branched alkyl group or fluorinated alkyl group having 1 to 3 carbon atoms, and particularly preferably a linear alkyl group or fluorinated alkyl group having 1 to 3 carbon atoms.

R³ is preferably a fluorinated alkyl group having 1 to 16 carbon atoms, more preferably a CF₂H-C₁₋₁₅ fluoroalkylene group or a perfluoroalkyl group having 1 to 16 carbon atoms, and further preferably a perfluoroalkyl group having 1 to 16 carbon atoms.

The perfluoroalkyl group having 1 to 16 carbon atoms may be linear or branched, and is preferably a linear or branched perfluoroalkyl group having 1 to 6 carbon atoms and particularly 1 to 3 carbon atoms, more preferably a linear perfluoroalkyl group having 1 to 3 carbon atoms, and specifically -CF₃, -CF₂CF₃, or -CF₂CF₂CF₃.

L is a single bond or a divalent linking group directly bonded to the isocyanuric ring of formula (α1). L is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

L is further preferably a group represented by

formula: -(CX¹²¹X¹²²)ₒ-(L¹)ₚ-(CX¹²³X¹²⁴)_{q}-

wherein, X¹²¹ to X¹²⁴ are independently H, F, OH, or - OSi(OR¹²⁵ )₃ wherein three R¹²⁵ are independently an alkyl group having 1 to 4 carbon atoms,
L¹ is -C(=O)NH-, -NHC(=O)-, -O-, -C(=O)O-, -OC(=O)-, - OC(=O) O-, or -NHC(=O)NH- (the left side of each bond is bonded to CX¹²¹X¹²²),
o is an integer of 0 to 10,
p is 0 or 1, and
q is an integer of 1 to 10.

L' is further preferably a group represented by

-(CX¹²⁶X¹²⁷)ᵣ-(CX¹²¹X¹²²)ₒ-(L¹)ₚ-(CX¹²³X¹²⁴)_{q}-

wherein, X¹²¹ to X¹²⁴, L¹, o, p, and q have the same meanings as those defined for L,
X¹²⁶ and X¹²⁷ are independently H, F, or Cl, and preferably F,
r is an integer of 1 to 6, and
- (CX¹²⁶X¹²⁷)ᵣ- is bonded to (OR²)ₐ, and (CX¹²³X¹²⁴)_{q} is bonded to the isocyanuric ring.

L¹ is preferably -O- or -C(=O)O-.

L is particularly preferably a group represented by

formula: -(CF₂)ₘ₁₁-(CH₂)ₘ₁₂-O-(CH₂)ₘ₁₃-

wherein m11 is an integer of 1 to 3, m12 is an integer of 1 to 3, and m13 is an integer of 1 to 3,
a group represented by

   formula: -(CF₂)ₘ₁₄-(CH₂)ₘ₁₅-O-CH₂CH(OH)-(CH₂)ₘ₁₆-
wherein m14 is an integer of 1 to 3, m15 is an integer of 1 to 3, and m16 is an integer of 1 to 3,
a group represented by

   formula: -(CF₂)ₘ₁₇-(CH₂)ₘ₁₈-
wherein m17 is an integer of 1 to 3, and m18 is an integer of 1 to 3, or
a group represented by

   formula: -(CF₂)ₘ₁₉-(CH₂)ₘ₂₀-O-CH₂CH(OSi(OCH₃)₃)-(CH₂)ₘ₂₁-
wherein m19 is an integer of 1 to 3, m20 is an integer of 1 to 3, and m21 is an integer of 1 to 3.

L is not limited, and specific examples include -C₂H₄-, -C₃H₆-, -C₄H₈-O-CH₃-, -CO-O-CH₂-CH(OH)-CH₂-, -(CF₂)ₙ- (n is an integer of 0 to 4), -CH₂-, -C₄H₈-, -(CF₂)ₙ-(CH₂)ₘ- (n and m are independently an integer of 0 to 4), - CF₂CF₂CH₂OCH₂CH(OH)CH₂-, and -CF₂CF₂CH₂OCH₂CH(OSi(OCH₃)₃)CH₂-.

X¹ is a monovalent silane-containing reactive crosslinking group.

The silane-containing reactive crosslinking group contributes to adhesion to the substrate. The crosslinkable group may chemically react with the material of the substrate.

In one embodiment, the silane-containing reactive crosslinking group is preferably a group represented by

formula: -L²-(Si(R^{a})ₛ(R^{b})ₜ(R^{c})ᵤ(R^{d})ᵥ}ₙ

wherein, L² is a single bond or a divalent linking group,
   R^{a}, R^{b}, and R^{c} are the same or different, and are hydrogen, halogen, an alkoxy group having 1 to 10 carbon atoms, an amino group having 1 to 10 carbon atoms, an acetoxy group having 1 to 10 carbon atoms, an allyl group having 3 to 10 carbon atoms, or a glycidyl group having 3 to 10 carbon atoms,
   R^{d} is the same or different, and is -O-, -NH-, -C=C-, or a silane bond,
   s, t, and u are the same or different and are 0 or 1, v is an integer of 0 to 3, and n is an integer of 1 to 20, when n is 1, s+t+u is 3, and v is 0, when n is 2 to 20, s+t+u is the same or different and is 0 to 2, v is the same or different and is 0 to 2, and when v is an integer of 1 or more, at least two Si atoms are bonded in a linear, ladder, cyclic, or polycyclic form via R^{d}.
R^{a}, R^{b}, and R^{c} are monovalent groups bonded to Si. R^{d} is a divalent group bonded to two Si atoms.

R^{a}, R^{b}, and R^{c} are the same or different, at least one of which is hydrogen, halogen, an alkoxy group having 1 to 10 carbon atoms, or an amino group having 1 to 10 carbon atoms, and others are preferably an acetoxy group having 1 to 10 carbon atoms, an allyl group having 3 to 10 carbon atoms, or a glycidyl group having 3 to 10 carbon atoms, and more preferably an alkoxy group having 1 to 4 carbon atoms. When n is 2 to 20, s+t+u is the same or different and is 0 to 2, and v is preferably 0 to 2.

In R^{a}, R^{b}, and R^{c}, halogen is preferably Cl, Br, or I, and more preferably Cl.

In R^{a}, R^{b} and R^{c}, the number of carbon atoms of the alkoxy group is preferably 1 to 5. The alkoxy group may be linear, cyclic, or branched. A hydrogen atom is optionally substituted with a fluorine atom or the like. The alkoxy group is preferably a methoxy group, an ethoxy group, a propyloxy group, or a butoxy group, and more preferably a methoxy group or an ethoxy group.

R^{d} is the same or different, and is -O-, -NH-, -C=C-, or a silane bond. R^{d} is preferably -O-, -NH-, or -C=C-. R^{d} is a divalent group bonded to two Si atoms, and due to R^{d}, two or more silicon atoms can be bonded in a linear, ladder, cyclic, or polycyclic form via R^{d}. When n is an integer of 2 or more, silicon atoms may be bonded to each other.

In one embodiment, X¹ is a silane-containing reactive crosslinking group represented by formula:

-L²-{Si(R^{a})ₛ(R^{b})ₜ(R^{c})ᵤ(R^{d'})ᵥ}ₙ

wherein, L² is a single bond or a divalent linking group,
   R^{a}, R^{b}, and R^{c} are the same or different, and are hydrogen, halogen, an alkoxy group having 1 to 10 carbon atoms, an amino group having 1 to 10 carbon atoms, an acetoxy group having 1 to 10 carbon atoms, an allyl group having 3 to 10 carbon atoms, or a glycidyl group having 3 to 10 carbon atoms,
   R^{d'} is the same or different, and is a group represented by -Z-SiR^{d1}_{p'}R^{d2}_{q'}R^{d3}_{r'}
wherein Z is the same or different, and is a single bond or a divalent linking group,
   R^{d1} is the same or different, and is R^{d"},
   R^{d"} has the same meaning as R^{d'},
   in R^{d'}, the number of Si atoms linearly linked via a group Z is at most 5,
   R^{d2} is the same or different, and is a hydroxyl group or a hydrolyzable group,
   R^{d3} is the same or different, and is a hydrogen atom or a lower alkyl group,
   p' is the same or different, and is an integer of 0 to 3,
   q' is the same or different, and is an integer of 0 to 3, and
   r' is the same or different, and is an integer of 0 to 3,
   provided that the sum of p', q', and r' is 3,
   s, t, and u are the same or different, and are 0 or 1,
   v is an integer of 0 to 3, and
   n is an integer of 1 to 20.

In the formula, Z is the same or different, and is a single bond or a divalent linking group.

Specific examples of Z include -C₂H₄-, -C₃H₆-, -CO-O-CH₂-CH(OH)-CH₂-, -CH₂-, and -C₄H₈-.

In the formula, R^{d1} is the same or different and represents R^{d"}. R^{d"} has the same meaning as R^{d'}.

In R^{d'}, the number of Si atoms linearly linked via a group Z is at most 5. That is to say, in R^{d'}, when at least one R^{d1} is present, the number of Si atoms linearly linked via a group Z in R^{d'} is two or more, and the number of Si atoms linearly linked via a group Z is at most 5. Note that "the number of Si atoms linearly linked via a group Z in R^{d'} is equal to the number of repeats of -Z-Si- linearly linked in R^{d'}.

One example where Si atoms are linked via a group Z in R^{d'} is shown below:

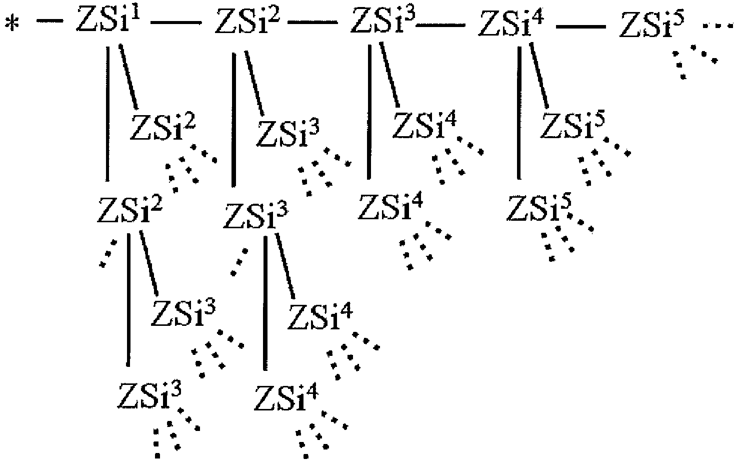

In the above formula, "*" means a site to be bonded to the Si atom of the main chain, and "..." means that a predetermined group except ZSi is bonded, or that is to say, when three bonds of a Si atom are all expressed by "...", the repeat of ZSi ends there. The superscripted number on Si means the number of Si atoms that appear and that are linearly linked via a group Z when counted from "*". That is to say, a chain where the repetition of ZSi terminates at Si² is a chain where the "number of Si atoms linearly linked via a group Z in R^{d'} is 2, and similarly, chains where the repetition of ZSi terminates at Si³, Si⁴, and Si⁵ mean chains where the "number of Si atoms linearly linked via a group Z in R^{d'} is 3, 4, and 5, respectively. As is clear from the formula, a plurality of ZSi chains are present in R^{d'}, and all these chains do not necessarily have the same length, and may each have any length.

In a preferable embodiment, as shown below, "the number of Si atoms linearly linked via a group Z in R^{d'"} is one (left formula) or two (right formula) in all chains.

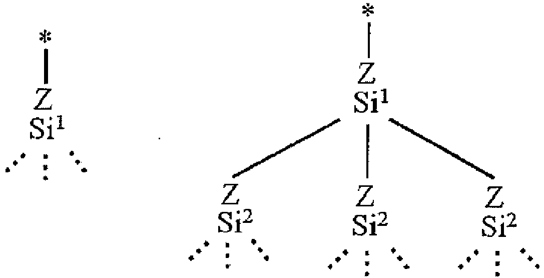

In one embodiment, the number of Si atoms linearly linked via a group Z in R^{d'} is one or two, and preferably one.

In the formula, R^{d2} is the same or different, and represents a hydroxyl group or a hydrolyzable group. The hydroxyl group is not limited, and may be generated by hydrolysis of a hydrolyzable group.

Preferably, R^{d2} is -OR wherein R represents a substituted or unsubstituted C₁₋₃ alkyl group, and more preferably a methyl group.

In the formula, R^{d3} is the same or different, and is a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, p' is the same or different, and is an integer of 0 to 3; q' is the same or different, and is an integer of 0 to 3; and r' is the same or different, and is an integer of 0 to 3. Note that the sum of p', q', and r' is 3.

In a preferable embodiment, q' in R^{d'} (R^{d} when no R^{d'} is present) at an end of R^{d} is preferably 2 or more, for example, 2 or 3, and more preferably 3.

In a preferable embodiment, R^{d} may have at least one - Si(-Z-SiR^{d2}_{q'}R^{d3}_{r'})₂ or -Si(-Z-SiR^{d2}_{q'}R^{d3}_{r'})₃ at an end, and preferably -Si(-Z-SiR^{d2}_{q'}R^{d3}r_{'})₃. In the formula, the (-Z-SiR^{d2}_{q'}R^{d3}_{r'}) unit is preferably (-Z-SiR^{d2}₃). In a more preferable embodiment, all ends of R^{d} are preferably -Si(-Z-SiR^{d2}_{q'}R^{d3}_{r'})₃, and more preferably -Si(-Z-SiR^{d2}₃)₃. The larger the number of R^{d2} bonded to each Si at an end is, the greater the adhesion to the substrate is, and thus excellent durability can be obtained.

In a preferable embodiment, in the formula, the number of Si atoms having a hydroxyl group or a hydrolyzable group in formula (α1) may be preferably 1 to 6, more preferably 2 to 4, and further preferably 3, and, in formula (α2), may be preferably 2 to 12, more preferably 4 to 8, and further preferably 6.

In a preferable embodiment, v is 3, and R^{d} is each independently -Z-SiR^{d2}_{q'}R^{d3}_{r'}.

L² is a single bond or a divalent linking group directly bonded to the ring of formula (α1). L² is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L² include -C₂H₄-, -C₃H₆-, -C₄H₈-O-CH₂-, -CO-O-CH₂-CH(OH)-CH₂-, -CH₂-, and -C₄H₈-.

Examples of the silane-containing reactive crosslinking group include -L²-SiR⁵₃, -L²-Si(OR⁶)₃, -L²-Si(NR⁶₂)₃, and -L²-Si(OCOR⁶)₃ (in each formula, L² is as described above, R⁵ is a halogen atom, and R⁶ is independently an alkyl group having 1 to 4 carbon atoms).

In one embodiment, the silane-containing reactive crosslinking group is preferably a group represented by

formula: -L⁶- {C(R^{a6})ₛ₆(R^{b6})ₜ₆(R^{c6})ᵤ₆(R^{d6})ᵥ₆}ₙ₆

wherein, L⁶ is a single bond or a divalent linking group,
R^{a6}, R^{b6}, and R^{c6} are the same or different, and are hydrogen, halogen, an alkoxy group having 1 to 10 carbon atoms, an amino group having 1 to 10 carbon atoms, an acetoxy group having 1 to 10 carbon atoms, an allyl group having 3 to 10 carbon atoms, a glycidyl group having 3 to 10 carbon atoms, OCOR⁶⁷ (wherein R⁶⁷ is an alkyl group having 1 to 6 carbon atoms), OH, or -Y⁶-SiR⁶⁵ⱼ₆R⁶⁶₃₋ⱼ₆,
R^{d6} is the same or different, and is -O-, -NH-, -C≡C-, or -Z⁶-CR⁶¹ₚ₆R⁶²_{q6}R⁶³ᵣ₆,
Z⁶ is the same or different, and is an oxygen atom or a divalent organic group,
wherein R⁶¹ is the same or different, and represents R^{d6'},
R^{d6'} has the same meaning as R^{d6},
in R^{d6}, the number of C atoms linearly linked via a group Z⁶ is at most 5,
R⁶² is the same or different, and is -Y⁶-SiR⁶⁵ⱼ₆R⁶⁶₃₋ⱼ₆,
Y⁶ is the same or different, and is a divalent organic group,
R⁶⁵ is the same or different, and is a hydroxyl group or a hydrolyzable group,
R⁶⁶ is the same or different, and is a hydrogen atom or a lower alkyl group,
j6 is independently an integer of 1 to 3 in each (-Y⁶-SiR⁶⁵ⱼ₆R⁶⁶₃₋ⱼ₆) unit,
R⁶³ is the same or different, and is a hydrogen atom or a lower alkyl group,
p6 is the same or different, and is an integer of 0 to 3,
q6 is the same or different, and is an integer of 0 to 3,
r6 is the same or different, and is an integer of 0 to 3,
s6, t6, and u6 are the same or different, and are 0 or 1, v6 is an integer of 0 to 3, and n6 is an integer of 1 to 20,
provided that, in the formulae, at least two (-Y⁶-SiR⁶⁵ⱼ₆R⁶⁶₃₋ⱼ₆) are present.

L⁶ is a single bond or a divalent linking group directly bonded to the ring of formula (α1) or formula (α2). L⁶ is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L⁶ include -C₂H₄-, -C₃H₆-, -C₄H₈-O-CH₂-, -CO-O-CH₂-CH(OH)-CH₂-, -CH₂-, and -C₄H₈-.

In R^{a}, R^{b}, R^{c}, R^{a6}, R^{b6}, and R^{c6}, halogen is preferably Cl, Br, or I, and more preferably Cl.

In R^{a}, R^{b}, R^{c}, R^{a6}, R^{b6}, and R^{c6}, the number of carbon atoms of the alkoxy group is preferably 1 to 5. The alkoxy group may be linear, cyclic, or branched. A hydrogen atom is optionally substituted with a fluorine atom or the like. The alkoxy group is preferably a methoxy group, an ethoxy group, a propyloxy group, or a butoxy group, and more preferably a methoxy group or an ethoxy group.

Z⁶ is preferably a C₁₋₆ alkylene group, -(CH₂)_{g}-O-(CH₂)ₕ-(wherein g is an integer of 0 to 6, for example, an integer of 1 to 6, and h is an integer of 0 to 6, for example, an integer of 1 to 6) or -phenylene-(CH₂)ᵢ- (wherein i is an integer of 0 to 6), and more preferably a C₁₋₃ alkylene group. These groups are optionally substituted with one or more substituents selected from, for example, a fluorine atom, a C₁₋₆ alkyl group, a C₂₋₆ alkenyl group, and a C₂₋₆ alkynyl group.

In the formula, R⁶¹ each independently at each occurrence represents R^{d6'}. R^{d6'} has the same meaning as R^{d6}.

In R^{d6}, the number of C atoms linearly linked via a group Z⁶ is at most 5. That is to say, in R^{d6}, when at least one R⁶¹ is present, the number of Si atoms linearly linked via a group Z⁶ in R^{d6} is two or more, and the number of C atoms linearly linked via a group Z⁶ is at most 5. The "number of C atoms linearly linked via a group Z⁶ in R^{d6"} is equal to the number of repeats of -Z⁶-C- linearly linked in R^{d6}.

In a preferable embodiment, as shown below, "the number of C atoms linearly linked via a group Z⁶ in R^{d6"} is one (left formula) or two (right formula) in all chains.

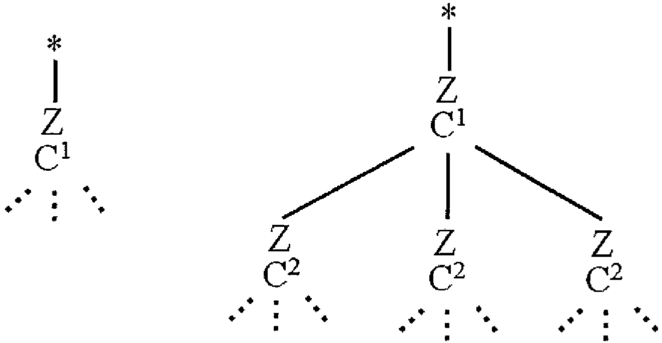

In one embodiment, the number of C atoms linearly linked via a group Z⁶ in R^{d6} is 1 or 2, and preferably 1.

In the formula, R⁶² represents -Y⁶-SiR⁶⁵ⱼ₆R⁶⁶₃₋ⱼ₆.

Y⁶ each independently at each occurrence represents a divalent organic group.

In a preferable embodiment, Y⁶ is a C₁₋₆ alkylene group, -(CH₂)_{g'}-O-(CH₂)_{h'}- (wherein g' is an integer of 0 to 6, for example, an integer of 1 to 6, and h' is an integer of 0 to 6, for example, an integer of 1 to 6), or -phenylene-(CH₂)_{i'}-(wherein i' is an integer of 0 to 6). These groups are optionally substituted with one or more substituents selected from, for example, a fluorine atom, a C₁₋₆ alkyl group, a C₂₋₆ alkenyl group, and a C₂₋₆ alkynyl group.

In one embodiment, Y⁶ may be a C₁₋₆ alkylene group or - phenylene-(CH₂)_{i'}-. When Y is the above group, light resistance, particularly ultraviolet resistance, can be more increased.

R⁶⁵ each independently at each occurrence represents a hydroxyl group or a hydrolyzable group. Examples of the "hydrolyzable group" are the same as above.

Preferably, R⁶⁵ is -OR wherein R represents a substituted or unsubstituted C₁₋₃ alkyl group, more preferably an ethyl group or a methyl group, and particularly a methyl group.

R⁶⁶ each independently at each occurrence represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

j6 independently represents an integer of 1 to 3 in each (-Y-SiR⁶⁵ⱼ₆R⁶⁶₃₋ⱼ₆) unit, preferably an integer of 2 or 3, and more preferably 3.

R⁶³ each independently at each occurrence represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, p6 is each independently at each occurrence an integer of 0 to 3, q6 is each independently at each occurrence an integer of 0 to 3, and r6 is each independently at each occurrence 0 to 3, provided that the sum of p6, q6, and r6 is 3.

In a preferable embodiment, in R^{d6'} at an end of R^{d6} (when R^{d6'} is not present, R^{d6} itself), q6 is preferably 2 or more, for example, 2 or 3, and more preferably 3.

In one embodiment, X¹ is a group represented by

-L²-{Si(R^{a})ₛ(R^{b})ₜ(R^{c})ᵤ(R^{d})ᵥ}ₙ,

or

-L⁶-{C(R^{a6})ₛ₆(R^{b6})ₜ₆(R^{c6})ᵤ₆(R^{d6})ᵥ₆}ₙ₆,

wherein each symbol has the same meaning as above.

In one embodiment, X² may independently be a monovalent organic group containing the above polyether chain. Preferable groups of the organic group are the same as those of R¹.

In another embodiment, X² may independently be the above silane-containing reactive crosslinking group.

In another embodiment, X² may independently be at least one group selected from the group consisting of a silicone residue, a silsesquioxane residue, and a silazane group.

Examples of the silicone residue include the following groups.

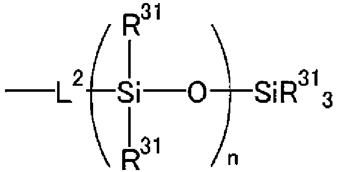

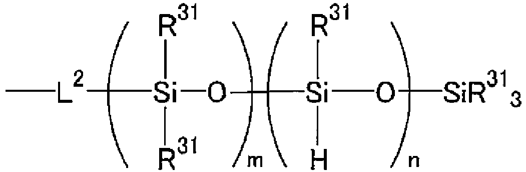

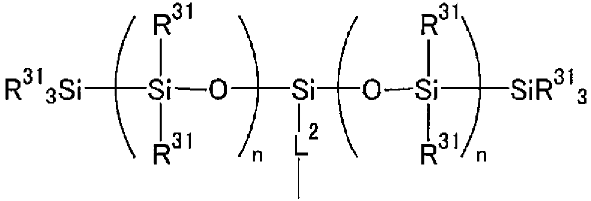

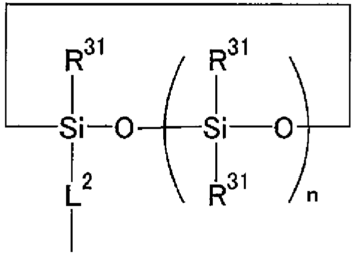

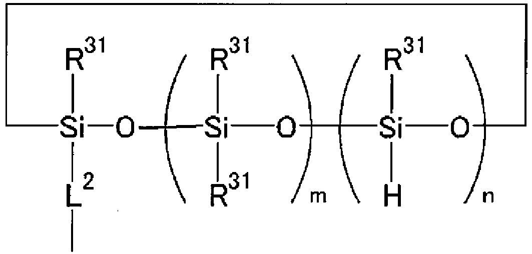

In each formula, L² is a single bond or a divalent linking group, n is an integer of 1 to 20, m is an integer of 0 to 10, R³¹ is each independently a monovalent group, and among R³¹ of each group, at least one is a reactive group.

A plurality of R³¹ contained in each group are independently a monovalent group, and may be the above reactive group or may be a group different from the above reactive group, provided that at least one of the plurality of R³¹ contained in each group is the above reactive group.

The reactive group is preferably H, a halogen atom, or at least one selected from the group consisting of -OR³² (R³² is an alkyl group having 1 to 4 carbon atoms or an aryl group having 6 to 20 carbon atoms), -L³-SiR⁵₃ (L³ is a single bond or an alkylene group having 1 to 10 carbon atoms, and R⁵ is a halogen atom), -L³-Si(OR⁶)₃ (L³ is as described above, and R⁶ is independently an alkyl group having 1 to 4 carbon atoms), -L³-Si(NR⁶₂)₃ (L³ and R⁶ are as described above), -L³-Si(OCOR⁶)₃(L³ and R⁶ are as described above), and a group containing any of these groups.

The group different from the above reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, - CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L² is a single bond or a divalent linking group directly bonded to the ring of formula (α1) or formula (α2). Suitable examples of L² are as described above.

Examples of the silicone residue also include the following groups.

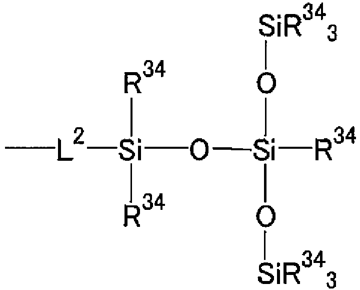

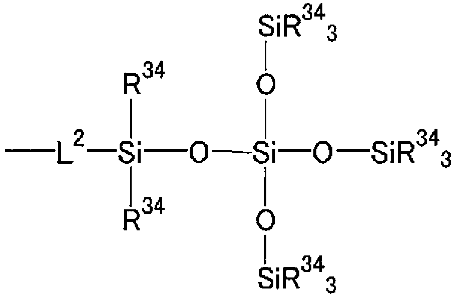

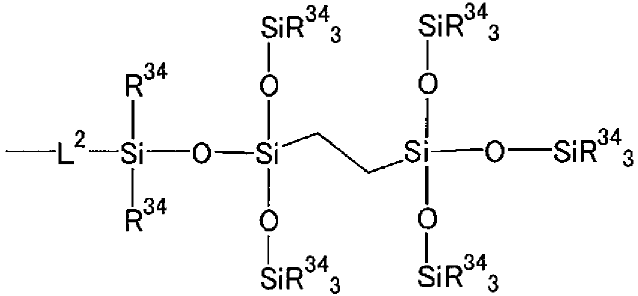

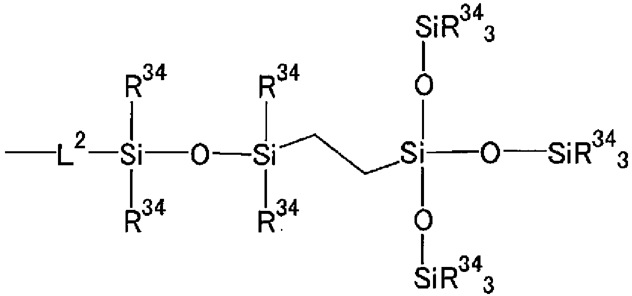

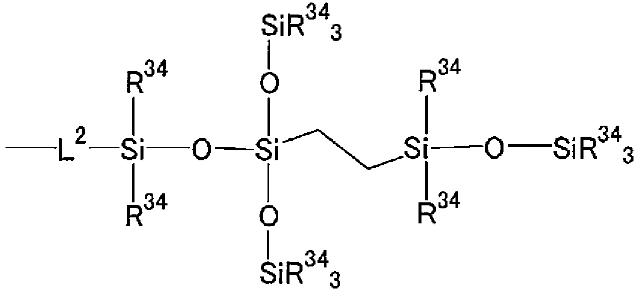

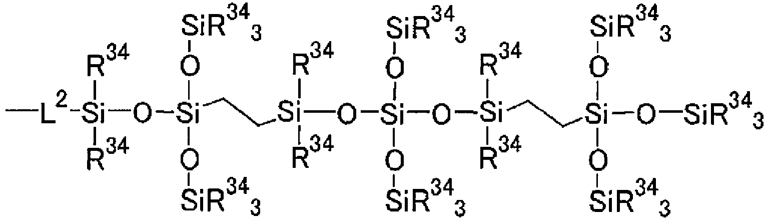

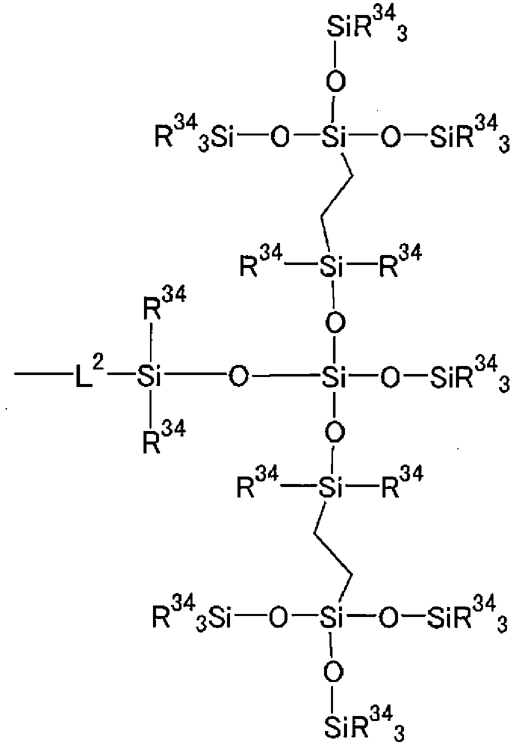

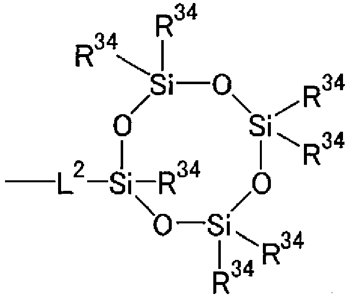

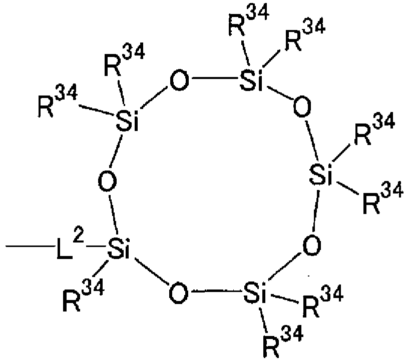

In each formula, L² is a single bond or a divalent linking group, R³⁴ is each independently a monovalent group, and among R³⁴ of each group, at least one is a reactive group.

A plurality of R³⁴ contained in each group are independently a monovalent group, and may be the above reactive group or may be a group different from the above reactive group, provided that at least one of the plurality of R³⁴ contained in each group is the above reactive group.

The reactive group is preferably at least one selected from the group consisting of -H, -OR³⁵ (R³⁵ is an alkyl group having 1 to 4 carbon atoms), a halogen atom, -OH, -O-CR³⁵=CH₂ (R³⁵ is as above), -OCOR³⁵ (R³⁵ is as above), -OCOOR^{j} (R^{j} is an alkyl group or a halogenated alkyl group), -NR³⁵₂ (R³⁵ is as above), and a group containing any of these groups.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, - CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L² is a single bond or a divalent linking group directly bonded to the ring of formula (α1) or formula (α2). Suitable examples of L² are as described above.

Examples of the silsesquioxane residue include the following groups.

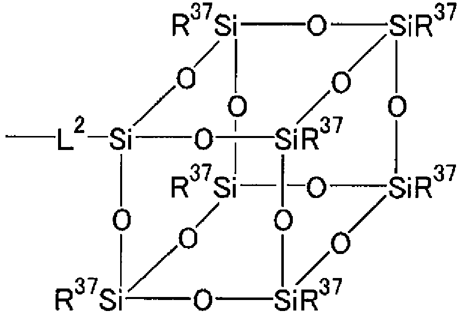

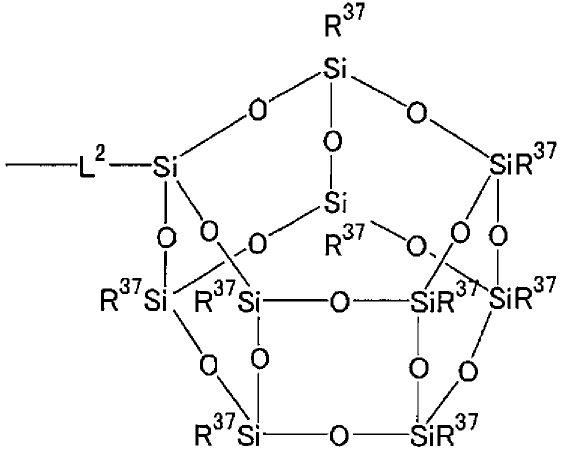

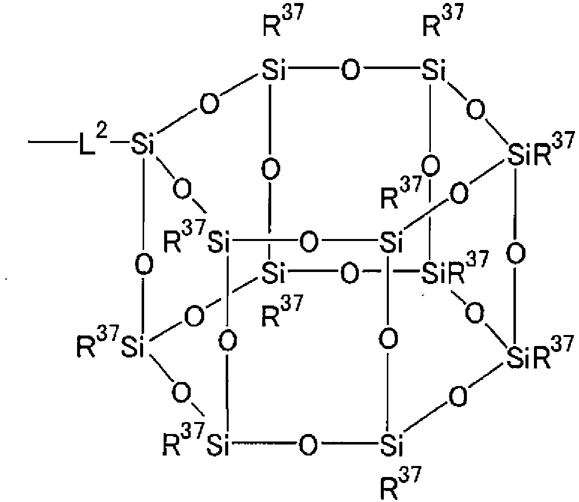

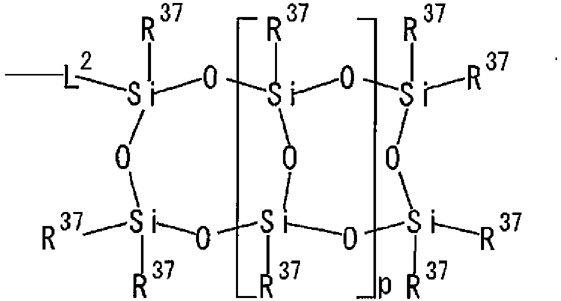

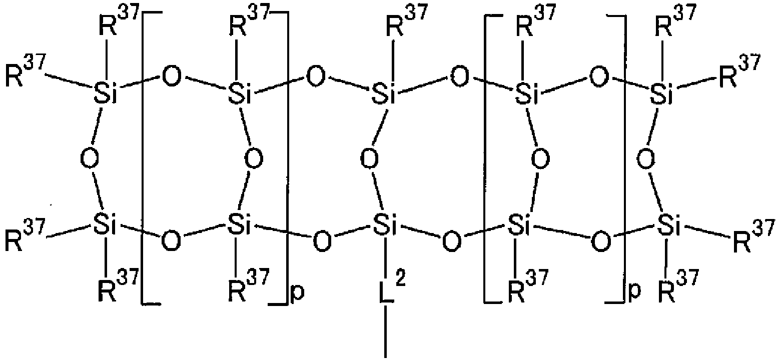

In each formula, L² is a single bond or a divalent linking group; R³⁷ is each independently a monovalent group; among R³⁷ of each group, at least one is a reactive group; and p is independently an integer of 0 to 5000.

A plurality of R³⁷ contained in each group are independently a monovalent group, and may be the above reactive group or may be a group different from the above reactive group, provided that at least one of the plurality of R³⁷ contained in each group is the above reactive group.

The reactive group is preferably at least one selected from the group consisting of -H, -OR³⁵ (R³⁵ is an alkyl group having 1 to 4 carbon atoms), a halogen atom, -OH, -O-CR³⁵=CH₂ (R³⁵ is as above), -OCOR³⁵ (R³⁵ is as above), -OCOOR^{j} (R^{j} is an alkyl group or a halogenated alkyl group), -NR³⁵₂ (R³⁵ is as above), and a group containing any of these groups.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, - CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L² is a single bond or a divalent linking group directly bonded to the ring of formula (α1) or formula (α2). Suitable examples of L² are as described above.

X² may be a group different from the monovalent organic group containing a polyether chain, the silane-containing reactive crosslinking group, the silicone residue, the silsesquioxane residue, and the silazane group described above.

That is to say, X² may be at least one selected from the group consisting of H, an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, -OCOOR^{j} (R^{j} is an alkyl group or a halogenated alkyl group), -CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, a halogenated aryl group, a silicone residue (excluding those having a reactive group), and a silsesquioxane residue (excluding those having a reactive group).

Examples of the silicone residue (excluding those having a reactive group) include the following groups. The reactive group is what is exemplified as a reactive group that can constitute R³⁷.

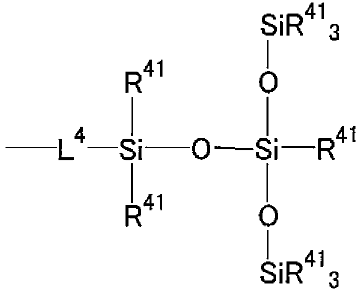

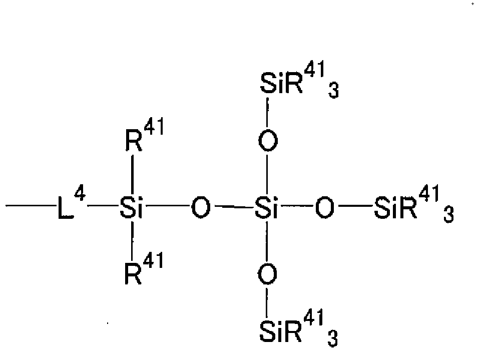

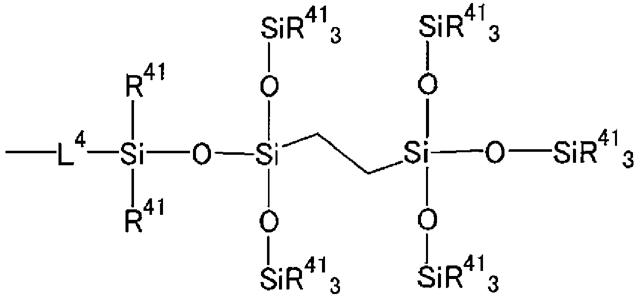

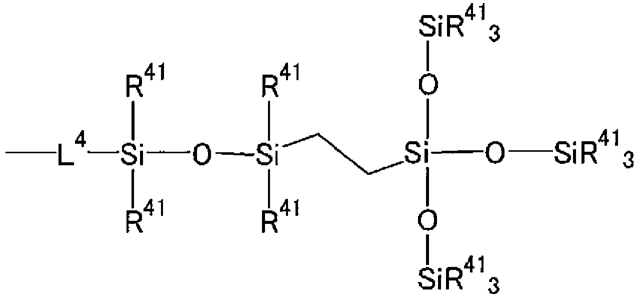

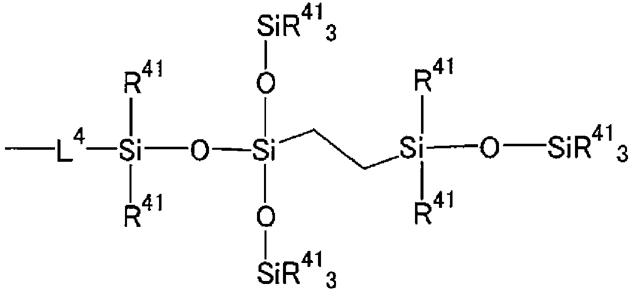

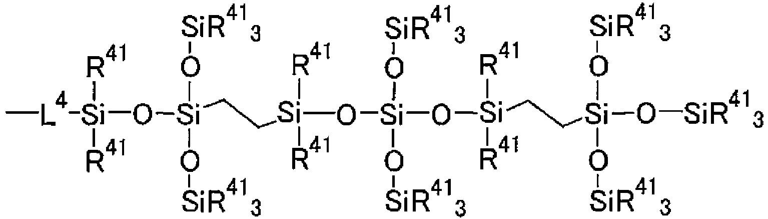

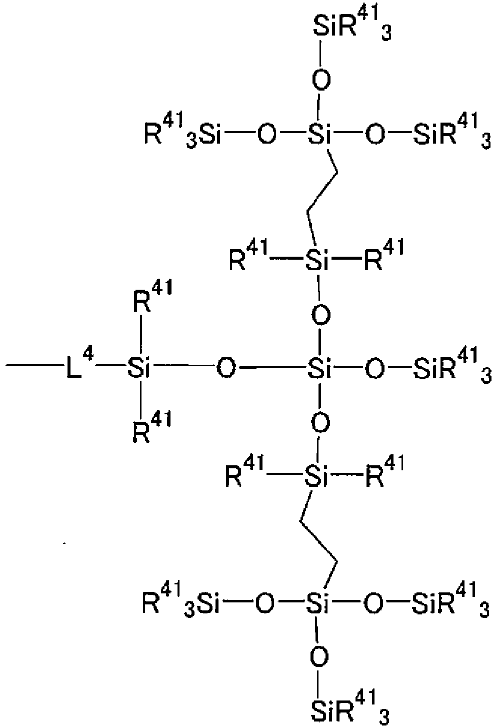

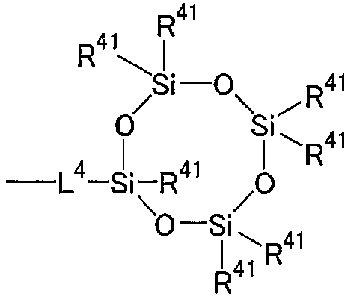

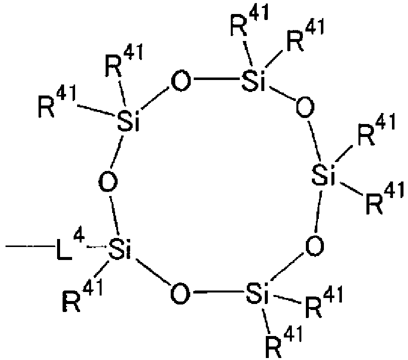

In each formula, L⁴ is a single bond or a divalent linking group, and R⁴¹ is each independently a group different from a monovalent reactive group.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, - CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L⁴ is a single bond or a divalent linking group directly bonded to the ring of formula (α1) or formula (α2). L⁴ is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L⁴ include -C₂H₄-, -C₃H₆-, -C₄H₈-O-CH₂-, and -CO-O-CH₂-CH(OH)-CH₂-.

Examples of the silsesquioxane residue (excluding those having a reactive group) include the following groups. The reactive group is what is exemplified as a reactive group that can constitute R³⁷.

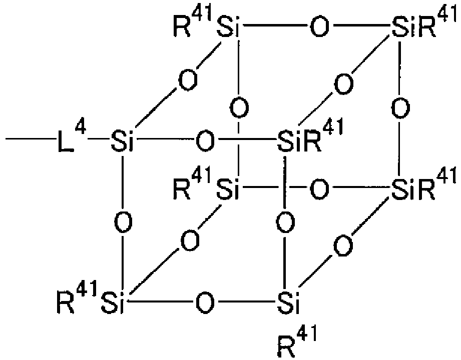

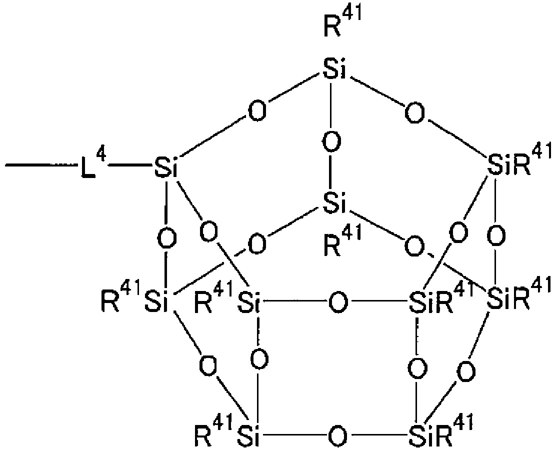

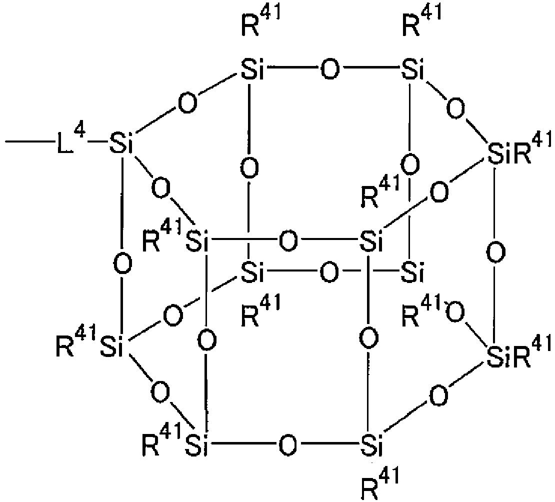

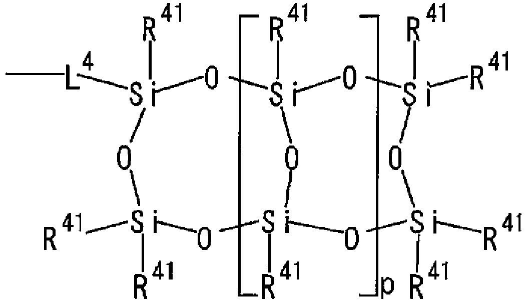

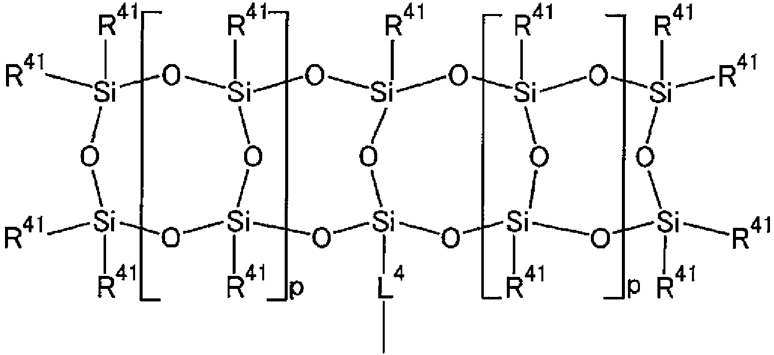

In each formula, L⁴ is a single bond or a divalent linking group, R⁴¹ is each independently a group different from the monovalent reactive group, and p is independently an integer of 0 to 5000.

The group different from the reactive group is preferably at least one selected from the group consisting of an alkyl group, a halogenated alkyl group, an alkyl ester group, a halogenated alkyl ester group, an alkyl ether group, a halogenated alkyl ether group, an alkyl amide group, a halogenated alkyl amide group, a uril group, a halogenated uril group, a urea group, a halogenated urea group, - CONR^{k}COR^{l} (R^{k} and R^{l} are independently H, an alkyl group, or a halogenated alkyl group), a group containing a sugar chain, an alkylene polyether group, an arene group, a halogenated arene group, a group containing a heterocycle, an aryl group, and a halogenated aryl group.

L⁴ is a single bond or a divalent linking group directly bonded to the ring of formula (α1) or formula (α2). Suitable examples of L⁴ are as described above.

Examples of the silazane group include the following groups.

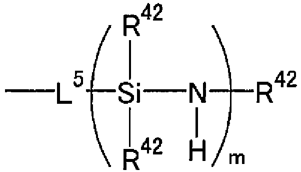

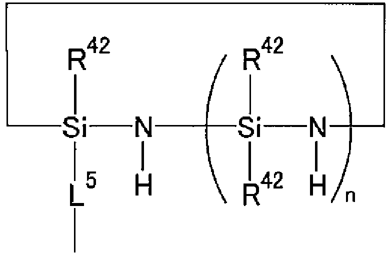

In each formula, L⁵ is a single bond or a divalent linking group, m is an integer of 2 to 100, n is an integer of 100 or less, R⁴² is each independently H, an alkyl group having 1 to 10 carbon atoms, an alkenyl group, a cycloalkyl group having 5 to 12 carbon atoms, an aryl group having 6 to 10 carbon atoms, an alkylsilyl group, an alkylcyano group, or an alkoxy group having 1 to 4 carbon atoms.

L⁵ is a single bond or a divalent linking group directly bonded to the ring of formula (α1) or formula (α2). L⁵ is preferably a single bond, an alkylene group, or a divalent group containing at least one bond selected from the group consisting of an ether bond and an ester bond, and more preferably a single bond, an alkylene group having 1 to 10 carbon atoms, or a divalent hydrocarbon group having 1 to 10 carbon atoms and containing at least one bond selected from the group consisting of an ether bond and an ester bond.

Specific examples of L⁵ include -C₂H₄-, -C₃H₆-, -C₄H₈-O-CH₂-, and -CO-O-CH₂-CH(OH)-CH₂-.

Specific examples of the silazane group include the following groups.

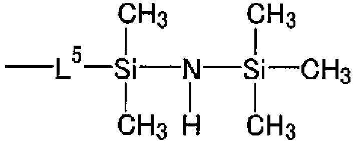

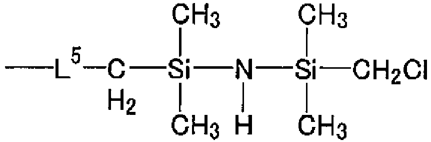

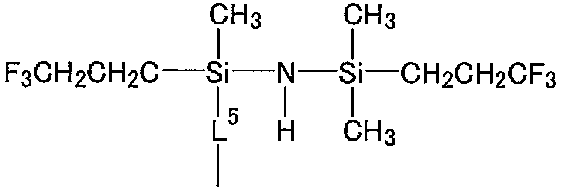

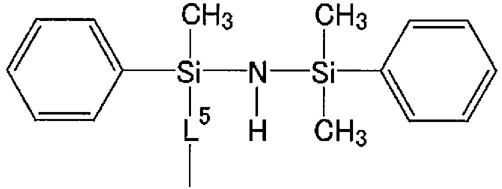

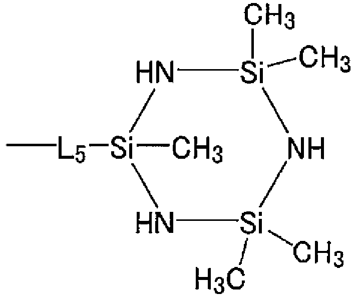

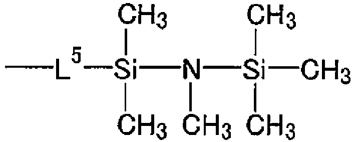

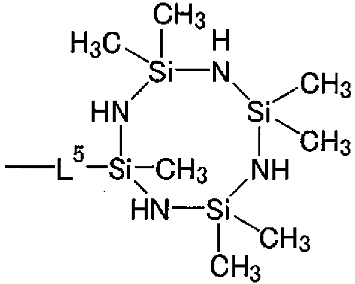

In the above compound, the average molecular weight of R¹ is not limited, and is 500 to 30,000, preferably 1,500 to 30,000, and more preferably 2,000 to 10,000.

The compound may have an average molecular weight of, although the average molecular weight is not limited, 5×10² to 1×10⁵. In particular, the compound preferably has an average molecular weight of 2,000 to 30,000, and more preferably 2,500 to 12,000, from the viewpoint of UV resistance and friction durability. In the present disclosure, the "average molecular weight" refers to a number average molecular weight, and the "average molecular weight" is a value obtained by ¹⁹F-NMR measurement.

In one embodiment, compound α is a compound represented by formula (α1).

In another embodiment, compound α may be a mixture of a compound represented by formula (α1) and a compound represented by formula (α2). In the mixture, based on the total of the compound represented by formula (α1) and the compound represented by formula (α2), the compound represented by formula (α1) may be preferably 1 mol% or more, more preferably 10 mol% or more, further preferably 50 mol% or more, even more preferably 80 mol% or more, for example, 90 mol% or more, 95 mol% or more, or 99 mol% or more, and the upper limit is not limited and may be less than 100 mol%, for example, 99 mol% or less, 95 mol% or less, 90 mol% or less, 85 mol% or less, or 80 mol% or less.

In the surface-treating agent of the present disclosure, compound α may be contained in an amount of 0.01% by mass to 99.9% by mass, preferably 0.1% by mass to 50% by mass, more preferably 0.1% by mass to 30% by mass, further preferably 0.1% by mass to 20% by mass, for example, 1% by mass to 30% by mass or 5% by mass to 20% by mass. In the surface-treating agent of the present disclosure, based on the components (including compound α) excluding the solvent, compound α may be 100 mol% (that is to say, only compound α is contained), or may be 1 mol% to 99.9 mol%, preferably 10 mol% to 99 mol%, more preferably 30 mol% to 99 mol%, further preferably 50 mol% to 98 mol%, for example, 60 mol% to 95 mol%, 70 mol% to 95 mol%, or 80 mol% to 95 mol%.

The above isocyanuric compound can be produced by, for example, the method described in International Publication No. WO 2018/056410.

In one embodiment, the surface-treating agent may further contain a perfluoropolyether group-containing silane compound (hereinafter also referred to as "compound β") different from compound α.

Compound β has a perfluoropolyether group and Si having a hydroxyl group or a hydrolyzable group, provided that, as described above, compound β excludes those corresponding to compound α.

In one embodiment, the perfluoropolyether group is a group represented by the following formula:

-(OC₆F12)ₐ₁-(OC₅F₁₀)_{b1}-(OC₄F₈)_{c1}-(OC₃F₆)_{d1}-(OC₂F₄)ₑ₁-(OCF₂)_{f1}-

wherein a1, b1, c1, d1, e1, and f1 are each independently an integer of 0 or more and 200 or less, and the occurrence order of each repeating unit enclosed in parentheses provided with a1, b1, c1, d1, e1, or f1 is arbitrary in the formula.

In a preferable embodiment, a1, b1, c1, d1, and e1 are each independently an integer of 0 or more and 100 or less, and f1 is an integer of 1 or more and 200 or less. Preferably, the sum of a1, b1, c1, d1, e1, and f1 is 5 or more, and more preferably 10 or more, for example, 10 or more and 100 or less.

The repeating unit in the perfluoropolyether group may be linear or branched, and is preferably linear. For example, -(OC₆F₁₂)- may be -(OCF₂CF₂CF₂CF₂CF₂CF₂)-, - (OCF(CF₃)CF₂CF₂CF₂CF₂)-, -(OCF₂CF(CF₃)CF₂CF₂CF₂)-, - (OCF₂CF₂CF(CF₃)CF₂CF₂)-, -(OCF₂CF₂CF₂CF(CF₃)CF₂)-, - (OCF₂CF₂CF₂CF₂CF(CF₃))-, or the like, and is preferably - (OCF₂CF₂CF₂CF₂CF₂CF₂) -. -(OC₅F₁₀)- may be -(OCF₂CF₂CF₂CF₂CF₂)-, -(OCF(CF₃)CF₂CF₂CF₂)-, -(OCF₂CF(CF₃)CF₂CF₂)-, - (OCF₂CF₂CF(CF₃)CF₂)-, -(OCF₂CF₂CF₂CF(CF₃)) -, or the like, and is preferably - (OCF₂CF₂CF₂CF_{2C}F₂) -- -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃)))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-, and is preferably - (OCF₂CF₂CF₂CF₂) -. - (OC₃F₆) - may be any of - (OCF₂CF₂CF₂) -, -(OCF(CF₃)CF₂)-, and -(OCF₂CF(CF₃))-, and is preferably -(OCF₂CF₂CF₂)-. -(OC₂F₄)- may be any of - (OCF₂CF₂) - and -(OCF(CF₃))-, and is preferably - (OCF₂CF₂) -.

In another embodiment, the perfluoropolyether group is each independently -(OC₄F₈)_{c2}-(OC₃F₆)_{d2}-(OC₂F₄)ₑ₂-(OCF₂)_{f2}-wherein c2 and d2 are each independently an integer of 0 or more and 30 or less; e2 and f2 are each independently an integer of 1 or more and 200 or less, preferably 5 or more and 200 or less, and more preferably 10 or more and 200 or less; and the occurrence order of each repeating unit enclosed in parentheses provided with c2, d2, e2, or f2 is arbitrary in the formula. Preferably, the perfluoropolyether group is each independently - (OCF₂CF₂CF₂CF₂)_{c2}-(OCF₂CF₂CF₂)_{d2}-(OCF₂CF₂)ₑ₂-(OCF₂)_{f2}-. In one embodiment, PFPE may each independently be -(OC₂F₄)ₑ₂-(OCF₂)_{f2}- (wherein e2 and f2 are each independently an integer of 1 or more and 200 or less, preferably 5 or more and 200 or less, and more preferably 10 or more and 200 or less; and the occurrence order of each repeating unit enclosed in parentheses provided with e2 or f2 is arbitrary in the formula).

In yet another embodiment, the perfluoropolyether group is each independently a group represented by -(R¹⁰⁶-R¹⁰⁷)_{q1}-. In the formula, R¹⁰⁶ is OCF₂ or OCF₂. In the formula, R¹⁰⁷ is a group selected from OC₂F₄, OC₃F₆, OC₄F₈, OC₅F₁₀, and OC₆F₁₂, or is a combination of two or three groups independently selected from these groups. Preferably, R¹⁰⁷ is a group selected from OC₂F₄, OC₃F₆, and OC₄F₈, or is a combination of two or three groups independently selected from these groups. The combination of two or three groups independently selected from OC₂F₄, OC₃F₆, and OC₄F₈ is not limited, and examples include -OC₂F₄OC₃F₆-, -OC₂F₄OC₄F₈-, -OC₃F₆OC₂F₄-, -OC₃F₆OC₃F₆-, - OC₃F₆OC₄F₈-, -OC₄F₈OC₄F₈-, -OC₄F₈OC₃F₆-, -OC₄F₈OC₂F₄-, - OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, - OC₃F₆OC₂F₄OC₃F₆-, -OC₃F₆OC₃F₆OC₂F₄-, and -OC₄F₈OC₂F₄OC₂F₄-. q1 is an integer of 2 to 100, and preferably an integer of 2 to 50. In the formulae, OC₂F₄, OC₃F₆, OC₄F₈, OC₅F₁₀, and OC₆F₁₂ may be linear or branched, and are preferably linear. In this embodiment, preferably the perfluoropolyether group is each independently -(OCF₂OC₃F₆)_{q1}- or -(OCF₂-OC₄F₈)_{q1}-.

In a preferable embodiment, the perfluoropolyether group of compound β has at least one, preferably 5 or more, and more preferably 10 or more OCF₂ units.

The "hydrolyzable group" in Si having a hydroxyl group or a hydrolyzable group means a group that can be eliminated from the main backbone of a compound by a hydrolysis reaction. Examples of the hydrolyzable group include -OR, -OCOR, -ON=CR₂, -NR₂, -NHR, and halogen (in these formulae, R represents a substituted or unsubstituted alkyl group having 1 to 4 carbon atoms), and the hydrolyzable group is preferably -OR (i.e., an alkoxy group). Examples of R include unsubstituted alkyl groups such as a methyl group, an ethyl group, a propyl group, an isopropyl group, a n-butyl group, and an isobutyl group; and substituted alkyl groups such as a chloromethyl group. Of them, an alkyl group, particularly an unsubstituted alkyl group, is preferable, and a methyl group or an ethyl group is more preferable. The hydroxyl group is not limited, and may be generated by hydrolysis of a hydrolyzable group.

In one embodiment, compound (β) may be a compound represented by the following formula (A1), (A2), (B1), (B2), (C1), (C2), (D1), (D2), or (E1).

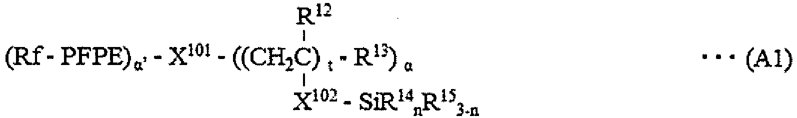

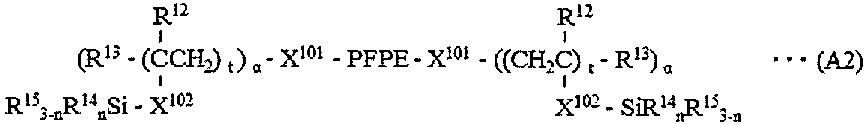

(Rf-PFPE)_{β'}-X¹⁰⁵-(SiR¹⁴ₙR¹⁵₃₋ₙ)_{β} ··· (B1)

(R¹⁵₃₋ₙR¹⁴ₙSi)_{β}-X¹⁰⁵-PFPE-X¹⁰⁵-(SiR¹⁴ₙR¹⁵₃₋ₙ)_{β} ··· (B2)

(Rf-PFPE)_{γ'}-X¹⁰⁷-(SiR^{a3}ₖR^{b3}ₗR^{c3}ₘ)_{γ} ··· (C1)

(R^{c3}ₘR^{b3}ₗR^{a3}ₖSi)_{γ}-X¹⁰⁷-PFPE-X¹⁰⁷-(SiR^{a3}ₖR^{b3}ₗR^{c3}ₘ)_{γ} ··· (C2)

(Rf-PFPE)_{δ'}-X¹⁰⁹-(CR^{d3}_{k'}R^{e3}_{l'}R^{f3}_{m'})_{δ} ··· (D1)

(R^{f3}_{m'}R^{e3}_{l'}R^{d3}_{k'}C)_{δ}-X¹⁰⁹-PFPE-X¹⁰⁹-(CR^{d3}_{k'}R^{e3}_{l'}R^{f3}_{m'})_{δ} ··· (D2)

(Rf- PFPE-G⁵)ₐ₅-Z⁵-((O-R¹⁶)_{c5}-SiR¹⁴ₙR¹⁵₃₋ₙ)_{b5} ··· (E1)

In the formulae, Rf each independently represents an alkyl group having 1 to 16 carbon atoms optionally substituted with one or more fluorine atoms.

In the alkyl group having 1 to 16 carbon atoms optionally substituted with one or more fluorine atoms, the "alkyl group having 1 to 16 carbon atoms" may be linear or branched, and is preferably a linear or branched alkyl group having 1 to 6 carbon atoms, particularly 1 to 3 carbon atoms, and more preferably a linear alkyl group having 1 to 3 carbon atoms.

Rf is preferably an alkyl group having 1 to 16 carbon atoms substituted with one or more fluorine atoms, more preferably a CF₂H-C₁₋₁₅ fluoroalkylene group or a perfluoroalkyl group having 1 to 16 carbon atoms, and further preferably a perfluoroalkyl group having 1 to 16 carbon atoms.

The perfluoroalkyl group having 1 to 16 carbon atoms may be linear or branched, and is preferably a linear or branched perfluoroalkyl group having 1 to 6 carbon atoms, particularly 1 to 3 carbon atoms, and more preferably a linear perfluoroalkyl group having 1 to 3 carbon atoms, specifically -CF₃, -CF₂CF₃, or -CF₂CF₂CF₃.

In the above formulae, PFPE represents a perfluoropolyether group. The perfluoropolyether group is as described above.

In the above formulae, R¹⁴ each independently at each occurrence represents a hydrogen atom or an alkyl group having 1 to 22 carbon atoms, and preferably an alkyl group having 1 to 4 carbon atoms.

In the above formulae, R¹⁵ each independently at each occurrence represents a hydroxyl group or a hydrolyzable group.

The "hydrolyzable group" as used herein refers to a group that can be eliminated from the main backbone of a compound by a hydrolysis reaction. Examples of the hydrolyzable group include -OR, -OCOR, -O-N=CR₂, -NR₂, -NHR, and halogen (in these formulae, R represents a substituted or unsubstituted alkyl group having 1 to 4 carbon atoms), and the hydrolyzable group is preferably -OR (i.e., an alkoxy group). Examples of R include unsubstituted alkyl groups such as a methyl group, an ethyl group, a propyl group, an isopropyl group, a n-butyl group, and an isobutyl group; and substituted alkyl groups such as a chloromethyl group. Of them, an alkyl group, particularly an unsubstituted alkyl group, is preferable, and a methyl group or an ethyl group is more preferable. The hydroxyl group is not limited, and may be generated by hydrolysis of a hydrolyzable group.

In the above formulae, R¹³ each independently at each occurrence represents a hydrogen atom or a halogen atom. The halogen atom is preferably an iodine atom, a chlorine atom, or a fluorine atom, and more preferably a fluorine atom.

In the above formulae, R¹² each independently at each occurrence represents a hydrogen atom or a lower alkyl group. The lower alkyl group is preferably an alkyl group having 1 to 20 carbon atoms, and more preferably an alkyl group having 1 to 6 carbon atoms, such as a methyl group, an ethyl group, and a propyl group.

In the above formulae, n is independently an integer of 0 to 3 in each (-SiR¹⁴ₙR¹⁵₃₋ₙ) unit, preferably an integer of 0 to 2, and more preferably 0. However, all the integers represented by n are not simultaneously 0 in the formulae. In other words, there is at least one R¹⁵ in the formulae.

In the above formulae, t is each independently an integer of 1 to 10. In a preferable embodiment, t is an integer of 1 to 6. In another preferable embodiment, t is an integer of 2 to 10, and preferably 2 to 6.

In the above formulae, X¹⁰² each independently at each occurrence represents a single bond or a divalent organic group. X¹⁰² is preferably an alkylene group having 1 to 20 carbon atoms, and more preferably -(CH₂)ᵤ- wherein u is an integer of 0 to 2.

In the above formulae, R^{a3} each independently at each occurrence represents -Z³-SiR⁷¹ₚR⁷²_{q}R⁷³ᵣ.

Z³ is preferably a divalent organic group. In a preferable embodiment, Z³ excludes a group that forms a siloxane bond with a Si atom (the Si atom to which R^{a3} is bonded) present at an end of the molecular backbone in formula (C1) or formula (C2).

Z³ is preferably a C₁₋₆ alkylene group, -(CH₂)_{g}-O-(CH₂)ₕ-wherein g is an integer of 1 to 6, and h is an integer of 1 to 6, or -phenylene-(CH₂)ᵢ- wherein i is an integer of 0 to 6), more preferably a C₁₋₃ alkylene group, and particularly preferably C₂₋₃ alkylene group, for example, -CH₂CH₂-. These groups are optionally substituted with at least one substituent selected from, for example, a fluorine atom, a C₁₋₆ alkyl group, a C₂₋₆ alkenyl group and a C₂₋₆ alkynyl group.

In the above formulae, R⁷¹ each independently at each occurrence represents R^{a'}. R^{a'} has the same meaning as R^{a3}.

In R^{a3}, the number of Si atoms linearly linked via a group Z³ is at most 5. That is to say, in R^{a3}, when at least one R⁷¹ is present, the number of Si atoms linearly linked via a group Z in R^{a3} is two or more, and the number of Si atoms linearly linked via a group Z³ is at most 5. "The number of Si atoms linearly linked via a group Z³ in R^{a3}" is equal to the number of repeats of -Z³-Si- linearly linked in R^{a3}.

In a preferable embodiment, "the number of Si atoms linearly linked via a group Z³ in R^{a3}" in all chains is one (left formula) or two (right formula). In other words, in the -Si-R^{a3} moiety containing Si that is bonded to X¹⁰⁷ in formulae (C1) and (C2), two Si atoms are linked in the left formula, and three Si atoms are linked in the right formula.

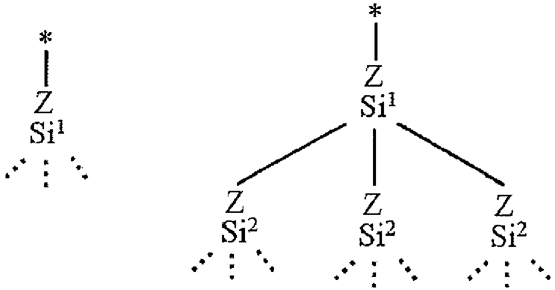

In a preferable embodiment, "the number of Si atoms linearly linked via a group Z³ in R^{a3}" is one or two, and preferably one in all chains.

In a preferable embodiment, k is 3, and "the number of Si atoms linearly linked via a group Z³ in R^{a3}" is one in all chains.

In the formulae, R⁷² each independently at each occurrence represents a hydroxyl group or a hydrolyzable group.

Preferably, R⁷² is -OR wherein R represents a substituted or unsubstituted C₁₋₃ alkyl group, and more preferably a methyl group.

In the formulae, R⁷³ each independently at each occurrence represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, p each independently at each occurrence represents an integer of 0 to 3, q each independently at each occurrence represents an integer of 0 to 3, r each independently at each occurrence represents 0 to 3, provided that the sum of p, q, and r is 3.

In a preferable embodiment, in R^{a3}' at an end of R^{a3} (when R^{a3}' is not present, R3^{a} itself), q is preferably 2 or more, for example, 2 or 3, and more preferably 3.

In a preferable embodiment, R^{a3} may have at least one - Si(-Z³-SiR⁷²_{q}R⁷³ᵣ)₂ or -Si(-Z³-SiR⁷²_{q}R⁷³ᵣ)₃, and preferably -Si(-Z³-SiR⁷²_{q}R⁷³ᵣ)₃ at an end. In the formula, the (-Z³-SiR⁷²_{q}R⁷³ᵣ) unit is preferably (-Z³-SiR⁷²₃). In a further preferable embodiment, all ends of R^{a} may be -Si(-Z³-SiR⁷²_{q}R⁷³ᵣ)₃ and preferably -Si(-Z³-SiR⁷²₃)₃.

In the above formulae (C1) and (C2), at least one R⁷² is present.

In the above formulae, R^{b3} each independently at each occurrence represents a hydroxyl group or a hydrolyzable group.

R^{b3} is preferably a hydroxyl group, -OR, -OCOR, -ON=C(R)₂, -N(R)₂, -NHR, or halogen (in these formulae, R represents a substituted or unsubstituted alkyl group having 1 to 4 carbon atoms), and preferably -OR. Examples of R include unsubstituted alkyl groups such as a methyl group, an ethyl group, a propyl group, an isopropyl group, a n-butyl group, and an isobutyl group; and substituted alkyl groups such as a chloromethyl group. Of them, an alkyl group, particularly an unsubstituted alkyl group, is preferable, and a methyl group or an ethyl group is more preferable. The hydroxyl group is not limited, and may be generated by hydrolysis of a hydrolyzable group. More preferably, R^{c} is -OR (wherein R represents a substituted or unsubstituted C₁₋₃ alkyl group, and more preferably a methyl group).

In the above formulae, R^{c3} each independently at each occurrence represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, k each independently at each occurrence represents an integer of 0 to 3, 1 each independently at each occurrence represents an integer of 0 to 3, m each independently at each occurrence represents 0 to 3, provided that the sum of k, 1, and m is 3.

In the above formulae, R^{d3} each independently at each occurrence represents -Z³'-CR⁸¹_{p'}R⁸²_{q'}R⁸³_{r'}.

In the formulae, Z³' each independently at each occurrence represents an oxygen atom or a divalent organic group.

Z³' is preferably a C₁₋₆ alkylene group, -(CH₂)_{g}-O-(CH₂)ₕ-(wherein g is an integer of 0 to 6, for example, an integer of 1 to 6, and h is an integer of 0 to 6, for example, an integer of 1 to 6) or -phenylene-(CH₂)ᵢ- (wherein i is an integer of 0 to 6), more preferably a C₁₋₃ alkylene group, and further preferably a C₂₋₃ alkylene group, for example, CH₂CH₂. These groups are optionally substituted with one or more substituents selected from, for example, a fluorine atom, a C₁₋₆ alkyl group, a C₂₋₆ alkenyl group, and a C₂₋₆ alkynyl group.

In the formulae, R⁸¹ each independently at each occurrence represents R^{d3}". R^{d3}" has the same meaning as R^{d3}.

In R^{d3}, the number of C atoms linearly linked via a group Z³' is at most 5. That is to say, in R^{d3}, when at least one R⁸¹ is present, the number of Si atoms linearly linked via a group Z³' in R^{d3} is two or more, and the number of C atoms linearly linked via a group Z³' is at most 5. The "number of C atoms linearly linked via a group Z³' in R^{d3}" is equal to the number of repeats of -Z³'-C- linearly linked in R^{d3}.

In a preferable embodiment, as shown below, "the number of C atoms linearly linked via a group Z³' in R^{d3}" in all chains is one (left formula) or two (right formula).

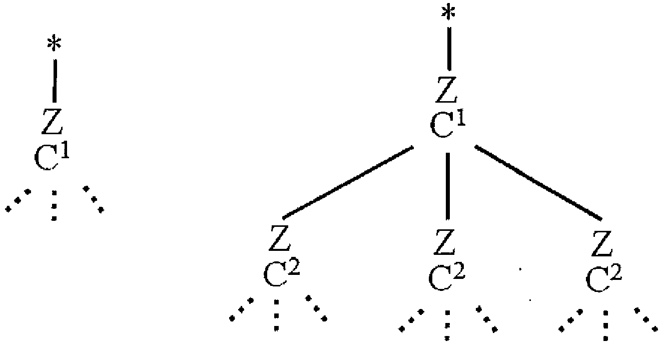

In one embodiment, the number of C atoms linearly linked via a group Z³' in R^{d3} is one or two, and preferably one.

In the formulae, R⁸² represents -Y³-SiR⁸⁵ⱼR⁸⁶₃₋ⱼ.

Y³ each independently at each occurrence represents a divalent organic group.

In a preferable embodiment, Y³ is a C₁₋₆ alkylene group, - (CH₂)_{g'}-O-(CH₂)_{h'}- (wherein g' is an integer of 0 to 6, for example, an integer of 1 to 6, and h' is an integer of 0 to 6, for example, an integer of 1 to 6), or -phenylene-(CH₂)_{i'}-(wherein i' is an integer of 0 to 6). These groups are optionally substituted with one or more substituents selected from, for example, a fluorine atom, a C₁₋₆ alkyl group, a C₂₋₆ alkenyl group, and a C₂₋₆ alkynyl group.

In one embodiment, Y³ may be a C₁₋₆ alkylene group or - phenylene-(CH₂)_{i'}-. When Y³ is the above group, light resistance, particularly ultraviolet resistance, can be more increased.

R⁸⁵ each independently at each occurrence represents a hydroxyl group or a hydrolyzable group. Examples of the "hydrolyzable group" are the same as above.

Preferably, R⁸⁵ is -OR wherein R represents a substituted or unsubstituted C₁₋₃ alkyl group, more preferably an ethyl group or a methyl group, and particularly a methyl group.

R⁸⁶ each independently at each occurrence represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

j independently represents an integer of 1 to 3 in each (-Y³-SiR⁸⁵ⱼR⁸⁶₃₋ⱼ) unit, preferably an integer of 2 or 3, and more preferably 3.

R⁸³ each independently at each occurrence represents a hydrogen atom, a hydroxyl group, or a lower alkyl group. R⁸³ each independently at each occurrence preferably represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formulae, p' is each independently at each occurrence an integer 0 to 3, q' is each independently at each occurrence an integer of 0 to 3, and r' is each independently at each occurrence an integer of 0 to 3, provided that the sum of p', q', and r' is 3.

In a preferable embodiment, in R^{d3}" at an end of R^{d3} (when R^{d3}" is not present, R^{d3} itself), q' is preferably 2 or more, for example, 2 or 3, and more preferably 3.

In the above formulae, R^{e3} each independently at each occurrence represents -Y³-SiR⁸⁵ⱼR⁸⁶₃₋ⱼ, wherein Y³, R⁸⁵, R⁸⁶, and j have the same meanings as in R⁸² above.

In the above formulae, R^{f3} each independently at each occurrence represents a hydrogen atom, a hydroxyl group, or a lower alkyl group. R^{f3} each independently at each occurrence preferably represents a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the above formulae, k' is each independently at each occurrence an integer 0 to 3, l' is each independently at each occurrence an integer of 0 to 3, and m' is each independently at each occurrence an integer of 0 to 3, provided that the sum of k', l', and m' is 3.

In one embodiment, at least one k' is 2 or 3, and preferably 3.

In one embodiment, k' is 2 or 3, and preferably 3.

In one embodiment, l' is 2 or 3, and preferably 3.

In the above formulae (D1) and (D2), at least one q' is 2 or 3, or at least one l' is 2 or 3. That is to say, in the formulae, at least two -Y³-SiR⁸⁵ⱼR⁸⁶₃₋ⱼ groups are present.

In the above formulae, G⁵ is -R¹⁷-O-, -R¹⁷-CONH-, -CONH-, or a single bond. G⁵ is preferably -R¹⁷-CONH- or -CONH- from the viewpoint of excellent light resistance, and preferably -R¹⁷-O- from the viewpoint of excellent chemical resistance.

^{R17} is an alkylene group. R¹⁷ is preferably an alkylene group having 1 to 4 carbon atoms, and particularly preferably -CH₂-, from the viewpoint of ease of production.

In the above formulae, Z⁵ is an (a5+b5)-valent hydrocarbon group, or an (a5+b5)-valent group having 2 or more carbon atoms and having one or more ethereal oxygen atoms between carbon atoms of a hydrocarbon group. When G⁵ is -R¹⁷-O- and c5 is 1, Z⁵ is a residue obtained by removing hydroxyl groups from a polyhydric alcohol having (a5+b5) hydroxyl groups.

In one embodiment, Z⁵ may be any of the following groups.

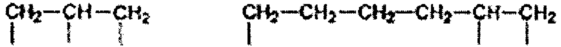

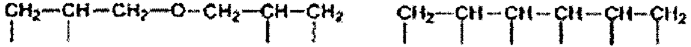

Z⁵ is preferably a residue obtained by removing hydroxyl groups from a polyhydric alcohol having a primary hydroxyl group, from the viewpoint of excellent hydroxyl group reactivity. From the viewpoint of availability of raw materials, Z⁵ is particularly preferably a group represented by the following formula (Z-1), a group represented by the following formula (Z-2), a group represented by the following formula (Z-3), a group represented by the following formula (Z-4), or a group represented by the following formula (Z-5), provided that R⁴ is an alkyl group, and preferably a methyl group or an ethyl group.

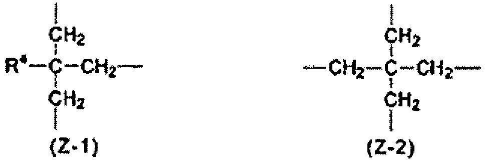

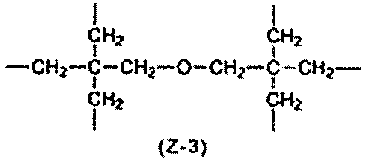

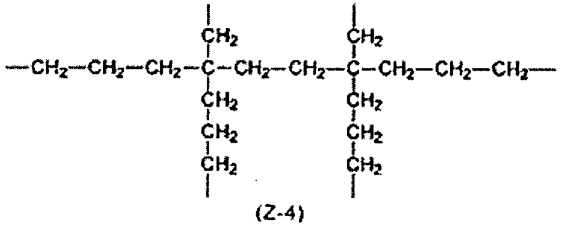

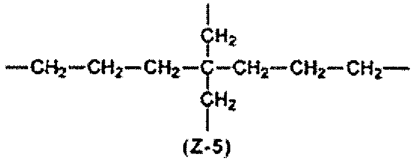

In the above formulae, R¹⁶ is an alkylene group. R¹⁶ is preferably an alkylene group having 4 to 14 carbon atoms from the viewpoint of ease of production. Moreover, an alkylene group having 4 to 10 carbon atoms is particularly preferable from the viewpoint that a by-product resulting from an allyl group (-CH₂CH=CH₂) being partially or entirely isomerized to an inner olefin (-CH=CHCH₃) during hydrosilylation in the production is unlikely generated.

In the above formulae, a5 is an integer of 1 or more. b5 is an integer of 1 or more. (a5+b5) is 3 or more. When a5 is 1, b5 is 4 or more, and when a5 is 2 or more, b5 is 1 or more. When a5 is 2 or more, a5 [Rf-PFPE-G⁵] may be the same or different. When b5 is 2 or more, b5 [(O-R¹⁶)_{c5}-SiR¹⁴ₙR¹⁵₃₋ₙ] may be the same or different. c5 is 0 or 1.

a5 is preferably 1 to 10, and particularly preferably 1 to 4. When a5 is the lower limit value or more, the surface-treating layer has excellent water- and oil-repellency, frictional resistance, fingerprint stain removability, and lubricity. When a5 is the upper limit value or less, the surface-treating layer has an excellent appearance. (a5+b5) is preferably 3 to 15, and particularly preferably 3 to 12.

When a5 is 1, b5 is 4 or more, preferably 4 to 10, and particularly preferably 4 to 5. Unless b5 is 4 or more when a5 is 1, the frictional resistance of the surface-treating layer may be insufficient. When b5 is at the upper limit value or less, the appearance of the surface-treating layer and the stability of the compound are excellent.

When a5 is an integer of 2 or more, b5 is an integer of 1 or more, preferably an integer of 1 to 10, and particularly preferably an integer of 1 to 4. When a5 is an integer of 2 or more, the surface-treating layer has excellent lubricity, and thus a frictional force is unlikely exerted on the surface-treating layer. Accordingly, even when b5 is 1, the surface-treating layer has excellent frictional resistance. When b5 is the upper limit value or less, the appearance of the surface-treating layer and the stability of the compound are excellent.

c5 is 0 or 1. c5 is preferably 0 from the viewpoint of excellent light resistance of the compound, and preferably 1 from the viewpoint of ease of production of the compound.

In the above formulae, X¹⁰¹ each independently represents a single bond or a di- to decavalent organic group. X¹⁰¹ in the compounds represented by formulae (A1) and (A2) is interpreted as a linker linking a perfluoropolyether moiety (i.e., an Rf-PFPE moiety or a -PFPE- moiety) that mainly provides water-repellency, surface lubricity, and the like, and a silane moiety (i.e., the group enclosed in parentheses provided with α) that provides the ability to bind to the substrate. Accordingly, X¹⁰¹ may be a single bond or any organic group as long as the compounds represented by formulae (A1) and (A2) can stably exist.

In the above formulae, α is an integer of 1 to 9, and α' is an integer of 1 to 9. This α and α' can vary according to the valence of X¹⁰¹. In formula (A1), the sum of α and α' is equal to the valence of X¹⁰¹. For example, when X¹⁰¹ is a decavalent organic group, the sum of α and α' is 10, and, for example, α can be 9 and α' can be 1, α can be 5 and α' can be 5, or α can be 1 and α' can be 9. When X¹⁰¹ is a single bond or a divalent organic group, α and α' are each 1. In formula (A2), α is a value obtained by subtracting 1 from the valence of X¹⁰¹.

X¹⁰¹ is preferably a di- to heptavalent, more preferably di- to tetravalent, and further preferably divalent organic group.

In one embodiment, X¹⁰¹ is a di- to tetravalent organic group, α is 1 to 3, and α' is 1.

In another embodiment, X¹⁰¹ is a divalent organic group, α is 1, and α' is 1. In this case, formulae (A1) and (A2) are represented by the following formulae (A1') and (A2'), respectively.

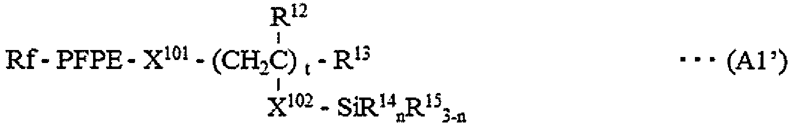

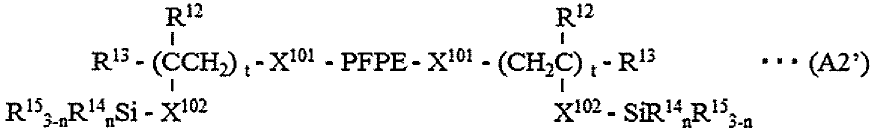

In the above formulae, X¹⁰⁵ each independently represents a single bond or a di- to decavalent organic group. X¹⁰⁵ in the compounds represented by formulae (B1) and (B2) is interpreted as a linker linking a perfluoropolyether moiety (an Rf-PFPE moiety or a -PFPE- moiety) that mainly provides water-repellency, surface lubricity, and the like, and a silane moiety (specifically, -SiR¹⁴ₙR¹⁵₃₋ₙ) that provides the ability to bind to the substrate. Accordingly, X¹⁰⁵ may be a single bond or any organic group as long as the compounds represented by formulae (B1) and (B2) can stably exist.

In the above formulae, β is an integer of 1 to 9, and β' is an integer of 1 to 9. This β and B' are determined in accordance with the valence of X¹⁰⁵ and, in formula (B1), the sum of β and β' is equal to the valence of X¹⁰⁵. For example, when X¹⁰⁵ is a decavalent organic group, the sum of β and β' is 10, and, for example, β can be 9 and β' can be 1, β can be 5 and β' can be 5, or β can be 1 and β' can be 9. When X¹⁰⁵ is a single bond or a divalent organic group, β and β' are each 1. In formula (B2), β is a value obtained by subtracting 1 from the valence of X¹⁰⁵.

X¹⁰⁵ is preferably a di- to heptavalent, more preferably di- to tetravalent, and further preferably a divalent organic group.

In one embodiment, X¹⁰⁵ is a di- to tetravalent organic group, β is 1 to 3, and β' is 1.

In another embodiment, X¹⁰⁵ is a divalent organic group, β1 is 1, and β1' is 1. In this case, formulae (B1) and (B2) are represented by the following formulae (B1') and (B2'), respectively.

Rf-PFPE-X¹⁰⁵-SiR¹⁴ₙR¹⁵₃₋ₙ ··· (B1')

R¹⁵₃₋ₙR¹⁴ₙSi-X¹⁰⁵-PFPE-X¹⁰⁵-SiR¹⁴ₙR¹⁵₃₋ₙ ··· (B2')

In the above formulae, X¹⁰⁷ each independently represents a single bond or a di- to decavalent organic group. X¹⁰⁷ in the compounds represented by formulae (C1) and (C2) is interpreted as a linker linking a perfluoropolyether moiety (an Rf-PFPE moiety or a -PFPE- moiety) that mainly provides water-repellency, surface lubricity, and the like, and a silane moiety (specifically, an -SiR^{a3}ₖR^{b3}ₗR^{c3}ₘ group) that provides the ability to bind to the substrate. Accordingly, X¹⁰⁷ may be a single bond or any organic group as long as the compounds represented by formulae (C1) and (C2) can stably exist.

In the above formulae, γ is an integer of 1 to 9, and γ' is an integer of 1 to 9. This γ and γ' are determined in accordance with the valence of X¹⁰⁷ and, in formula (C1), the sum of γ and γ' is equal to the valence of X¹⁰⁷. For example, when X¹⁰⁷ is a decavalent organic group, the sum of γ and γ' is 10, and, for example, γ can be 9 and γ' can be 1, γ can be 5 and γ' can be 5, or γ can be 1 and γ' can be 9. When X¹⁰⁷ is a single bond or a divalent organic group, γ and γ' are each 1. In formula (C2), γ is a value obtained by subtracting 1 from the value of the valence of X¹⁰⁷.

X¹⁰⁷ is preferably a di- to heptavalent, more preferably di- to tetravalent, and further preferably a divalent organic group.

In one embodiment, X¹⁰⁷ is a di- to tetravalent organic group, γ is 1 to 3, and γ' is 1.

In another embodiment, X¹⁰⁷ is a divalent organic group, γ is 1, and γ' is 1. In this case, formulae (C1) and (C2) are represented by the following formulae (C1') and (C2'), respectively.

Rf-PFPE-X¹⁰⁷-SiR^{a3}ₖR^{b3}ₗR^{c3}ₘ ··· (C1')

R^{c3}ₘR^{b3}ₗR^{a3}ₖSi-X¹⁰⁷-PFPE-X¹⁰⁷-SiR^{a3}ₖR^{b3}ₗR^{c3}ₘ ··· (C2')

In the above formulae, X¹⁰⁹ each independently represents a single bond or a di- to decavalent organic group. X¹⁰⁹ in compounds represented by formulae (D1) and (D2) is interpreted as a linker linking a perfluoropolyether moiety (i.e., an Rf-PFPE moiety or a -PFPE- moiety) that mainly provides water-repellency, surface lubricity, and the like, and a moiety (i.e., a group enclosed in parentheses provided with δ) that provides the ability to bind to the substrate. Accordingly, X¹⁰⁹ may be a single bond or any organic group as long as the compounds represented by formulae (D1) and (D2) can stably exist.

In the above formulae, δ is an integer of 1 to 9, and δ' is an integer of 1 to 9. This δ and δ' can vary according to the valence of X¹⁰⁹. In formula (D1), the sum of δ and δ' is equal to the valence of X¹⁰⁹. For example, when X¹⁰⁹ is a decavalent organic group, the sum of δ and δ' is 10, and, for example, δ can be 9 and δ' can be 1, δ can be 5 and δ' can be 5, or δ can be 1 and δ' can be 9. When X¹⁰⁹ is a divalent organic group, δ and δ' are each 1. In formula (D2), δ is a value obtained by subtracting 1 from the valence of X¹⁰⁹.

X¹⁰⁹ is preferably a di- to heptavalent, more preferably di- to tetravalent, and further preferably a divalent organic group.

In one embodiment, X¹⁰⁹ is a di- to tetravalent organic group, δ is 1 to 3, and δ' is 1.

In another embodiment, X¹⁰⁹ is a divalent organic group, δ is 1, and δ' is 1. In this case, formulae (D1) and (D2) are represented by the following formulae (D1') and (D2'), respectively.

Rf-PFPE-X¹⁰⁹ -CR^{d3}_{k'}R^{e3}_{l'}R^{f3}_{m'} ··· (D1')

R^{f3}_{m'}R^{e3}_{l'}R^{d3}_{k'}C-X¹⁰⁹ -PFPE-X¹⁰⁹-CR^{d3}_{k'}R^{e3}_{l'}R^{f3}_{m'} ··· (D2')

In a preferable embodiment, X¹⁰¹, X¹⁰⁵, X¹⁰⁷, and X¹⁰⁹ are not limited, and may each independently be a divalent group represented by, for example, the following formula:

-(R³¹)ₚ₁-(X^{a})_{q1}-

wherein
R³¹ is a single bond, -(CH₂)_{s'}-, or an o-, m-, or p-phenylene group, and is preferably -(CH₂)_{s'}-,
s' is an integer of 1 to 20, preferably 1 to 6, more preferably 1 to 3, and further preferably 1 or 2,
X^{a} represents -(X^{b})_{l'}-,
X^{b} each independently at each occurrence represents a group selected from the group consisting of -O-, -S-, an o-, m-, or p-phenylene group, -C(O)O-, -Si(R³³)₂-, -(Si(R³³)₂O)_{m"}-Si(R³³)₂-, -CONR³⁴-, -O-CONR³⁴-, -NR³⁴-, and -(CH₂)_{n'}-,
R³³ each independently at each occurrence represents a phenyl group, a C₁₋₆ alkyl group, or a C₁₋₆ alkoxy group, preferably a phenyl group or a C₁₋₆ alkyl group, and more preferably a methyl group,
R³⁴ each independently at each occurrence represents a hydrogen atom, a phenyl group, or a C₁₋₆ alkyl group (preferably a methyl group),
m" is each independently at each occurrence an integer of 1 to 100 and preferably an integer of 1 to 20,
n' is each independently at each occurrence an integer of 1 to 20, preferably an integer of 1 to 6, and more preferably an integer of 1 to 3,
l' is an integer of 1 to 10, preferably an integer of 1 to 5, and more preferably an integer of 1 to 3,
p1 is 0 or 1, and
q1 is 0 or 1,
provided that at least one of p1 and q1 is 1, and the occurrence order of each repeating unit enclosed within parentheses provided with p1 or q1 is arbitrary.

Here, R³¹ and X^{a} (typically, hydrogen atoms of R³¹ and X^{a}) are optionally substituted with one or more substituents selected from a fluorine atom, a C₁₋₃ alkyl group, and a C₁₋₃ fluoroalkyl group.

In one embodiment, X¹⁰¹, X¹⁰⁵, X¹⁰⁷, and X¹⁰⁹ may each independently be a divalent group represented by:

-(R³¹)ₚ₁-(X^{a})_{q1}-

wherein
R³¹ represents -(CH₂)_{s'}-,
s' is an integer of 1 to 20,
X^{a} represents -(X^{b})_{l'}-,
X^{b} each independently at each occurrence represents a group selected from the group consisting of -O-, -CONR³⁴-, - O-CONR³⁴-, and -(CH₂)_{n'}-,
R³⁴ each independently at each occurrence represents a hydrogen atom, a phenyl group, or a C₁₋₆ alkyl group,
n' is each independently at each occurrence an integer of 1 to 20,
l' is an integer of 1 to 10,
p1 is 0 or 1, and
q1 is 0 or 1,
provided that at least one of p1 and q1 is 1, and the occurrence order of each repeating unit enclosed within parentheses provided with p1 or q1 is arbitrary.

Here, R³¹ and X^{a} (typically, hydrogen atoms of R³¹ and X^{a}) are optionally substituted with one or more substituents selected from a fluorine atom, a C₁₋₃ alkyl group, and a C₁₋₃ fluoroalkyl group.

Preferably, X¹⁰¹, X¹⁰⁵, X¹⁰⁷, and X¹⁰⁹ are each independently -(R³¹)ₚ₁-(X^{a})_{q1}-R³²-. R³² represents a single bond, -(CH₂)_{t'}-, or an o-, m-, or p-phenylene group, and preferably -(CH₂)_{t'}-, t' is an integer of 1 to 20, preferably an integer of 2 to 6, and more preferably an integer of 2 to 3. Here, R³² (typically, hydrogen atoms of R³²) is optionally substituted with one or more substituents selected from a fluorine atom, a C₁₋₃ alkyl group, and a C₁₋₃ fluoroalkyl group.

Preferably, X¹⁰¹, X¹⁰⁵, X¹⁰⁷, and X¹⁰⁹ may each independently be
a single bond,
an -X^{f}-C₁₋₂₀ alkylene group,
-X^{f}-R³¹-X^{c}-R³²-, or
-X^{f}-X^{d}-R³²-
wherein R³¹ and R³² have the same meanings as above, and
   X^{f} is a single bond or a perfluoroalkylene group having 1 to 6 carbon atoms, preferably 1 to 4 carbon atoms, and more preferably 1 to 2 carbon atoms, such as a difluoromethylene group.

Preferably, X¹⁰¹, X¹⁰⁵, X¹⁰⁷, and X¹⁰⁹ may each independently be
a single bond,
an -X^{f}-C₁₋₂₀ alkylene group,
-X^{f}-(CH₂)_{s'}-X^{c}-,
-X^{f}-(CH₂)_{s'}-X^{c}-(CH₂)_{t'}-,
-X^{f}-X^{d}-, or
-X^{f}-X^{d}-(CH₂)_{t'}-,
wherein X^{f}, s', and t' have the same meanings as above.

In the above formula, X^{c} represents
-O-,
-S-,
-C(O)O-,
-CONR³⁴-,
-O-CONR³⁹-,
-Si (R³³)₂-,
- (Si (R³³)₂O)_{m"}-Si(R³³)₂-,
-O-(CH₂)_{u'}-(Si (R³³)₂O)_{m"}-Si(R³³)₂-,
-O-(CH₂)_{u'}-Si(R³³)₂-O-Si(R³³)₂-CH₂CH₂-Si(R³³)₂-O-Si(R³³)₂-,
-O-(CH₂)_{u'}-Si(OCH₃)₂OSi(OCH₃)₂-,
-CONR³⁴-(CH₂)_{u'}-(Si(R³³)₂₀)m_{"}-Si(R³³)₂-,
-CONR³⁴-(CH₂)_{u'}-N(R³⁴)-, or
-CONR³⁴-(o-, m-, or p-phenylene) -Si (R³³)₂-,
wherein R³³, R³⁴, and m" have the same meanings as above, and
   u' is an integer of 1 to 20, preferably an integer of 2 to 6, and more preferably an integer of 2 to 3. X^{c} is preferably -O-.

In the above formula, X^{d} represents
-S-,
-C(O)O-,
-CONR³⁴-,
-O-CONR³⁴-,
-CONR³⁴-(CH₂)_{u'}-(Si (R³³)₂O)_{m"}-Si(R³³)₂-,
-CONR³⁴-(CH₂)_{u'}-N(R³⁴)-, or
-CONR³⁴- (o-, m-, or p-phenylene) -Si(R³³)₂-,
wherein each symbol has the same meaning as above.

More preferably, X¹⁰¹, X¹⁰³, X¹⁰⁷, and X¹⁰⁹ may each independently be
a single bond,
an -X^{f}-C₁₋₂₀ alkylene group,
-X^{f}-(CH₂)_{s'}-X^{c}-(CH₂)_{t'}-, or
-X^{f}-X^{d}-(CH₂)_{t'}-,
wherein each symbol has the same meaning as above.

In a preferable embodiment, X¹⁰¹, X¹⁰⁵, X¹⁰⁷, and X¹⁰⁹ may each independently be
a single bond,
an -X^{f}-C₁₋₂₀ alkylene group,
-X^{f}-(CH₂)_{s'}-X^{c}-, or
-X^{f}-(CH₂)_{s'}-X^{c}-(CH₂)_{t'}-,
wherein
   X^{c} is -O-, -CONR³⁴-, or -O-CONR³⁴-,
   R³⁴ each independently at each occurrence represents a hydrogen atom, a phenyl group, or a C₁₋₆ alkyl group,
   s' is an integer of 1 to 20, and
   t' is an integer of 1 to 20.

In one embodiment, X¹⁰¹, X¹⁰⁵, X¹⁰⁷, and X¹⁰⁹ may each independently be
a single bond,
an -X^{f}-C₁₋₂₀ alkylene group,
-X^{f}-(CH₂)_{s'}-O-(CH₂)_{t'}-,
-X^{f}-(CH₂)_{s'}-(Si(R³³)₂O)_{m"}-Si(R³³)₂-(CH₂)_{t'}-,
-X^{f}-(CH₂)_{s'}-O-(CH₂)_{u'}-(Si (R³³)₂O)_{m"}-Si(R³³)₂-(CH₂)_{t'}-, or
-X^{f}-(CH₂)_{s'}-O-(CH₂)_{t'}-Si(R³³)₂-(CH₂)_{u'}-Si(R³³)₂-(CᵥH₂ᵥ)-
wherein X^{f}, R³³, m", s', t', and u' have the same meanings as above, and v is an integer of 1 to 20, preferably an integer of 2 to 6, and more preferably an integer of 2 to 3.

In the above formula, -(CᵥH₂ᵥ)- may be linear or branched and may be, for example, -CH₂CH₂-, -CH₂CH₂CH₂-, -CH(CH₃)-, or -CH(CH₃)CH₂-.

X¹⁰¹, X¹⁰⁵, X¹⁰⁷, and X¹⁰⁹ groups are optionally each independently substituted with one or more substituents selected from a fluorine atom, a C₁₋₃ alkyl group, and a C₁₋₃ fluoroalkyl group (preferably a C₁₋₃ perfluoroalkyl group).

Concerning X¹⁰¹, X¹⁰⁵, X¹⁰⁷, and X¹⁰⁹, the left side of each formula is bonded to the PFPE group.

In the above formulae, X^{f} concerning formulae (A1), (B1), (C1), and (D1) is preferably a single bond, and concerning formulae (A2), (B2), (C2), and (D2), is a perfluoroalkylene group having 1 to 6 carbon atoms, preferably 1 to 4 carbon atoms, and more preferably 1 to 2 carbon atoms, such as a difluoromethylene group.

In one embodiment, X¹⁰¹, X¹⁰⁵, X¹⁰⁷, and X¹⁰⁹ groups may each independently be a group that is different from an -O-C₁₋₆ alkylene group.

In another embodiment, examples of X¹⁰¹, X¹⁰⁵, X¹⁰⁷, and X¹⁰⁹ groups include the following groups: 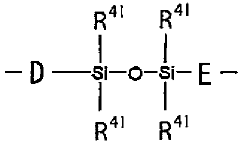 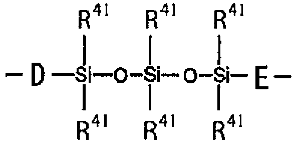 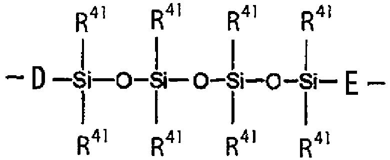 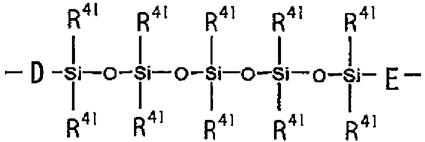 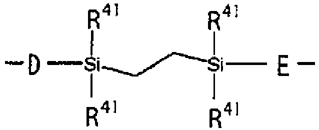 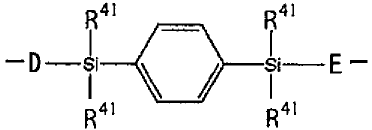 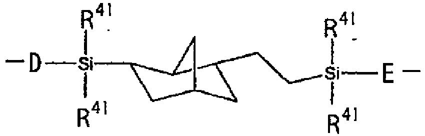
wherein R⁴¹ each independently is a hydrogen atom, a phenyl group, an alkyl group having 1 to 6 carbon atoms, or a C₁₋₆ alkoxy group, and preferably a methyl group;
   D is a group selected from
-CH₂O(CH₂)₂-,
-CH₂O(CH₂)₃-,
-CF₂O(CH₂)₃-,
- (CH₂)₂-,
- (CH₂)₃-,
- (CH₂)₄-,
-CONH- (CH₂)₃-,
-CON (CH₃)-(CH₂)₃-, and
-CON(Ph)-(CH₂)₃- wherein Ph means phenyl, and 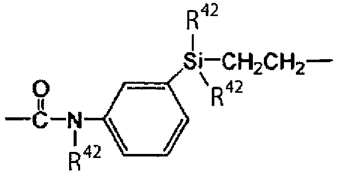
wherein R⁴² each independently represents a hydrogen atom, a C₁₋₆ alkyl group, or a C₁₋₆ alkoxy group, preferably a methyl group or a methoxy group, and more preferably a methyl group,
   E is -(CH₂)ₙ- (n represents an integer of 2 to 6),
   D is bonded to PFPE of the molecular backbone, and E is bonded to the group opposite to PFPE.

Specific examples of X¹⁰¹, X¹⁰⁵, X¹⁰⁷, and X¹⁰⁹ groups include:
a single bond,
-CH₂OCH₂-,
-CH₂O(CH₂)₂-,
-CH₂O(CH₂)₃- ,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-_{,}
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF_{2CF2}-,
-CH₂OCH₂CF₂CF₂OCF(CF₃)CF₂OCF₂CF₂CF₂-,
-CH₂OCH₂CHFCF₂OCF₂-
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂ )₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
- (CH₂)₂-Si(CH₃)₂-(CH₂)₂-,
-CH₂-,
- (CH₂)₂-,
- (CH₂)₃-,
-(CH₂)₄-,
- (CH₂)₅-,
- (CH₂)₆-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-,
-CONH-,
-CONH-CH₂-,
-CONH- (CH₂)₂-,
-CONH- (CH₂)₃-,
-CONH- (CH₂)₆-,
-CF₂CONHCH₂-,
-CF₂CONH(CH₂)₂-,
-CF₂CONH(CH₂)₃-,
-CF₂CONH(CH₂)₆-,
-CON(CH₃)-(CH₂)₃-,
-CON(Ph)-(CH₂)₃- wherein Ph means phenyl,
-CON(CH₃)- (CH₂)₆-,
-CON (Ph)- (CH₂)₆- wherein Ph means phenyl,
-CF₂-CON(CH₃)- (CH₂)₃-,
-CF₂-CON(Ph) - (CH₂)₃- wherein Ph means phenyl,
-CF₂-CON(CH₃)- (CH₂)₆-,
-CF₂-CON(Ph) - (CH₂)₆- wherein Ph means phenyl,
-CONH- (CH₂)₂NH(CH₂)₃-,
-CONH- (CH₂)₆NH(CH₂)₃-,
-CH₂O-CONH-(CH₂)₃-,
-CH₂O-CONH-(CH₂)₆-,
-S-(CH₂)₃-,
- (CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-,
-OCFHCF₂-,
   and

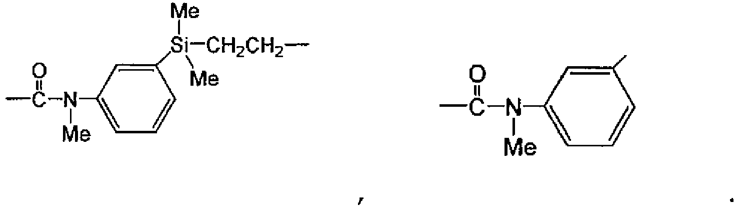

In yet another embodiment, X¹⁰¹, X¹⁹⁵, X¹⁰⁷, and X¹⁰⁹ are each independently a group represented by formula: -(R¹⁸)ₓ-(CFR¹⁷)_{y}-(CH₂)_{z}-. In the formula, x, y, and z are each independently an integer of 0 to 10, the sum of x, y, and z is 1 or more, and the occurrence order of each repeating unit enclosed in parentheses is arbitrary.

In the above formula, R¹⁸ is each independently at each occurrence an oxygen atom, phenylene, carbazolylene, -NR²⁶-wherein R²⁶ represents a hydrogen atom or an organic group, or a divalent organic group. Preferably, R¹⁸ is an oxygen atom or a divalent polar group.

The "divalent polar group" is not limited, and examples include -C(O)-, -C(=NR²⁷)-, and -C(O)NR²⁷- (in these formulae, R²⁷ represents a hydrogen atom or a lower alkyl group). The "lower alkyl group" is, for example, an alkyl group having 1 to 6 carbon atoms, such as methyl, ethyl, and n-propyl that is optionally substituted with one or more fluorine atoms.

In the above formulae, R¹⁷ is each independently at each occurrence a hydrogen atom, a fluorine atom, or a lower fluoroalkyl group, and is preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or pentafluoroethyl group, and further preferably a trifluoromethyl group.

In yet another embodiment, examples of X¹⁰¹, X¹⁰⁵, X¹⁰⁷, and X¹⁰⁹ groups include the following groups: 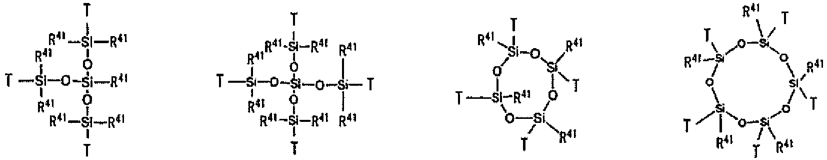 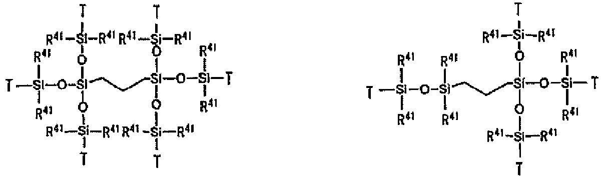 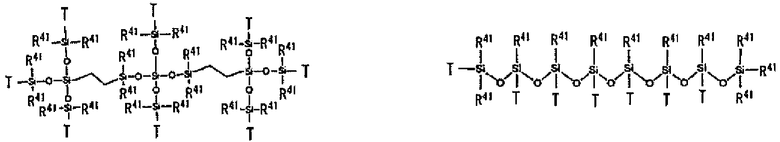 wherein
R⁴¹ is each independently a hydrogen atom, a phenyl group, an alkyl group having 1 to 6 carbon atoms, or a C₁₋₆ alkoxy group, and is preferably a methyl group;
in each group X¹⁰¹, some of the groups represented by T are the following groups bonded to PFPE of the molecular backbone:
   -CH₂O(CH₂)₂-,
   -CH₂O(CH₂)₃-,
   -CF₂O(CH₂)₃-,
   -(CH₂)₂-,
   -(CH₂)₃-,
   - (CH₂)₄-,
   -CONH-(CH₂)₃-,
   -CON(CH₃)-(CH₂)₃-,
   -CON (Ph) -(CH₂)₃- wherein Ph means phenyl, or 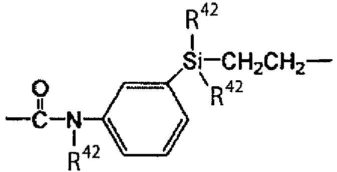
   wherein R⁴² each independently represents a hydrogen atom, a C₁₋₆ alkyl group, or a C₁₋₆ alkoxy group, preferably a methyl group or a methoxy group, and more preferably a methyl group, and
   some of the other groups represented by T are bonded to the group opposite to PFPE of the molecular backbone (that is to say, a carbon atom in formulae (A1), (A2), (D1), and (D2), and a Si atom in the following formulae (B1), (B2), (C1), and (C2), and the remaining groups represented by T, if present, are each independently a methyl group, a phenyl group, a C₁₋₆ alkoxy group, a radical scavenging group, or a UV absorbing group.

The radical scavenging group is not limited as long as it can scavenge a radical generated by light irradiation, and examples include residues of benzophenones, benzotriazoles, benzoates, phenyl salicylates, crotonic acids, malonates, organoacrylates, hindered amines, hindered phenols, or triazines.

The UV absorbing group is not limited as long as it can absorb ultraviolet rays, and examples include residues of benzotriazoles, hydroxybenzophenones, esters of substituted and unsubstituted benzoic acid or salicylic acid compounds, acrylates or alkoxy cinnamates, oxamides, oxanilides, benzoxazinones, or benzoxazoles.

In a preferable embodiment, examples of preferable radical scavenging groups or UV absorbing groups include:

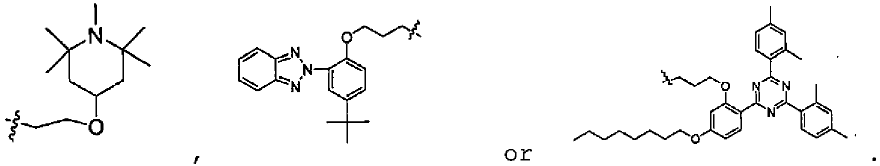

In this embodiment, X¹⁰¹, X¹⁰⁵, X¹⁰⁷, and X¹⁰⁹ may each independently be a tri- to decavalent organic group.

In the surface-treating agent of the present disclosure, the compounds represented by formulae (A2), (B2), (C2), and (D2) are 0.1 mol% or more and 35 mol% or less based on the total of the compounds represented by formulae (A1), (B1), (C1), (D1), and (E1) (hereinafter also referred to as "component (1)") and the compounds represented by formulae (A2), (B2), (C2), and (D2) (hereinafter also referred to as "component (2)"). The lower limit of the content of the compounds represented by formulae (A2), (B2), (C2), and (D2) based on component (2) is preferably 0.1 mol%, more preferably 0.2 mol%, further preferably 0.5 mol%, even more preferably 1 mol%, particularly preferably 2 mol%, and especially 5 mol%. The upper limit of the content of the compounds represented by formulae (A2), (B2), (C2), and (D2) based on component (2) is preferably 35 mol%, more preferably 30 mol%, further preferably 20 mol%, and even more preferably 15 mol% or 10 mol%. The compounds represented by formulae (A2), (B2), (C2), and (D2) based on component (2) are preferably 0.1 mol% or more and 30 mol% or less, more preferably 0.1 mol% or more and 20 mol% or less, further preferably 0.2 mol% or more and 10 mol% or less, even more preferably 0.5 mol% or more and 10 mol% or less, and particularly preferably 1 mol% or more and 10 mol% or less, for example, 2 mol% or more and 10 mol% or less, or 5 mol% or more and 10 mol% or less. With component (2) being within such a range, friction durability can be more increased.

In the above surface-treating agent, the combination of component (1) and component (2) is preferably a combination of the compound represented by formula (A1) and the compound represented by formula (A2), a combination of the compound represented by formula (B1) and the compound represented by formula (B2), a combination of the compound represented by formula (C1) and the compound represented by formula (C2), or a combination of the compound represented by formula (D1) and the compound represented by formula (D2).

Concerning the compounds represented by formulae (A1) and (A2), t is preferably 2 or more, more preferably an integer of 2 to 10, and further preferably an integer of 2 to 6. With t being 2 or more, a plurality of Si atoms having R¹⁵ are present, and higher durability can be obtained.

Concerning the compounds represented by formulae (C1) and (C2), k is preferably 2 or 3, and more preferably 3.

In a preferable embodiment, the compounds of formulae (C1) and (C2) have an -Si-(Z-SiR⁷²₃)₂ or -Si-(Z-SiR⁷²₃)₃ structure at an end, and more preferably an -Si-(Z-SiR⁷²₃)₃ structure. With an end being such a structure, higher durability can be obtained.

Concerning the compounds represented by formulae (D1) and (D2), l' is preferably 2 or 3, and more preferably 3.

In a preferable embodiment, the compounds represented by formulae (D1) and (D2) have a -C-(Y-SiR⁸⁵₃)₂ or -Si-(Y-SiR⁸⁵)₃ structure at an end, and more preferably an -Si-(Y-SiR⁸⁵)₃ structure. With an end being such a structure, higher durability can be obtained.

In one embodiment, compound (β) is a compound represented by formula (A1), (B1), (C1), (D1), or (E1).

In one embodiment, compound (β) is a compound represented by formula (A2), (B2), (C2), or (D2).

In one embodiment, compound (β) is a compound represented by formula (A1), (A2), (C1), (C2), (D1), (D2), or (E1). These compounds may have a plurality of Si atoms having a hydroxyl group or a hydrolyzable group at an end, and thus higher friction durability can be obtained.

In one embodiment, compound (β) is a compound represented by formula (C1), (C2), (D1), (D2), or (E1).

In one embodiment, compound (β) is a compound represented by formula (C1), (C2), (D1), or (D2).

In one embodiment, compound (β) is a compound represented by formula (A1) or (A2).

In one embodiment, compound (β) is a compound represented by formula (B1) or (B2).

In one embodiment, compound (β) is a compound represented by formula (C1) or (C2). By using a compound represented by formulae (C1) or (C2) as compound (β), friction durability and surface lubricity are increased. Moreover, miscibility with a compound having an isocyanuric skeleton such as compound (α) is increased.

In one embodiment, compound (β) is a compound represented by formula (D1) or (D2).

In one embodiment, compound (β) is a compound represented by formula (E1).

Preferable examples of compound (E1) include compounds (1-1) to (1-8) of the following formulae. Such compounds are preferable because they are industrially easy to produce and easy to handle, and the water- and oil-repellency, frictional resistance, fingerprint stain removability, lubricity, and appearance of the surface-treating layer are even better.

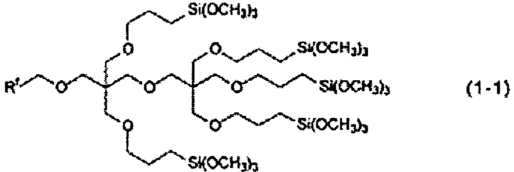

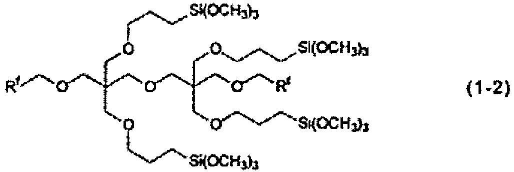

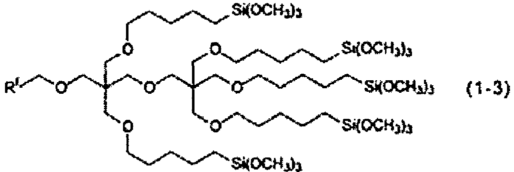

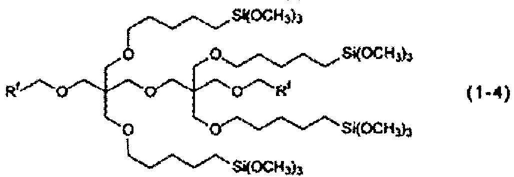

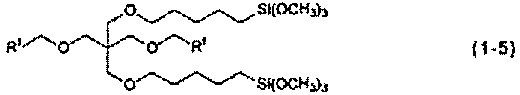

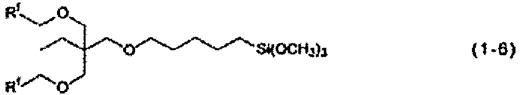

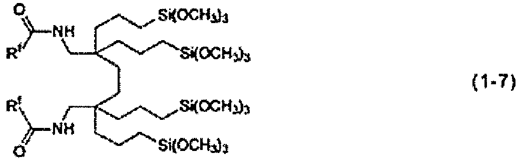

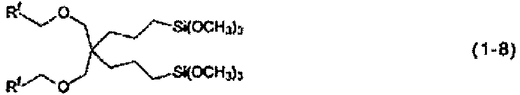

The number average molecular weight of compound (β) used in the present disclosure is preferably 1,000 to 30,000, preferably 1,500 to 30,000, and more preferably 2,000 to 10,000.

In the surface-treating agent of the present disclosure, the weight ratio of compound (α) to compound (β) is preferably 1:99 to 99:1, more preferably 5:95 to 90:10, further preferably 30:70 to 90:10, and even more preferably 30:70 to 70:30. With the weight ratio of compound (α) to compound (β) being within such a range, excellent UV durability, surface lubricity, friction durability such as pencil-eraser durability and steel-wool durability, and the like can be simultaneously achieved.

In one embodiment, the ratio of the number average molecular weight of compound (α) to the number average molecular weight of compound (β) is preferably 9:1 to 1:9, more preferably 7:3 to 3:7, and more preferably 6:4 to 4:6.

In one embodiment, the number average molecular weight of compound (α) is greater than the number average molecular weight of compound (β). When the number average molecular weight of compound (α) is greater than the number average molecular weight of compound (β), and preferably when the number average molecular weight ratio is 7:3 to 6:4 (compound (α) :compound (β)), the dynamic friction coefficient is lowered, and surface lubricity can be increased.

In another embodiment, the number average molecular weight of compound (α) is less than or equal to the number average molecular weight of compound (β). When the number average molecular weight of compound (α) is less than or equal to the number average molecular weight of compound (β), and preferably when the number average molecular weight ratio is 5:5 to 2:8 (compound (α): compound (β)), abrasion resistance can be increased, in addition to being able to lower the dynamic friction coefficient and increase surface lubricity.

Compounds represented by formulae (A1), (A2), (B1), (B2), (C1), (C2), (D1), (D2), and (E1) can be produced by known methods.

The surface-treating agent of the present disclosure may contain another silane compound other than compound (α) and compound (β).

Examples of other silane compounds include compounds represented by formula (α1') and compounds represented by formula (α2') obtained by opening the isocyanuric rings of compounds represented by formula (α1) and formula (α2): 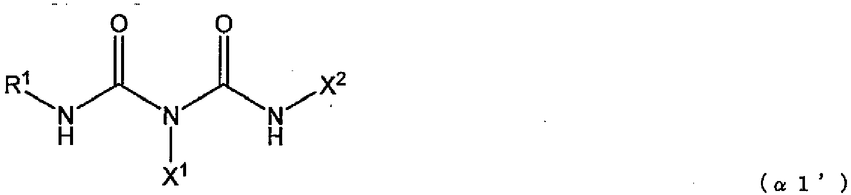 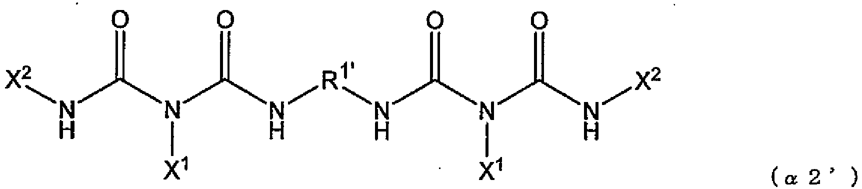
wherein the respective symbols have the same meanings those in formula (α1) and formula (α2), and
silane compounds having the same structures as formulae (A1), (A2), (B1), (B2), (C1), (C2), (D1), (D2), and (E1) except that the perfluoropolyether group does not have an OCF₂ unit.

Examples of the perfluoropolyether group that does not have an OCF₂ unit are compounds represented by:

-(OC₆F₁₂)ₘ₁₁-(OCSF₁₀)ₘ₁₂-(OC₄F₈)ₘ₁₃-(OC₃X¹⁰₆)m₁₄-(OC₂F₄)ₘ₁₅-

wherein the respective symbols have the same meanings as those in the above polyether chain.

The perfluoropolyether group that does not have an OCF₂ unit may be a group represented by the following formula:

-(OC₃X¹⁰6)ₘ₁₄-.

wherein m14 and X¹¹ have the same meanings as above, and X¹¹ is preferably F, or
a group represented by the following formula:

   -(OC₂F₄-R¹¹)_{f}-
wherein R¹¹ is a group selected from OC₂F₄, OC₃F₆, and OC₄F_{B}, and f is an integer of 2 to 100.

-(OC₃X¹⁰₆)ₘ₁₄- is preferably -(OC₃F₆)ₘ₁₄-, more preferably - (OCF(CF₃)CF₂)ₘ₁₄-, or -(OCF₂CF₂CF₂)ₘ₁₄-, and particularly preferably -(OCF₂CF₂CF₂)ₘ₁₄-.

These other silane compounds may be or may not be contained in the surface-treating agent, and when contained, may be preferably 0.01 to 20 parts by mole, and more preferably 0.1 to 15 parts by mole, such as 1 to 10 parts by mole or 3 to 5 parts by mole, based on total 100 mol of compound (α).

In one embodiment, the surface-treating agent of the present disclosure may contain, in addition to compound (α) and compound (β), a compound derived from the synthesis of that compound, such as a compound represented by R¹-OSO₂CF₃ or CF₃SO₂O-R^{1'}-OSO₂CF₃.

In one embodiment, the surface-treating agent of the present disclosure may contain, in addition to compound (α) and compound (β), a silane compound that causes a sol-gel reaction (hereinafter also referred to as a "sol-gel compound"). Examples of the sol-gel compound include a fluoroalkylsilane compound, an aliphatic silane compound, an alkoxysilane compound, an isocyanate silane compound, and an aminosilane compound. One or two or more such sol-gel compounds may be used.

The fluoroalkylsilane compound is, for example, a compound represented by the following formula:

B(CF₂)ᵣCH₂CH₂Si(CH₃)₃₋ₛXₛ

wherein B is -CF₃ or -CH₂CH₂Si (CH₃)₃₋ₜXₜ; X is an alkoxy group such as a methoxy group, an ethoxy group, a propoxy group, an isopropoxy group, or a butoxy group, or a monovalent hydrolyzable group such as a chloro group or an isocyanate group; t is an integer of 1 to 3; r is an integer of 0 to 12; and s is an integer of 1 to 3.

For example, as fluoroalkylsilane compounds, usable are fluoroalkylsilanes having a hydrolyzable group at one end, such as CF₃(CF₂)₁₁CH₂CH₂SiCl₃, CF₃(CF₂)₁₁CH₂CH₂SiCH₃Cl₂, CF₃(CF₂)₁₁CH₂CH₂Si(CH₃)₂Cl, CF₃(CF₂)₉CH₂CH₂SiCl₃, CF₃(CF₂)₉CH₂CH₂SiCH₃Cl₂, CF₃(CF₂)₉CH₂CH₂Si(CH₃)₂Cl, CF₃(CF₂)₇CH₂CH₂SiCl₃, CF₃(CF₂)₇CH₂CH₂SiCH₃Cl₂, CF₃(CF₂)₇CH₂CH₂Si(CH₃)₂Cl, CF₃(CF₂)₅CH₂CH₂SiCl₃, CF₃(CF₂)_{5C}H₂CH₂SiCH₃Cl₂, CF₃(CF₂)₅CH₂CH₂Si(CH₃)₂Cl, CF₃CH₂CH₂SiCl₃, CF₃CH₂CH₂SiCH₃Cl₂, CF₃CH₂CH₂Si(CH₃)₂Cl, CF₃(CH₂)₂Si(OCH₃)₃, CF₃(CH₂)₂SiCl₃, CF₃(CF₂)₅(CH₂)₂Si(OCH₃)₃, CF₃(CF₂)₅(CH₂)₂SiCl₃, CF₃(CF₂)₇(CH₂)₂Si(OCH₃)₃, CF₃(CF₂)₇(CH₂)₂SiCl₃, CF₃(CF₂)₇(CH₂)₂SiCH₃Cl₂, and CF₃(CF₂)₇(CH₂)₂SiCH₃(OCH₃)₂, and fluoroalkylsilanes having a hydrolyzable group at both ends, such as Cl₃SiCH₂CH₂(CF₂)₁₂CH₂CH₂SiCl₃, Cl₂(CH₃)SiCH₂CH₂(CF₂)₁₂CH₂CH₂Si(CH₃)Cl₂, Cl(CH₃)₂SiCH₂CH₂(CF₂)₁₂CH₂CH₂Si(CH₃)₂Cl, Cl₃SiCH₂CH₂(CF₂)₁₀CH₂CH₂SiCl₃, Cl₂(CH₃)SiCH₂CH₂(CF₂)₁₀CH₂CH₂Si(CH₃)Cl₂, Cl(CH₃)₂SiCH₂CH₂(CF₂)₁₀CH₂CH₂Si(CH₃)₂Cl, Cl₃SiCH₂CH₂(CF₂)₈CH₂CH₂SiCl₃, Cl₂(CH₃)SiCH₂CH₂(CF₂)₈CH₂CH₂Si(CH₃)Cl₂, Cl(CH₃)₂SiCH₂CH₂(CF₂)₈CH₂CH₂Si(CH₃)₂Cl, Cl₃SiCH₂CH₂(CF₂)₆CH₂CH₂SiCl₃, Cl₂(CH₃)SiCH₂CH₂(CF₂)₆CH₂CH₂Si(CH₃)Cl₂, Cl(CH₃)₂SiCH₂CH₂(CF₂)₆CH₂CH₂Si(CH₃)₂Cl, Cl₃SiCH₂CH₂CF₂CH₂CH₂SiCl₃, Cl₂(CH₃)SiCH₂CH₂CF₂CH₂CH₂Si(CH₃)Cl₂, and Cl(CH₃)₂SiCH₂CH₂CF₂CH₂CH₂Si(CH₃)₂Cl.

Examples of the aliphatic silane compound include CH₃(CH₂)₅Si(OCH₃)₃, CH₃(CH₂)₅SiCl₃, CH₃(CH₂)₁₁Si(OC₂H₅)₃, and (CH₃)₂CHCH₂Si(OCH₃)₃. Preferable examples include CH₃(CH₂)₅Si(OCH₃)₃ (n-hexyltrimethoxysilane), CH₃(CH₂)₁₁Si(OC₂H₅)₃ (n-dodecyltriethoxysilane), and (CH₃)₂CHCH₂Si(OCH₃)₃ (isobutyltrimethoxysilane).

The alkoxysilane compound is, for example, a lower alkoxysilane compound such as Si(OC₂H₅)₄, Si(OCH₃)₄, CH₃Si(OCH₃)₃, or Si(OC₃H₇)₄, and is not limited as long as it is a hydrolyzable silane compound. The alkoxysilane compound is a compound different from compound (α) and compound (β).

Examples of the isocyanate silane compound include (CH₃)₃SiNCO, (CH₃)₃Si(NCO)₃, CH₃Si(NCO)₃, CH₂=CHSi(NCO)₃, phenyl-Si(NCO)₃, Si(NCO)₄, and C₂H₅OSi(NCO)₃. Preferable examples include CH₃Si(NCO)₃ (methylsilyltriisocyanate), and CH₃Si(NCO)₃.

Examples of the aminosilane compound include 3-aminopropyltriethoxysilane, N-(2-aminoethyl)3-aminopropyltrimethoxysilane, N-(2-aminoethyl)3-aminopropylmethyldimethoxysilane, and N-phenyl-3-aminopropyltrimethoxysilane.

The surface-treating agent containing the sol-gel compound may contain 0.1 to 5 parts and preferably 0.5 to 3 parts of an acid catalyst. Examples of the acid catalyst include inorganic acids such as nitric acid, hydrochloric acid, and sulfuric acid; dicarboxylic acids such as oxalic acid and hexafluoroglutaric acid; and organic acids such as p-toluenesulfonic acid and trifluoroacetic acid. Preferable examples of the acid catalyst include oxalic acid and nitric acid.

The surface-treating agent containing the above sol-gel compound may be diluted with an organic solvent. The organic solvent is not limited as long as it can uniformly disperse or dissolve the fluoroalkylsilane compound and the like, and examples include lower alcohols such as ethanol, butanol, and isopropyl alcohol; ketones such as acetone, methyl ethyl ketone, methyl isobutyl ketone; cellosolves such as methyl cellosolve and ethyl cellosolve; aromatic hydrocarbons such as xylene and toluene; aliphatic hydrocarbons such as n-hexane and n-heptane; and esters such as ethyl acetate and butyl acetate.

The surface-treating agent of the present disclosure may contain a (non-reactive) fluoropolyether compound, preferably a perfluoro(poly)ether compound, that can be interpreted as fluorine-containing oil (hereafter referred to as "fluorine-containing oil"). When the fluorine-containing oil is contained, the surface lubricity of the surface-treating layer formed by using the surface-treating agent can be more increased.

The fluorine-containing oil is not limited, and examples include compounds (perfluoropolyether compounds) represented by the following general formula (3):

Rf¹-(OC₄F₈)_{a'}-(OC₃F₆)_{b'}-(OC₂F₄)_{c'}-(OCF₂)_{d'}-Rf² ... (3)

wherein Rf¹ represents a C₁₋₁₆ alkyl group optionally substituted with one or more fluorine atoms (preferably, a C₁₋₁₆ perfluoroalkyl group), Rf² represents a C₁₋₁₆ alkyl group optionally substituted with one or more fluorine atoms (preferably, a C₁₋₁₆ perfluoroalkyl group), a fluorine atom, or a hydrogen atom, and Rf¹ and Rf² are each independently, more preferably, a C₁₋₃ perfluoroalkyl group;
a', b', c' and d' respectively represent the numbers of repeating units of four perfluoropolyethers constituting the main backbone of the polymer and are mutually independently an integer of 0 or more and 300 or less, and the sum of a', b', c', and d' is at least 1, preferably 1 to 300, and more preferably 20 to 300; and the occurrence order of the respective repeating units in parentheses provided with the subscript a', b', c', or d' is not limited in the formula. Among these repeating units, -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-, and preferably -(OCF₂CF₂CF₂CF₂)-. -(OC₃F₆)- may be any of - (OCF₂CF₂CF₂)-, -(OCF(CF₃)CF₂)-, and -(OCF₂CF(CF₃))-, and preferably -(OCF₂CF₂CF₂)-. -(OC₂F₄)- may be any of -(OCF₂CF₂)- and -(OCF(CF₃))-, and preferably -(OCF₂CF₂)-.

Examples of the perfluoropolyether compound represented by general formula (3) include a compound represented by any of the following general formulae (3a) and (3b) (which may be used singly or as a mixture of two or more).

Rf¹-(OCF₂CF₂CF₂)_{b"}-Rf² ... (3a)

Rf¹-(OCF₂CF₂CF₂CF₂)_{a"}-(OCF₂CF₂CF₂)_{b"}-(OCF₂CF₂)_{c"}-(OCF₂)_{d"}-Rf² ... (3b)

In these formulae, Rf¹ and Rf² are as described above; in formula (3a), b'' is an integer of 1 or more and 100 or less; and, in formula (3b), a'' and b'' are each independently an integer of 0 or more and 30 or less, for example, 1 or more and 30 or less, and c'' and d'' are each independently an integer of 1 or more and 300 or less. The occurrence order of the respective repeating units in parentheses provided with subscript a", b", c", or d'' is not limited in the formulae.

The fluorine-containing oil may have a number average molecular weight of 1,000 to 30,000. Accordingly, high surface lubricity can be obtained.

The fluorine-containing oil may be or may not be contained in the surface-treating agent of the present disclosure, and when contained, may be contained in an amount of, for example, 0.1 to 500 parts by mass, preferably 1 to 400 parts by mass, and more preferably 5 to 300 parts by mass, based on total 100 parts by mass of the perfluoropolyether group-containing compound (when two or more perfluoropolyether group-containing compounds are contained, the total thereof, and the same also applies below).

The compound represented by general formula (3a) and the compound represented by general formula (3b) each may be used singly or used in combination. The compound represented by general formula (3b) is used more preferably than the compound represented by general formula (3a) because higher surface lubricity is obtained. When they are used in combination, the mass ratio of the compound represented by general formula (3a) to the compound represented by general formula (3b) is preferably 1:1 to 1:30, and more preferably 1:1 to 1:10. With such a mass ratio, a surface-treating layer having an excellent balance between surface lubricity and friction durability can be obtained.

In one embodiment, the fluorine-containing oil contains one or more compounds represented by general formula (3b). In such an embodiment, the mass ratio of the total of the fluoro (poly) ether group-containing compound to the compounds represented by formula (3b) in the surface-treating agent is preferably 10:1 to 1:10, and more preferably 4:1 to 1:4.

In one embodiment, the average molecular weight of the compound represented by formula (3a) is preferably 2,000 to 8,000.

In one embodiment, the average molecular weight of the compound represented by formula (3b) is preferably 8,000 to 30,000.

In another embodiment, the average molecular weight of the compound represented by formula (3b) is preferably 3,000 to 8,000.

In a preferable embodiment, when the surface-treating layer is formed by a vacuum deposition method, the average molecular weight of the fluorine-containing oil may be greater than the average molecular weight of compound (α) and the average molecular weight of compound (β). With such average molecular weights, better friction durability and surface lubricity can be obtained.

From another viewpoint, the fluorine-containing oil may be a compound represented by general formula Rf³-F (wherein Rf³ is a C₅₋₁₆ perfluoroalkyl group). The fluorine-containing oil may be a chlorotrifluoroethylene oligomer. The compound represented by Rf³-F and the chlorotrifluoroethylene oligomer are preferable because high affinity with a compound represented by a fluorine-containing compound having a carbon-carbon unsaturated bond at a molecular end, which has a C₁₋₁₆ perfluoroalkyl group at an end, is obtained.

When the surface-treating agent of the present disclosure contains a (non-reactive) silicone compound (hereinafter referred to as "silicone oil") that can be interpreted as the above silicone oil (d), the surface lubricity of the surface-treating layer formed by using the surface-treating agent can be more increased.

For example, linear or cyclic silicone oil having 2,000 or less siloxane bonds can be used as the silicone oil. The linear silicone oil may be so-called straight silicone oil or modified silicone oil. Examples of the straight silicone oil include dimethyl silicone oil, methyl phenyl silicone oil, and methyl hydrogen silicone oil. Examples of the modified silicone oil include those obtained by modifying straight silicone oil with alkyl, aralkyl, polyether, higher fatty acid ester, fluoroalkyl, amino, epoxy, carboxyl, alcohol, or the like. Examples of the cyclic silicone oil include cyclic dimethylsiloxane oil.

In the surface-treating agent of the present disclosure, such silicone oil can be contained in an amount of, for example, 0 to 300 parts by mass and preferably 0 to 200 parts by mass based on total 100 parts by mass of the average molecular weight of compound (α) and compound (β) (in the case of two or more, the total thereof, and the same also applies below).

The surface-treating agent of the present disclosure may contain a catalyst, a solvent, an alcohol, a transition metal, a halide ion, and a compound containing an atom having an unshared electron pair within the molecular structure, as described above.

Examples of the catalyst include acids (such as acetic acid and trifluoroacetic acid), bases (such as ammonia, triethylamine, and diethylamine), and transition metals (such as Ti, Ni, and Sn).

The catalyst promotes hydrolysis and dehydration condensation of the silane compound and accelerates formation of the coating layer.

Examples of the transition metal include platinum, ruthenium, and rhodium.

Examples of the halide ion include a chloride ion.

The compound containing an atom having an unshared electron pair within the molecular structure preferably contains at least one atom selected from the group consisting of a nitrogen atom, an oxygen atom, a phosphorus atom, and a sulfur atom, and more preferably contains a sulfur atom or a nitrogen atom.

The compound containing an atom having an unshared electron pair within the molecular structure preferably contains at least one functional group selected from the group consisting of an amino group, an amide group, a sulfinyl group, a P=O group, a S=O group, and a sulfonyl group within the molecular structure, and more preferably contains at least one functional group selected from the group consisting of a P=O group and a S=O group.

The compound containing an atom having an unshared electron pair within the molecular structure is preferably at least one compound selected from the group consisting of an aliphatic amine compound, an aromatic amine compound, a phosphoric acid amide compound, an amide compound, a urea compound, and a sulfoxide compound, more preferably at least one compound selected from the group consisting of an aliphatic amine compound, aromatic amine, phosphoric acid amide, a urea compound, and a sulfoxide compound, particularly preferably at least one compound selected from the group consisting of a sulfoxide compound, an aliphatic amine compound, and an aromatic amine compound, and further preferably a sulfoxide compound.

Examples of the aliphatic amine compound include diethylamine and triethylamine. Examples of the aromatic amine compound include aniline and pyridine. Examples of the phosphoric acid amide compound include hexamethylphosphoramide. Examples of the amide compound include N,N-diethylacetamide, N,N-diethylformamide, N,N-dimethylacetamide, N-methylformamide, N,N-dimethylformamide, and N-methylpyrrolidone. Examples of the urea compound include tetramethylurea. Examples of the sulfoxide compound include dimethyl sulfoxide (DMSO), tetramethylene sulfoxide, methylphenyl sulfoxide, and diphenyl sulfoxide. Among these compounds, dimethyl sulfoxide or tetramethylene sulfoxide is preferably used.

Examples of the alcohol include alcohol compounds having 1 to 6 carbon atoms.

For example, the following solvents are used as the solvent: C₅₋₁₂ perfluoroaliphatic hydrocarbons (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin(R) AC-6000 manufactured by AGC Inc.), 1,1,2,2,3,3,4-heptafluorocyclopentane (such as Zeorora(R) H manufactured by Zeon Corporation; hydrofluorocarbons (HFCs) (such as 1,1,1,3,3-pentafluorobutane (HFC-365mfc)); hydrochlorofluorocarbons (such as HCFC-225 (Asahiklin(R) AK225)); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec (trade name) 7000 manufactured by Sumitomo 3M Limited), perfluorobutyl methyl ether (C₄F₉OCH₃) (such as Novec (trade name) 7100 manufactured by Sumitomo 3M Limited), perfluorobutyl ethyl ether (C₄F₉OC₂H₅) (such as Novec (trade name) 7200 manufactured by Sumitomo 3M Limited), and perfluorohexyl methyl ether (C₂F₅CF(OCH₃)C₃F₇) (such as Novec (trade name) 7300 manufactured by Sumitomo 3M Limited), alternatively CF₃CH₂OCF₂CHF₂ (such as Asahiklin (R) AE-3000 manufactured by AGC Inc.), and 1,2-dichloro-1,3,3,3-tetrafluoro-1-propene (such as Vertrel(R) Sion manufactured by DuPont-Mitsui. Fluorochemicals Co., Ltd.). One of these solvents may be used singly, or two or more may be combined and used as a mixture. Moreover, to control, for example, the solubility of the perfluoropolyether group-containing silane compound, another solvent may be mixed.

Examples of other components include, in addition to the above, tetraethoxysilane, methyltrimethoxysilane, 3-aminopropyltrimethoxysilane, 3-glycidoxypropyltrimethoxysilane, and methyltriacetoxysilane.

In the surface-treating agent of the present disclosure, the total concentration of compound (α) and compound (β) is preferably 0.001 to 1% by mass, more preferably 0.005 to 0.5% by mass, and further preferably 0.01 to 0.2% by mass.

The method of forming a film of the surface-treating agent on the substrate surface is not limited. For example, a wet coating method can be used.

Examples of the wet coating method include dip coating, spin coating, flow coating, spray coating, roll coating, gravure coating, and similar methods, and the wet coating method is preferably spray coating. The surface-treating agent containing compound α used in the method of the present disclosure unlikely causes clogging of the sprayer nozzle, and is thus suitable for spray coating.

Film formation is preferably carried out such that the surface-treating agent of the present disclosure coexists in the film with a catalyst for hydrolysis and dehydration condensation. Conveniently, in the case of a wet coating method, after the surface-treating agent of the present disclosure is diluted with a solvent, and immediately before the surface-treating agent is applied to the substrate surface, the catalyst may be added to the diluent of the surface-treating agent of the present disclosure.

From the viewpoint of the stability of the surface-treating agent and the volatility of solvents, the following solvents are preferably used to dilute the surface-treating agent: perfluoroaliphatic hydrocarbons having 5 to 12 carbon atoms (such as perfluorohexane, perfluoromethylcyclohexane, and perfluoro-1,3-dimethylcyclohexane); polyfluoroaromatic hydrocarbons (such as bis(trifluoromethyl)benzene); polyfluoroaliphatic hydrocarbons (such as C₆F₁₃CH₂CH₃ (such as Asahiklin(R) AC-6000, manufactured by AGC Inc., and 1,1,2,2,3,3,4-heptafluorocyclopentane (such as Zeorora(R) H manufactured by Zeon Corporation)); alkyl perfluoroalkyl ethers (the perfluoroalkyl group and the alkyl group may be linear or branched) such as hydrofluoroether (HFE) (such as perfluoropropylmethyl ether (C₃F₇OCH₃) (such as Novec (trade name) 7000 manufactured by Sumitomo 3M Limited), perfluorobutyl methyl ether (C₄F₉OCH₃) (such as Novec (trade name) 7100 manufactured by Sumitomo 3M Limited), perfluorobutyl ethyl ether (C₄F₉OC₂H₅) (such as Novec (trade name) 7200 manufactured by Sumitomo 3M Limited), and perfluorohexyl methyl ether (C₂F₅CF(OCH₃)C₃F₇) (such as Novec (trade name) 7300 manufactured by Sumitomo 3M Limited), and alternatively CF₃CH₂OCF₂CHF₂ (such as Asahiklin(R) AE-3000 manufactured by AGC Inc.). One of these solvents may be used singly, or two or more may be used as a mixture. In particular, hydrofluoroether is preferable, and perfluorobutyl methyl ether (C₄F₉OCH₃) and/or perfluorobutyl ethyl ether (C₄F₉OC₂H₅) is particularly preferable. The dilution solvent may be recovered and reused. For example, the treatment apparatus is configured to be a closed system, and only the solvent, which is a volatile component, can be recovered by a condenser, a distillator, or the like.

Any suitable acid or base can be used as a catalyst. For example, acetic acid, formic acid, and trifluoroacetic acid can be used as acid catalysts. For example, ammonia and organic amines can be used as base catalysts.

The post-treatment is, for example, a heat treatment. The temperature of the heat treatment is not limited, and may be, for example, 60 to 250°C, and preferably 100°C to 180°C. The time of the heat treatment is not limited, and may be, for example, 30 minutes to 5 hours, and preferably 1 to 3 hours.

The post-treatment may be, for example, a treatment in which water feeding and drying/heating are sequentially performed, and, more specifically, may be performed as follows.

The post-treatment is not an essential step, and the post-treatment may not be performed. When no post-treatment is performed, a film of the surface-treating agent, after being formed, is preferably left to stand still for 8 hours or more, preferably 12 hours or more, and more preferably 15 hours or more. The temperature when being left to stand still may be room temperature and is, for example, 20 to 35°C.

After forming a film of the surface-treating agent of the present disclosure on the substrate surface as described above, water is fed to this film (hereinafter also referred to as a "precursor layer"). The method of feeding water is not limited, and, for example, methods such as dew condensation resulting from a temperature difference between the precursor layer (and the substrate) and the ambient atmosphere, or spraying of water vapor (steam), may be used.

It is thought that when water is fed to the precursor layer, water acts on the hydrolyzable group bonded to Si of the fluoro(poly)ether group-containing silane compound in the surface-treating agent of the present disclosure, thus enabling the compound to be promptly hydrolyzed.

The feeding of water may be performed in an atmosphere at, for example, 0 to 250°C, preferably 60°C or higher and more preferably 100°C or higher, and preferably 180°C or lower and more preferably 150°C or lower. Feeding water in such a temperature range can cause hydrolysis to proceed. The pressure at this time is not limited and, conveniently, may be normal pressure.

Next, the precursor layer is heated on the substrate surface in a drying atmosphere exceeding 60°C. The drying/heating method is not limited, and the precursor layer together with the substrate may be placed in an atmosphere having a temperature that exceeds 60°C and preferably exceeds 100°C and is, for example, 250°C or lower and preferably 180°C or lower, and having an unsaturated water vapor pressure. The pressure at this time is not limited and, conveniently, may be normal pressure.

In such an atmosphere, between the compounds, groups bonded to Si after being hydrolyzed are promptly dehydratively condensed. Also, between the substrate and the compounds, the group bonded to Si after hydrolysis of the compound and the reactive group present on the substrate surface promptly react, and dehydratively condense when the reactive group present on the substrate surface is a hydroxyl group. As a result, a bond is formed between the compounds and, also, a bond is formed between the compounds and the substrate.

The above water feeding and drying/heating may be continuously performed by using superheated steam.

Superheated steam is a gas obtained by heating saturated steam to a temperature higher than the boiling point and is, under normal pressure, a gas having an unsaturated water vapor pressure by being heated to a temperature that exceeds 100°C and is generally 250°C or lower, for example, 180°C or lower, and that exceeds the boiling point. When the substrate on which the precursor layer is formed is exposed to superheated steam, first, dew condensation occurs on the surface of the precursor layer due to the temperature difference between the superheated steam and the relatively low temperature precursor layer, and accordingly water is fed to the precursor layer. Eventually, as the temperature difference between the superheated steam and the precursor layer decreases, water on the surface of the precursor layer vaporizes in a drying atmosphere created by the superheated steam, and the amount of water on the surface of the precursor layer gradually decreases. While the amount of water on the surface of the precursor layer decreases, or that is to say, while the precursor layer is in a drying atmosphere, the precursor layer on the substrate surface is brought into contact with the superheated steam and is thus heated to the temperature of the superheated steam (a temperature exceeding 100°C under normal pressure). Accordingly, the use of the superheated steam enables water feeding and drying/heating to be continuously performed merely by exposing the substrate, on which the precursor layer is formed, to superheated steam.

The post-treatment can be performed as described above. Note that, while the post-treatment is performed to increase the durability of the surface-treating layer, the post-treatment is not essential to the production of the article of the present disclosure. For example, the surface-treating agent of the present disclosure after being applied to the substrate surface may be left to stand still as-is.

Thus, an article is formed that contains a substrate and a layer on a surface of the substrate, the layer formed of a surface-treating agent containing a polyether group-containing silane compound.

The thickness of the surface-treating layer is not limited. Preferably, the thickness of the surface-treating layer in the case of an optical member is in the range of 1 to 50 nm, preferably 1 to 30 nm, and more preferably 1 to 15 nm, from the viewpoint of optical performance, surface lubricity, friction durability, and antifouling properties.

The present disclosure also provides an article having a surface-treating layer produced by the production method of the present disclosure.

The article of the present disclosure comprises a substrate and a layer on a surface of the substrate, the layer formed of a surface-treating agent comprising a polyether group-containing silane compound. The surface-treating layer of the article obtained by the production method of the present disclosure has, in addition to excellent weather resistance and UV resistance, sufficient oil-repellency, lubricity, friction durability, and chemical resistance such as salt water resistance.

Accordingly, the article of the present disclosure is useful for applications where abrasion resistance, water-repellency, and antifouling properties need to be maintained even after long-term outdoor use under severe environmental conditions involving, for example, wind and rain as well as attachment of contaminants.

In a preferable embodiment, the article of the present disclosure is useful for glass, especially glass for buildings, glass or mirror glass for vehicles, vessels, aircrafts, or the like, such as glass for automobiles, door mirror for automobiles, or fender mirror for automobiles, or glass for use in on-board cameras.

### Examples

Next, the present disclosure will now be described by way of Examples, but the present disclosure is not limited only to the Examples. In the Examples, all chemical formulae shown below indicate average compositional features, and the occurrence order of repeating units (such as (CF₂CF₂CF₂O), (CF₂CF₂O), and (CF₂O)) constituting perfluoropolyether is arbitrary.

### Synthetic Example 1

The following compound (A) was synthesized in accordance with the method described in Patent Literature 1. Product (A) obtained by the synthesis contained the following compounds (B) to (I).

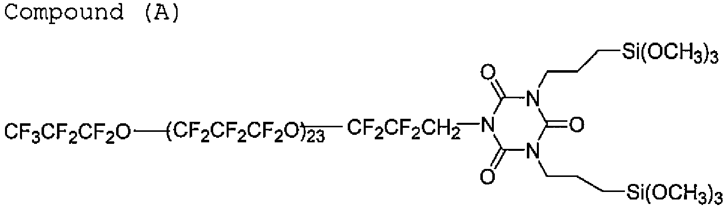

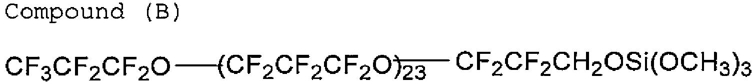

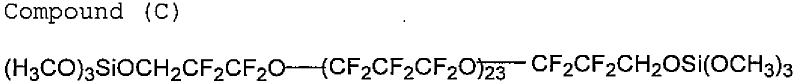

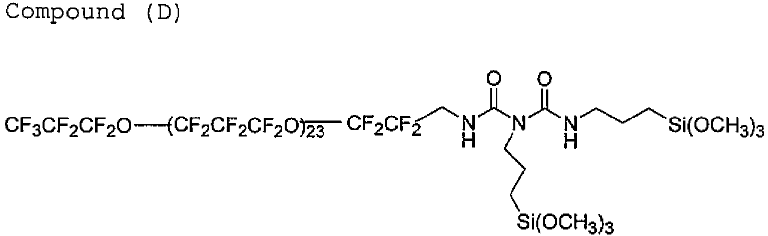

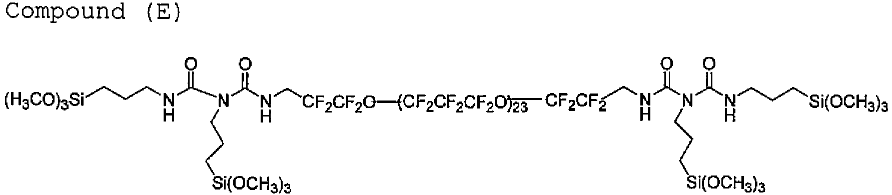

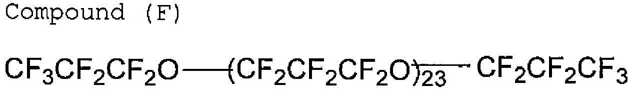

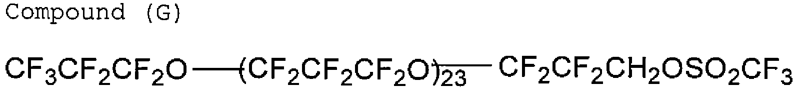

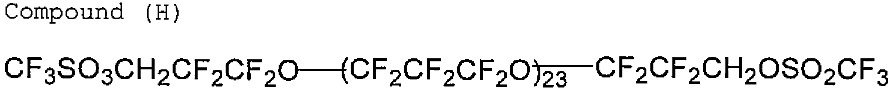

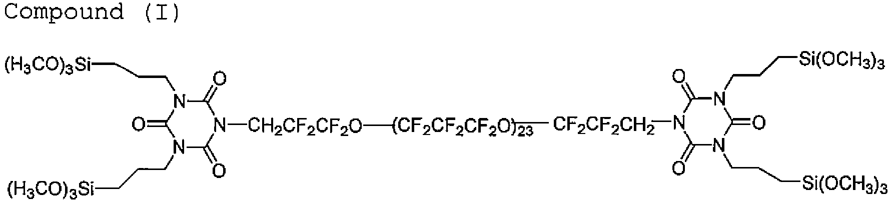

As for the compositional feature (molar ratio) of product (A), compound (A) was 61%, compound (B) was 2%, compound (D) was 2%, compound (E) was 2%, compound (F) was 20%, and compound (I) was 13%.

Product (A) obtained in Synthetic Example 1 was dissolved in hydrofluoroether (Novec HFE 7200, manufactured by 3M) such that the concentration of product (A) was 0.1 wt%, and the solution was regarded as chemical solution (A).

### (Synthetic Example 2)

Next, a purification step was also performed in accordance with the method described in International Publication No. WO 2018/056410, and thus the following product (B) containing compound (A) as a main component was synthesized. As for the compositional features (molar ratio) of product (B), compound (A) was 91%, compound (B) was 4%, and compound (D) was 5%.

Product (B) obtained in Synthetic Example 2 was dissolved in hydrofluoroether (Novec HFE 7200, manufactured by 3M) such that the concentration of product (B) was 0.1 wt%, and the solution was regarded as chemical solution (B).

### Synthetic Example 3

Next, PFPE-containing compound (C) containing the following compound (J) as a main component was synthesized in accordance with the method described in International Publication No. WO 2018/056410.

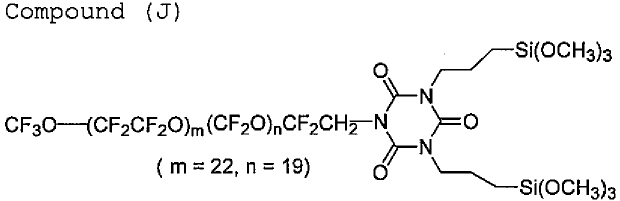

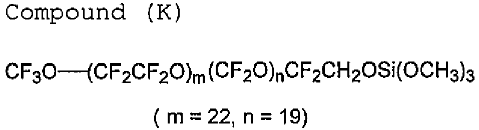

As for the compositional feature (molar ratio) of PFPE-containing compound (C), compound (J) was 95%, and compound (K) was 5%.

PFPE-containing compound (C) obtained in Synthesis Example 3 was dissolved in hydrofluoroether (Novec HFE 7200, manufactured by 3M) such that the concentration was 0.1 wt%, and the solution was regarded as chemical solution (C).

### Control compound reagent (D)

The following compound (L) as a control compound was dissolved in hydrofluoroether (Novec HFE 7200, manufactured by 3M) such that the concentration was 0.1 wt%, and the solution was regarded as chemical solution (D).

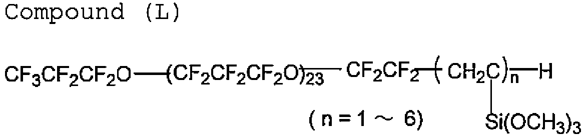

### Control compound reagent (E)

The following compound (M) as a control compound was dissolved in hydrofluoroether (Novec HFE 7200, manufactured by 3M) such that the concentration was 0.1 wt%, and the solution was regarded as chemical solution (E).

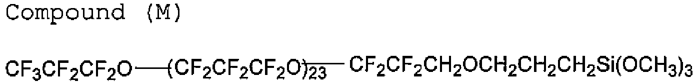

### Control compound reagent (F)

The following compound (N) as a control compound was dissolved in hydrofluoroether (Novec HFE 7200, manufactured by 3M) such that the concentration was 0.1 wt%, and the solution was regarded as chemical solution (F).

Compound (N) CF₃CF₂CF₂CF₂CF₂CF₂CH₂CH₂Si(OCH₃)₃

### Example 1

### • Formation of water-repelling substrate 1

The top surface of a float glass (clear) substrate (planar dimension 70 mm × 150 mm) having a thickness of 2.0 mm was cleaned with water and alcohol and then dried to obtain substrate 1 for forming a water-repelling layer.

### Atmospheric pressure plasma cleaning

Using an atmospheric pressure plasma discharge apparatus (Si-Plasma^{R}, manufactured by Creating Nano Tech., Inc.), an atmospheric pressure plasma treatment was performed on the top surface of substrate 1 under the following conditions for cleaning and activation.

### <Gas conditions>

Discharge gas: Argon gas (Ar), Reactive gas: Oxygen gas (O₂)

### <Plasma irradiation conditions>

Plasma power: 744 W (output control in the range of 740 to 750 W)
Ar flow: 34 L/min (flow control at 30 to 40 L/min)
O₂ flow: 34 L/min (flow control at 30 to 40 L/min)
PCW (cooling water): 2.6 L/min (flow control at 2.0 to 3.0 L/min)
Plasma irradiation was performed, with the distance between the plasma irradiated surface and the top surface of the substrate being within the range of 0.5 to 3.0 mm.

### • Formation of water-repelling layer

Subsequently, using a commercially available spray coater equipped with two fluid nozzles immediately, chemical solution (A) prepared above was uniformly spray-coated onto the substrate surface at a head speed of 70 mm/sec. The amount of chemical solution (A) coated was 50 g per unit m² of the substrate. Then, the substrate was taken out and left to stand still in air at room temperature for 24 hours, and thus water-repelling substrate 1 was obtained.

### Example 2

### • Formation of water-repelling substrate 2

Water-repelling substrate 2 was obtained in the same manner as in Example 1 except that chemical solution (A), in which trifluoroacetic acid was added in a proportion of 100 wt ppm to PFPE-containing compound (A), was spray-coated.

### Example 3

### • Formation of water-repelling substrate 3

Water-repelling substrate 3 was obtained in the same manner as in Example 1 except that chemical solution (B) was used in place of chemical solution (A).

### Example 4

### • Formation of water-repelling substrate 4

Water-repelling substrate 4 was obtained in the same manner as in Example 1 except that chemical solution (C) was used in place of chemical solution (A).

### Comparative Example 1

### • Formation of water-repelling substrate 5

Water-repelling substrate 5 was obtained in the same manner as in Example 1 except that chemical solution (D) was used in place of chemical solution (A).

### Comparative Example 2

### • Formation of water-repelling substrate 6

Water-repelling substrate 6 was obtained in the same manner as in Example 1 except that chemical solution (E) was used in place of chemical solution (A).

### Comparative Example 3

### • Formation of water-repelling substrate 7

Water-repelling substrate 7 was obtained in the same manner as in Example 1 except that chemical solution (F) was used in place of chemical solution (A), trifluoroacetic acid was added in a proportion of 100 wt ppm to compound (N), and the mixture was spray-coated.

The resulting each substrate (water-repelling substrates 1 to 7) was evaluated as follows.

### <Initial properties>

### (Test Example 1)

### • Measurement of static water contact angle

The static water contact angle was measured by the following method using a fully automatic contact angle meter DropMaster 700 (manufactured by Kyowa Interface Science Co., Ltd.). The static water contact angle was obtained by dripping 2 µL of water from a microsyringe onto a horizontally placed substrate and taking a still image with a video microscope 1 second after the dripping. Concerning the measured value of the static water contact angle, five different points on the surface-treating layer of the substrate were measured, and the average value thereof was calculated and used. The initial values of water-repelling substrates 1 to 7 were measured, and the results are shown in Table 3.

### (Test Example 2)

### • Measurement of dynamic water contact angle (slidability)

Measurement was made by the following method using the same apparatus as in Test Example 1. From a microsyringe 20 µL of water was dripped onto a horizontally placed substrate, and, while tilting the substrate at an inclination angle of 1.6 degrees/sec, the angle immediately after water began sliding was measured. Concerning the measured value of the dynamic water contact angle, three different points on the surface-treating layer of the substrate were measured, and the average value thereof was calculated and used. The results of measurement concerning water-repelling substrates 1 to 7 are shown in Table 3.

### Test Example 3

### • Surface lubricity evaluation (measurement of coefficient of dynamic friction (COF))

The coefficient of dynamic friction of the surface-treating layers formed on the surfaces of water-repelling substrates 1 to 7 was measured. Specifically, the coefficient of dynamic friction (-) was measured in accordance with ASTM D 4917 using a surface property analyzer (FPT-1, manufactured by Labthink Instruments Co., Ltd.) and paper as a friction block. Specifically, a substrate provided with a surface-treating layer was horizontally placed, friction paper (2 cm × 2 cm) was brought into contact with the exposed upper surface of the surface-treating layer, a load of 200 gf was applied thereto, and then the coefficient of dynamic friction was measured while parallelly moving the friction paper at a speed of 500 mm/sec under load. The results are shown in Table 3.

### (Test Example 4)

### • Measurement of haze

The haze and the average transmittance of water-repelling substrates 1 to 7 were measured. Specifically, 3 different points on a substrate were measured by a method in accordance with ASTM using a haze meter (HAZE-GARD II, manufactured by Toyo Seiki Seisaku-sho, Ltd.), and the average value thereof was calculated and used. The measurement results are shown in Table 3.

### (Test Example 5)

### • Measurement of average transmittance (%)

The average transmittance of water-repelling substrates 1 to 7 was measured. Specifically, 3 different points on a substrate were measured using a Hitachi spectrophotometer U-4100 (manufactured by Hitachi High-Tech Science Corporation), and the average value thereof was calculated and used. The average transmittance in the visible light region as referred to herein is defined as the average of transmittance in the visible light region from 400 to 700 nm obtained by accumulating each transmittance in the visible light region measured at least every 5 nm and taking an average. The measurement results are shown in Table 3.

Table 3 below shows the results of evaluating the initial properties of water-repelling substrates 1 to 7.

**[Table 3]**

| | Water-repell ing substr ate | Static water contact angle | Dynamic water contact angle | Coeffici ent of dynamic friction | Haze | Average transmi ttance |
|---|---|---|---|---|---|---|
| | | (degree) | (degree) | (-) | (%) | (%) |
| Example 1 | 1 | 114 | 9 | 0.07 | 0.26 | 92.6 |
| Example 2 | 2 | 115 | 9 | 0.07 | 0.25 | 92.7 |
| Example 3 | 3 | 115 | 8 | 0.07 | 0.18 | 93.0 |
| Example 4 | 4 | 115 | 8 | 0.03 | 0.24 | 92.9 |
| Comparative Example 1 | 5 | 115 | 9 | 0.07 | 0.34 | 92.4 |
| Comparative Example 2 | 6 | 114 | 10 | 0.07 | 0.41 | 91.9 |
| Comparative Example 3 | 7 | 106 | Did not slide | 0.20 | 0.53 | 91.6 |

### (Test Example 6)

### • Salt water resistance evaluation

A salt water spraying test was performed on water-repelling substrates 1 to 7. Specifically, each substrate was secured to the inside of a combined cycle tester CYP-90Z (Suga Test Instruments Co., Ltd.), the chamber was maintained at a constant temperature of 47°C, 5 wt% of salt water (a solution obtained by diluting primary sodium chloride in pure water) was sprayed in a mist form at a spray pressure of less than 0.1 MPaG, and the substrate was maintained. Every 100 hours from the beginning, the substrate was taken out, the entirety of the substrate was rinsed with pure water, then the surface-treating layer was wiped back and forth five times with Kimwipe (trade name, manufactured by Jujo Kimberly Co., Ltd.) sufficiently soaked with pure water, then wiped back and forth five times with another piece of Kimwipe sufficiently soaked with ethanol, and dried. Immediately thereafter, the static water contact angle was measured. The test was eventually continued to 900 hours, and table 4 shows the cumulative salt water spraying time when the contact angle of each substrate eventually exceeded 100 degrees and, also, the cumulative salt water spraying time when the angle eventually exceeded 80 degrees.

### (Test Example 7)

### • Steel wool (SW) friction durability evaluation

The steel wool friction durability of water-repelling substrates 1 to 7 was evaluated. Specifically, a substrate provided with a surface-treating layer was horizontally placed, steel wool (size #0000, dimension 5 mm × 10 mm × 10 mm) was brought into contact with the surface-treating layer of the substrate, a load of 1,000 gf was applied thereto, and, thereafter, with the load being applied, the steel wool was moved back and forth at a speed of 140 mm/sec. The static water contact angle (degree) was measured every 2000 round trips, and the evaluation was discontinued when the measured contact angle was less than 100 degrees. The number of round trips when the contact angle eventually exceeded 100 degrees is shown in Table 4. (The symbol "-" in the table means not measured).

### Test Example 8

### • Evaluation of accelerated weather resistance

An accelerated weather resistance test was performed on water-repelling substrates 1 to 7. The accelerated weather resistance test is a test involving UVB irradiation as follows. For UVB irradiation, a UVB-313 lamp (manufactured by Q-Lab, irradiance 0.63 W/m² at 310 nm) was used, the distance between the lamp and the surface-treating layer of the substrate was 5 cm, and the temperature of the plate on which the substrate was placed was 63°C. While UVB irradiation was continuously performed, the substrate was temporarily taken out when measuring the static water contact angle, and the surface-treating layer after being irradiated with UVB for a predetermined time was wiped back and forth five times with Kimwipe (trade name, manufactured by Jujo Kimberly Co., Ltd.) sufficiently soaked with pure water, then wiped back and forth five times with another piece of Kimwipe sufficiently soaked with ethanol, and dried. Immediately thereafter, the static water contact angle was measured. Evaluations were made every 24 hours from the beginning of UVB irradiation until the static water contact angle became smaller than 90 degrees. Table 4 shows the cumulative UVB irradiation time when the contact angle eventually exceeded 90 degrees.

Table 4 below shows the evaluation results of Test Examples 6 to 8 of water-repelling substrates 1 to 7.

**[Table 4]**

| | Water-repelling substrate | Salt water resistance (time) | | SW Friction durability | Accelerated weather resistance |
|---|---|---|---|---|---|
| | | Contact angle > 100 degrees | Contact angle > 80 degrees | (number of times) | (time) |
| Example 1 | 1 | 528 | 648 | 6000 | 576 |
| Example 2 | 2 | 576 | 672 | 8000 | 600 |
| Example 3 | 3 | 648 | 792 | 12000 | 672 |
| Example 4 | 4 | 504 | 624 | 14000 | 528 |
| Comparative Example 1 | 5 | 216 | 288 | 6000 | 96 |
| Comparative Example 2 | 6 | 120 | 192 | < 2000 | 72 |
| Comparative Example 3 | 7 | 72 | 144 | < 100 | 168 |

### (Test Example 9)

### • Evaluation of weather resistance (outdoor exposure test)

An outdoor exposure test was performed on water-repelling substrates 1 to 7. Specifically, in accordance with JIS Z 2381, an exposure test site was set up on the roof of a building in Settsu City, Osaka Prefecture, 3 pieces of each substrate were securely placed so as to have an elevation angle of 30 degrees facing south, the initial contact angle was measured, and then the substrate was taken out every two weeks from the beginning to measure the contact angle. Concerning the measurement method of the substrate taken out, the surface-treating layer was wiped back and forth five times with Kimwipe (trade name, manufactured by Jujo Kimberly Co., Ltd.) sufficiently soaked with pure water, then wiped back and forth five times with another piece of Kimwipe sufficiently soaked with ethanol, and dried. Immediately thereafter, the static water contact angle was measured, and the average of the measurements of 3 pieces of each substrate was calculated and used. While the evaluation period continued for 46 weeks from the beginning, the evaluation period was terminated when a substrate had a static water contact angle less than 80 degrees. The measurement results are shown in Table 5 and Figure 1.

Table 5 below shows the evaluation results of Test Example 9 of water-repelling substrates 1 to 7. Figure 1 shows the evaluation results of Test Example 9 of water-repelling substrates 1 to 7.

**[Table 5]**

| | Static water contact angle (degree) | | | | | | |
|---|---|---|---|---|---|---|---|
| Outd oor expo sure peri od | Example 1 | Example 2 | Example 3 | Example 4 | Compar ative Example 1 | Compar ative Example 2 | Compar ative Example 3 |
| (week) | Water - repel ling subst rate 1 | Water - repel ling subst rate 2 | Water - repel ling subst rate 3 | Water - repel ling subst rate 4 | Water-repell ing substr ate 5 | Water-repell ing substr ate 6 | Water-repell ing substr ate 7 |
| 0 | 114 | 115 | 115 | 115 | 115 | 114 | 106 |
| 2 | 114 | 114 | 115 | 114 | 114 | 113 | 105 |
| 4 | 114 | 115 | 114 | 115 | 112 | 110 | 104 |
| 6 | 113 | 114 | 114 | 114 | 111 | 104 | 102 |
| 8 | 113 | 114 | 115 | 113 | 109 | 95 | 101 |
| 10 | 112 | 113 | 114 | 113 | 106 | 82 | 98 |
| 12 | 111 | 112 | 115 | 113 | 103 | 75 | 95 |
| 14 | 110 | 112 | 115 | 112 | 100 | | 92 |
| 16 | 109 | 111 | 114 | 111 | 95 | | 89 |
| 18 | 108 | 110 | 114 | 110 | 90 | | 86 |
| 20 | 107 | 109 | 114 | 110 | 81 | | 84 |
| 22 | 105 | 108 | 114 | 108 | 76 | | 81 |
| 24 | 103 | 106 | 113 | 107 | | | 78 |
| 26 | 101 | 103 | 113 | 106 | | | |
| 28 | 98 | 101 | 112 | 104 | | | |
| 30 | 94 | 99 | 111 | 102 | | | |
| 32 | 90 | 95 | 110 | 100 | | | |
| 34 | 87 | 90 | 108 | 97 | | | |
| 36 | 82 | 86 | 105 | 94 | | | |
| 38 | 77 | 81 | 102 | 90 | | | |
| 40 | 72 | 77 | 101 | 85 | | | |
| 42 | | | 97 | 81 | | | |
| 44 | | | 94 | 74 | | | |
| 46 | | | 90 | | | | |

As can be understood from the results of Table 3, it was demonstrated that substrates (Examples 1 to 4) treated with a surface-treating agent having a composition containing a perfluoropolyether group-containing silane compound (compound (α)) obtained in Synthetic Examples 1 to 3 of the present disclosure have excellent water-repellency, water slidability, surface lubricity, haze, and transmission. Moreover, as can be understood from the results of Tables 4 and 5 and Figure 1, it was demonstrated that the substrates of Examples 1 to 4 show excellent salt water resistance, friction durability, UV resistance, and weather resistance. That is to say, it was confirmed that these substrates can maintain water-repellency and antifouling properties for a long period of time. On the other hand, surface-treating agents (Comparative Examples 1 to 3) having a composition containing another fluorine-containing silane compound in place of compound α had inferior haze, transmission, salt water resistance, friction durability, and weather resistance to those of the substrates of Examples 1 to 4. Moreover, in Comparative Example 3, slidability and surface lubricity were also inferior. Accordingly, the treated substrate according to the present disclosure is suitably used as a substrate for glass, such as glass or mirror glass for vehicles, vessels, air crafts, or the like, e.g., automobile glass, automobile door mirrors, or automobile fender mirrors, glass for use in on-board cameras, glass for buildings, outdoor display glass, and other outdoor applications.

### Industrial Applicability

The production method of the present disclosure is suitably used to produce an article that is mainly used in an outdoor environment, and the article of the present disclosure is particularly suitable for outdoor use.

## Claims

1. A method of producing an article comprising a substrate and, on a surface of the substrate, a layer of a surface-treating agent comprising a polyether group-containing silane compound of the formula (α1): 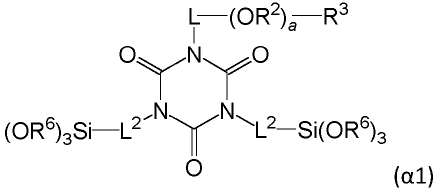 wherein:
R³ is C₁₋₆-perfluoroalkyl,
L is a single bond or -(CX¹²¹X¹²²)ₒ-(CX¹²³X¹²⁴)_{q}- wherein X¹²¹-X¹²⁴ each independently are H or F, o is an integer of 0-10, and q is an integer of 1-10,
(OR²)ₐ is a polyether chain of the formula:
-(OCF₂CF₂CF₂) ₘ₁₄-
wherein m14 is an integer of 1-200; or of the formula:
-(OCF₂CF₂CF₂CF₂)ₘ₁₃-(OCF₂CF₂CF₂)ₘ₁₄-(OCF₂CF₂)ₘ₁₅-(OCF₂)ₘ₁₆-
wherein m13 and m14 are each an integer of 0-30, and m15 and m16 are each an integer of 1-200; and (m13+m14+m15+m16) is ≥ 5; and the order of each repeating unit is arbitrary,
L² each independently is -CH₂-, -C₂H₄-, -C₃H₆-, or -C₄H₈-, and
R⁶ each independently is C₁₋₄-alkyl,
which method comprises applying the surface-treating agent to the surface of the substrate by a wet coating method,
wherein the substrate is subjected to an atmospheric pressure plasma treatment before applying the surface-treating agent to the surface of the substrate, and
wherein the flow ratio of discharge gas to reactive gas used in the atmospheric pressure plasma treatment is 1:5 to 5:1.

2. The method of claim 1, wherein the wet coating method is selected from dip coating, spin coating, flow coating, spray coating, roll coating, and gravure coating.

3. The method of claim 1 or 2, wherein the wet coating method is spray coating.

4. The method of any of claims 1-3, wherein the discharge gas used in the atmospheric pressure plasma treatment is argon or nitrogen.

5. The method of any of claims 1-4, wherein the reactive gas used in the atmospheric pressure plasma treatment is oxygen.

6. The method of any of claims 1-5, wherein the output of the atmospheric pressure plasma treatment is 700-800 W.

7. The method of any of claims 1-6, wherein the surface-treating agent further comprises a fluoropolyether group-containing silane compound of any of the formulae (A1), (A2), (B1), (B2), (C1), (C2), (D1), (D2) and (E1): 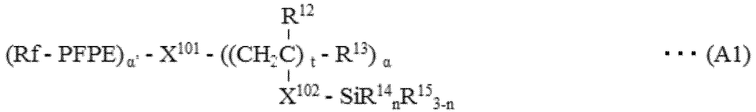 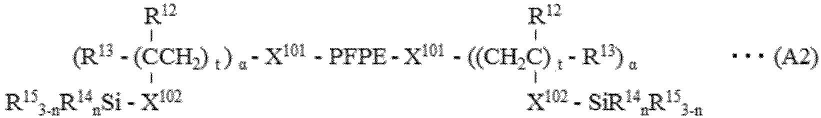
wherein, each independently at each occurrence,
Rf is C₁₋₁₆-alkyl optionally substituted with one or more F;
PFPE is -(OC₆F₁₂)*ₐ₁*-(OC₅F₁₀)*_{b1}*-(OC₄F₈)*_{c1}*-(OC₃F₆)*_{d1}*-(OC₂F₄)*ₑ₁*-(OCF₂)*_{f1}*-
wherein *a1, b1, c1, d1* and *e1* are each independently an integer of 0-200 and (*a*1*+b*1*+c*1*+d*1*+e*1*+f*1), *f1* is an integer of 1-200, and the order of the respective repeating units in parenthesis with the indices *a1-f1* is not limited;
R¹² is H or lower alkyl;
R¹³ is H or halogen;
R¹⁴ is H or C₁₋₂₂-alkyl;
R¹⁵ is OH or a hydrolyzable group;
*n* is an integer of 0-3 in each (-SiR¹⁴ₙR¹⁵₃₋ₙ) unit; provided that at least one
R¹⁵ is present in the molecule;
X¹⁰¹ is a single bond or a di- to decavalent organic group;
X¹⁰² is a single bond or a divalent organic group;
t is an integer of 1-10;
α is an integer of 1-9; and
α' is an integer of 1-9;
(Rf- PFPE) _{β'} - X¹⁰⁵ - (SiR¹⁴ₙR¹⁵_{3-n) β} ··· (B1)
(R¹⁵₃₋ₙR¹⁴ₙSi) _{β} - X¹⁰⁵ - PFPE - X¹⁰⁵ - (SiR¹⁴ₙR¹⁵₃₋ₙ) _{β} ··· (B2)
wherein Rf, PFPE, R¹⁴, R¹⁵ and *n* are as defined for formulae (A1) and (A2) and, each independently at each occurrence,
X¹⁰⁵ is a single bond or a di- to decavalent organic group;
β is an integer of 1-9;
β' is an integer of 1-9;
(Rf - PFPE)_{γ'} - X¹⁰⁷ - (SiR^{a3}ₖR^{b3}ₗR^{c3}ₘ) _{γ} ··· (C1)
(R^{c3}ₘR^{b3}ₗR^{a3}ₖ^{Si}) _{γ} - X¹⁰⁷ - PFPE - X¹⁰⁷ - (SiR^{a3}ₖR^{b3}ₗR^{c3}ₘ) _{γ} ··· (C2)
wherein Rf and PFPE are as defined for formulae (A1) and (A2) and, each independently at each occurrence,
X¹⁰⁷ is a single bond or a di- to decavalent organic group;
γ is an integer of 1-9;
γ' is an integer of 1-9;
Ra₃ is -Z³-SiR⁷¹*ₚ*R⁷²*_{q}*R⁷³*ᵣ* wherein, each independently at each occurrence,
Z³ is -O- or a divalent organic group;
R⁷¹ has the same meaning as R^{a3};
the number of Si atoms linearly linked via a Z³ group in R^{a3} is ≤ 5;
R⁷² is OH or a hydrolyzable group;
R⁷³ is H or lower alkyl;
*p* is an integer of 0-3;
*q* is an integer of 0-3;
*r* is an integer of 0- 3;
provided that in each -Z³-SiR⁷¹*ₚ*R⁷²*_{q}*R⁷³*ᵣ* (*p+q+r*) *=* 3 and at least one R⁷² is present in formulae (C1) and (C2);
R^{b3} is OH or a hydrolyzable group;
R^{c3} is H or lower alkyl;
*k* is an integer of 1-3;
*l* is an integer of 0-2;
*m* is an integer of 0-2;
provided that, in the unit in parentheses with y, (*k+l+m*) = 3;
(Rf - PFPE) _{δ'} - X¹⁰⁹ - (CR^{d3}_{k'}R^{e3}_{l'}R^{f3}_{m'}) _{δ} ··· (D1)
(R^{f3}_{m'}R^{e3}_{l'}R^{d3}_{k'}C) _{δ} - X¹⁰⁹ - PFPE - X¹⁰⁹ - (CR^{d3}_{k'}R^{e3}_{l'}R^{f3}_{m'}) _{δ} ··· (D2)
wherein Rf and PFPE are as defined for formulae (A1) and (A2) and, each independently at each occurrence,
X¹⁰⁹ is a single bond or a di- to decavalent organic group;
δ is an integer of 1-9;
δ' is an integer of 1-9;
R^{d3} is -Z³'-CR⁸¹_{*p*'}R⁸²_{*q*'}R⁸³_{*r*'} wherein, each independently at each occurrence,
Z^{3'} is -O- or a divalent organic group;
R⁸¹ has the same meaning as R^{d3};
the number of C atoms linearly linked via a Z^{3'} group in R^{d3} is ≤ 5;
R⁸² is -Y³-SiR⁸⁵*ⱼ*R⁸⁶_{3-*j*} wherein, each independently at each occurrence,
Y³ is a divalent organic group;
R⁸⁵ is OH or a hydrolyzable group;
R⁸⁶ is H or lower alkyl; and
j is an integer of 1-3 in each (-Y³-SiR⁸⁵*ⱼ*R⁸⁶_{3-*j*}) unit;
R⁸³ is H, OH or lower alkyl;
*p*' is an integer of 0-3;
*q'* is an integer of 0-3;
*r'* is an integer of 0-3;
R^{e3} is **-**Y³-SiR⁸⁵*ⱼ*R⁸⁶_{3-*j*};
R^{f3} is H, OH or lower alkyl;
*k'* is an integer of 0-3;
l' is an integer of 0-3;
*m'* is an integer of 0-3;
provided that at least one *q*' is 2 or 3 or at least one *l*' is 2 or 3;
(Rf - PFPE - G⁵) ₐ₅ - Z⁵ - ((O - R¹⁶) _{c5} - SiR¹⁴ₙR¹⁵₃₋ₙ) _{b5} ··· (E1)
wherein Rf, PFPE, R¹⁴, R¹⁵ and *n* are as defined for formulae (A1) and (A2) and
G⁵ is -R¹⁷-O-, -R¹⁷-CONH-, -CONH-, or a single bond;
R¹⁷ is an alkylene group;
Z⁵ is an (*a5*+*b5*)-valent hydrocarbon group or an (*a5*+*b5*)-valent group having ≥ 2 carbon atoms and having at least one etheric oxygen atom between carbon atoms in the hydrocarbon group;
R¹⁶ is alkylene;
*a5* is an integer of ≥ 1;
*b5* is an integer of ≥ 1;
provided that (*a5+b5*) is ≥ 3; and
*c5* is 0 or 1.

8. The method of any of claims 1-7, wherein the surface-treating agent further comprises a fluoropolyether group-containing silane compound having an OCF₂ unit.

9. The method of any of claims 1-8, wherein the substrate is a glass substrate.

10. The method of any of claims 1-9, wherein the article is glass for outdoor use, preferably automotive glass.

11. An article comprising a substrate and, on a surface of the substrate, a layer formed of a surface-treating agent comprising a polyether group-containing silane compound of the formula (α1): 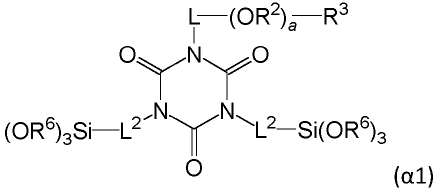 wherein:
R³ is C₁₋₆-perfluoroalkyl,
L is a single bond or -(CX¹²¹X¹²²)ₒ-(CX¹²³X¹²⁴)_{q}- wherein X¹²¹-X¹²⁴ each independently are H or F, o is an integer of 0-10, and q is an integer of 1-10,
(OR²)ₐ is a polyether chain of the formula: -(OCF₂CF₂CF₂) ₘ₁₄-wherein m14 is an integer of 1-200; or of the formula: -(OCF₂CF₂CF₂CF₂)ₘ₁₃-(OCF₂CF₂CF₂)ₘ₁₄-(OCF₂CF₂)ₘ₁₅-(OCF₂)ₘ₁₆-wherein m13 and m14 are each an integer of 0-30, and m15 and m16 are each an integer of 1-200; and (m13+m14+m15+m16) is ≥ 5; and the order of each repeating unit is arbitrary,
L² each independently is -CH₂-, -C₂H₄-, -C₃H₆-, or -C₄H₈-, and
R⁶ each independently is C₁₋₄-alkyl,
wherein the layer is formed by a wet coating method.

12. The article of claim 11, which is an article for outdoor use, preferably for a vehicle, a vessel, or an aircraft.

13. The article of claim 11 or 12, wherein the substrate is glass.

## Patentansprüche

1. Verfahren zur Herstellung eines Artikels, umfassend ein Substrat, und auf einer Oberfläche des Substrats eine Schicht eines Oberflächenbehandlungsmittels, umfassend eine Polyethergruppe-haltige Silanverbindung der Formel (α1): 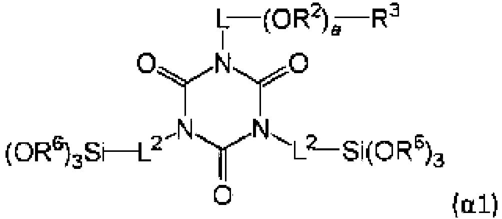
R³ C₁₋₆-Perfluoralkyl ist,
L eine Einfachbindung oder -(CX¹²¹X¹²²)ₒ-(CX¹²³X¹²⁴)_{q}- ist, worin X¹²¹-X¹²⁴ jeweils unabhängig H oder F sind, o eine ganze Zahl von 0-10 ist und q eine ganze Zahl von 1-10 ist,
(OR²)ₐ eine Polyetherkette der Formel:
-(OCF₂CF₂CF₂)ₘ₁₄-
worin m14 eine ganze Zahl von 1-200 ist; oder der Formel:
-(OCF₂CF₂CF₂CF₂)ₘ₁₃-(OCF₂CF₂CF₂)ₘ₁₄-(OCF₂CF₂)ₘ₁₅-(OCF₂)ₘ₁₆-
worin m13 und m14 jeweils eine ganze Zahl von 0-30 sind und m15 und m16 jeweils eine ganze Zahl von 1-200 sind; und worin (m13+m14+m15+m16) ≥ 5 ist, und worin die Reihenfolge der jeweiligen Wiederholungseinheiten willkürlich ist, ist,
L² jeweils unabhängig -CH₂-, -C₂H₄-, C₃H₆ oder -C₄H₈- ist, und
R⁶ jeweils unabhängig C₁₋₄-Alkyl ist,
wobei das Verfahren das Auftragen des Oberflächenbehandlungsmittels auf die Oberfläche des Substrats mit einem Nassbeschichtungsverfahren umfasst,
worin das Substrat einer Plasmabehandlung bei Atmosphärendruck unterzogen wird, bevor das Oberflächenbehandlungsmittel auf die Oberfläche des Substrats aufgetragen wird, und
worin das Flussverhältnis von Entladungsgas zu reaktivem Gas, das in der Plasmabehandlung bei Atmosphärendruck verwendet wird, 1:5 bis 5:1 beträgt.

2. Verfahren gemäß Anspruch 1, worin das Nassbeschichtungsverfahren ausgewählt aus Eintauchbeschichtung, Rotationsbeschichtung, Fliessbeschichtung, Sprühbeschichtung, Walzenbeschichtung und Gravurbeschichtung.

3. Verfahren gemäß Anspruch 1 oder 2, worin das Nassbeschichtungsverfahren eine Sprühbeschichtung ist.

4. Verfahren gemäß irgendeinem der Ansprüche 1-3, worin das Entladungsgas, das in der Plasmabehandlung bei Atmosphärendruck verwendet wird, Argon oder Stickstoff ist.

5. Verfahren gemäß irgendeinem der Ansprüche 1-4, worin das in der Plasmabehandlung bei Atmosphärendruck verwendete reaktive Gas Sauerstoff ist.

6. Verfahren gemäß irgendeinem der Ansprüche 1-5, worin die Leistung in der Plasmabehandlung bei Atmosphärendruck 700-800 W beträgt.

7. Verfahren gemäß irgendeinem der Ansprüche 1-6, worin das Oberflächenbehandlungsmittel ferner eine Fluorpolyethergruppe-haltige Silanverbindung gemäß irgendeiner der Formeln (A1), (A2), (B1), (B2), (C1), (C2), (D1), (D2) und (E1) umfasst: 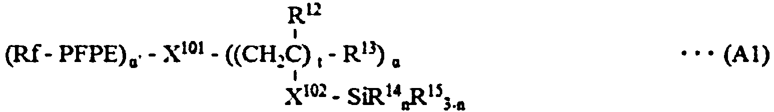 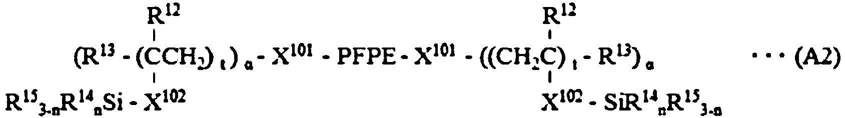
worin jeweils unabhängig bei jedem Auftreten
Rf C₁₋₁₆-Alkyl, optional substituiert mit einem oder mehr F, ist;
PFPE -(OC₆F₁₂)ₐ₁-(OC₅F₁₀)_{b1}-(OC₄F₈)_{c1}-(OC₃F₆)_{d1}-(OC₂F₄)ₑ₁-(OCF₂)_{f1}- ist,
worin a1, b1, c1, d1 und e1 jeweils unabhängig eine ganze Zahl von 0-200 sind und (a1+b1+c1+d1+e1+f1), f1 eine ganze Zahl von 1-200 ist und die Reihenfolge der Wiederholungseinheiten in Klammern mit den Indizes a1-f1 jeweils nicht beschränkt ist;
R¹² H oder Niederalkyl ist;
R¹³ H oder Halogen ist;
R¹⁴ H oder C₁₋₂₂-Alkyl ist;
R¹⁵ OH oder eine hydrolysierbare Gruppe ist;
n eine ganze Zahl von 0-3 in jeder (-SiR¹⁴ₙR¹⁵₃₋ₙ)-Einheit ist, mit der Maßgabe, dass zumindest ein R¹⁵ in dem Molekül vorliegt;
X¹⁰¹ eine Einfachbindung oder eine di- bis dekavalente organische Gruppe ist;
X¹⁰² eine Einfachbindung oder eine divalente organische Gruppe ist;
t eine ganze Zahl von 1-10 ist;
α eine ganze Zahl von 1-9 ist; und
α' eine ganze Zahl von 1-9 ist;
**(Rf - PFPE) _{β'} - X¹⁰⁵ - (SiR¹⁴ₙR¹⁵₃₋ₙ) _{β} ···** **(B1)**
**(R¹⁵₃₋ₙR¹⁴ₙSi) _{β} - X¹⁰⁵ - PFPE - X¹⁰⁵ - (SiR¹⁴ₙR¹⁵₃₋ₙ) _{β} ···** **(B2)**
worin Rf, PFPE, R¹⁴, R¹⁵ und n wie für die Formeln (A1) und (A2) definiert sind, und jeweils unabhängig bei jedem Auftreten
X¹⁰⁵ eine Einfachbindung oder eine di- bis dekavalente organische Gruppe ist;
β eine ganze Zahl von 1-9 ist;
β' eine ganze Zahl von 1-9 ist;
(Rf-PFPE)_{γ'}-X¹⁰⁷-(SiR^{a3}ₖR^{b3}ₗR^{c3}ₘ)_{γ} ··· (C1)
(R^{c3}ₘR^{b3}ₗR^{a3}ₖSi)_{γ}-X¹⁰⁷-PFPE-X¹⁰⁷- (SiR^{a3}ₖR^{b3}ₗR^{c3}ₘ)_{γ} ··· (C2)
worin Rf und PFPE die für die Formeln (A1) und (A2) definiert sind, und jeweils unabhängig bei jedem Auftreten
X¹⁰⁷ eine Einfachbindung oder eine di- bis dekavalente organische Gruppe ist;
γ eine ganze Zahl von 1-9 ist;
γ' eine ganze Zahl von 1-9 ist;
R^{a3} -Z³-SiR⁷¹ₚR⁷²_{q}R⁷³ᵣ ist, worin, jeweils unabhängig bei jedem Auftreten
Z³ -O- oder eine divalente organische Gruppe ist;
R⁷¹ die gleiche Bedeutung wie R^{a3} besitzt;
die Anzahl von Si-Atomen, die über eine Z³-Gruppe in R^{a3} linear verknüpft sind, ≤ 5 ist;
R⁷² OH oder eine hydrolysierbare Gruppe ist;
R⁷³ H oder Niederalkyl ist;
p eine ganze Zahl von 0-3 ist;
q eine ganze Zahl von 0-3 ist;
r eine ganze Zahl von 0-3 ist, mit der Maßgabe, dass in jedem -Z³-SiR⁷¹ₚR⁷²_{q}R⁷³ᵣ, (p+q+r) = 3 und zumindest ein R⁷² in den Formeln (C1) und (C2) vorliegt;
R^{b3} OH oder eine hydrolysierbare Gruppe ist;
R^{c3} H oder Niederalkyl ist;
k eine ganze Zahl von 1-3 ist;
1 eine ganze Zahl von 0-2 ist;
m eine ganze Zahl von 0-2 ist;
mit der Maßgabe, dass, in der Einheit in Klammern mit y, (k+l+m) = 3 ist;
(Rf-PFPF-)_{δ'}-X¹⁰⁹-(CR^{d3}_{k'}R^{e3}_{l'}R^{f3}_{m'})_{δ} ··· (D1)
(R^{f3}_{m'}R^{e3}_{l'}R^{d3}_{k'}C)_{δ}-X¹⁰⁹-PFPE-X¹⁰⁹-(CR^{d3}_{k'}R^{e3}_{l'}R^{f3}_{m'})_{δ} ··· (D2)
worin Rf und PFPE die für die Formeln (A1) und (A2) definiert sind, und jeweils unabhängig bei jedem Auftreten
X¹⁰⁹ eine Einfachbindung oder eine di- bis dekavalente organische Gruppe ist;
δ eine ganze Zahl von 1-9 ist;
δ' eine ganze Zal von 1-9 ist;
R^{d3} -Z^{3'}-CR⁸¹_{p'}R⁸²_{q'}R⁸³_{r'} ist, worin, jeweils unabhängig bei jedem Auftreten
Z^{3'} -O- oder eine divalente organische Gruppe ist;
R⁸¹ die gleiche Bedeutung wie R^{d3} besitzt; die Anzahl von C-Atomen, die über eine Z^{3'}-Gruppe in R^{d3} linear verknüpft sind, ≤ 5 ist;
R⁸² -Y³-SiR⁸⁵ⱼR⁸⁶₃₋ⱼ ist, worin jeweils unabhängig bei jedem Auftreten
Z³ eine divalente organische Gruppe ist;
R⁸⁵ OH oder eine hydrolysierbare Gruppe ist;
R⁸⁶ H oder Niederalkyl ist; und
j eine ganze Zahl von 1-3 in jeder -Y³-SiR⁸⁵ⱼR⁸⁶₃₋ⱼ)-Einheit ist;
R⁸³ H, OH oder Niederalkyl ist;
p' eine ganze Zahl von 0-3 ist;
q' eine ganze Zahl von 0-3 ist;
r' eine ganze Zahl von 0-3 ist;
R^{e3} -Y³ -SiR⁸⁵ⱼR⁸⁶₃₋ⱼ ist;
R^{f3} H, OH oder Niederalkyl ist;
k' eine ganze Zahl von 0-3 ist;
l' eine ganze Zahl von 0-3 ist,
m' eine ganze Zahl von 0-3 ist;
mit der Maßgabe, dass zumindest ein q' 2 oder 3 ist oder zumindest ein l' 2 oder 3 ist;
(Rf-PFPE-G⁵)ₐ₅-Z⁵-((O-R¹⁶)_{c5}-SiR¹⁴ₙR¹⁵₃₋ₙ)_{b5} ··· (E1)
worin Rf, PFPE, R¹⁴, R¹⁵ und n wie für die Formeln (A1) und (A2) definiert sind und
G⁵ -R¹⁷-O-, -R¹⁷-CONH-, -CONH- oder eine Einfachbindung ist;
R¹⁷ eine Alkylengruppe ist;
Z⁵ eine (a5+b5)-valente Kohlenwasserstoffgruppe oder eine (a5+b5)-valente Gruppe mit ≥ 2 Kohlenstoffatomen und mit zumindest einem Ether-Sauerstoffatom zwischen Kohlenstoffatomen in der Kohlenwasserstoffgruppe ist;
R¹⁶ Alkylen ist;
a5 eine ganze Zahl ≥ 1 ist;
b5 eine ganze Zahl ≥ 1 ist;
mit der Maßgabe, dass (a5+b5) ≥ 3 ist; und
c5 0 oder 1 ist.

8. Verfahren gemäß irgendeinem der Ansprüche 1-7, worin das Oberflächenbehandlungsmittel ferner eine Fluorpolyethergruppe-haltige Silanverbindung mit einer OCF₂-Einheit umfasst.

9. Verfahren gemäß irgendeinem der Ansprüche 1-8, worin das Substrat ein Glassubstrat ist.

10. Verfahren gemäß irgendeinem der Ansprüche 1-9, worin der Artikel Glas für die Verwendung im Freien ist, bevorzugt Automobilglas.

11. Artikel, umfassend ein Substrat, und auf einer Oberfläche des Substrats eine aus einem Oberflächenbehandlungsmittel gebildete Schicht, umfassend eine durch die Formel (α1) dargestellte Polyethergruppe-haltige Silanverbindung: 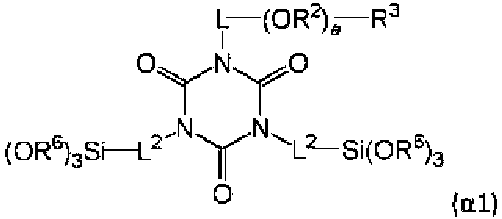 worin
R³ C₁₋₆-Perfluoralkyl ist,
L eine Einfachbindung oder -(CX¹²¹X¹²²)ₒ-(CX¹²³X¹²⁴)_{q}- ist, worin X¹²¹-X¹²⁴ jeweils unabhängig H oder F sind, o eine ganze Zahl von 0-10 ist und q eine ganze Zahl von 1-10 ist,
(OR²)ₐ eine Polyetherkette der Formel:
-(OCF₂CF₂CF₂)ₘ₁₄-
worin m14 eine ganze Zahl von 1-200 ist; oder der Formel:
-(OCF₂CF₂CF₂CF₂)ₘ₁₃-(OCF₂CF₂CF₂)ₘ₁₄-(OCF₂CF2)ₘ₁₅-(OCF₂)ₘ₁₆-
worin m13 und m14 jeweils eine ganze Zahl von 0-30 sind, und m15 und m16 jeweils eine ganze Zahl von 1-200 sind; und (m13+m14+m15+m16) ≥ 5 ist, und die Reihenfolge der jeweiligen Wiederholungseinheiten willkürlich ist, ist,
L² jeweils unabhängig -CH₂-, -C₂H₄-, C₃H₆ oder -C₄H₈- ist, und
R⁶ jeweils unabhängig C₁₋₄-Alkyl ist,
wobei die Schicht durch ein Nassbeschichtungsverfahren gebildet ist.

12. Artikel gemäß Anspruch 11, welcher ein Artikel zur Verwendung im Freien ist, bevorzugt für ein Landfahrzeug, ein Wasserfahrzeug oder ein Luftfahrzeug.

13. Artikel gemäß Anspruch 11 oder 12, worin das Substrat Glas ist.

## Revendications

1. Procédé de fabrication d'un article comprenant un substrat et, sur une surface du substrat, une couche d'un agent de traitement de surface comprenant un composé silane contenant un groupe polyéther de formule (α1) : 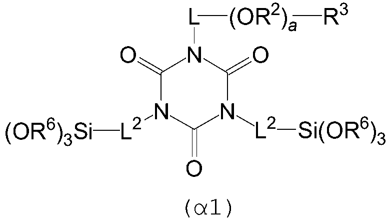 dans laquelle :
R³ est C₁₋₆-perfluoroalkyle,
L es tune liaison simple ou -(CX¹²¹X¹²²)ₒ-(CX¹²³X¹²⁴)_{q}- dans laquelle X¹²¹-X¹²⁴ sont chacun indépendamment H ou F, o est un entier de 0-10, et q est un entier de 1-10, (OR²), est une chaîne polyéther de la formule :
-(OCF₂CF₂CF₂)ₘ₁₄-
dans laquelle m14 est un entier de 1-200 ; ou de la formule :
-(OCF₂CF₂CF₂CF₂)ₘ₁₃-(OCF₂CF₂CF₂)ₘ₁₄-(OCF₂CF₂)ₘ₁₅-(OCF₂)ₘ₁₆-
dans laquelle m13 et m14 sont chacun un nombre entier de 0-30, et m15 et m16 sont chacun un nombre entier de 1-200 ; et (m13+m14+m15+m16) est ≥ 5 ; et l'ordre de chaque unité répétitive est arbitraire,
L² est chacun indépendamment -CH₂-, -C₂H₄-, -C₃H₆-, ou - C₄H₈-, et
R⁶ est chacun indépendamment C₁₋₄-alkyle,
laquelle méthode comprend l'application de l'agent de traitement de surface sur la surface du substrat par un procédé de revêtement humide,
dans laquelle le substrat est soumis à un traitement au plasma à pression atmosphérique avant l'application de l'agent de traitement de surface sur la surface du substrat, et
dans laquelle le rapport de débit entre le gaz de décharge et le gaz réactif utilisé dans le traitement au plasma à pression atmosphérique est de 1:5 à 5:1.

2. Le procédé selon la revendication 1, dans lequel le procédé de revêtement humide est choisi parmi le revêtement par immersion, le revêtement par centrifugation, le revêtement par écoulement, le revêtement par pulvérisation, le revêtement au rouleau et le revêtement par héliogravure.

3. Le procédé selon la revendication 1 ou 2, dans lequel le procédé de revêtement humide est le revêtement par pulvérisation.

4. Le procédé selon l'une quelconque des revendications 1 à 3, dans lequel le gaz de décharge utilisé dans le traitement par plasma à pression atmosphérique est de l'argon ou de l'azote.

5. Le procédé selon l'une quelconque des revendications 1 à 4, dans lequel le gaz réactif utilisé dans le traitement par plasma à pression atmosphérique est de l'oxygène.

6. Le procédé selon l'une quelconque des revendications 1 à 5, dans lequel la puissance de sortie du traitement par plasma à pression atmosphérique est de 700 à 800 W.

7. Le procédé selon l'une quelconque des revendications 1 à 6, dans lequel l'agent de traitement de surface comprend en outre un composé silane contenant un groupe fluoropolyéther de l'une quelconque des formules (A1), (A2), (B1), (B2), (C1), (C2), (D1), (D2) et (E1) : 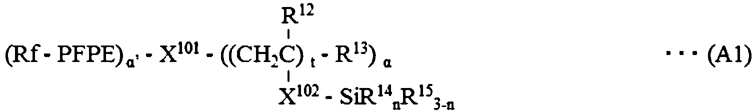 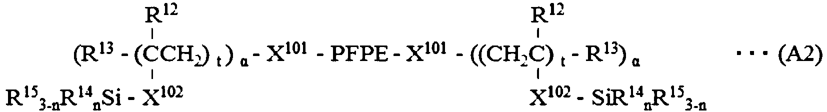
dans lesquelles, chacun indépendamment à chaque occurrence,
Rf est C₁₋₁₆-alkyle optionnellement substitué avec un ou plusieurs F ;
PFPE est -(OC₆F₁₂)*ₐ₁-*(OC₅F₁₀)*_{b1}*-(OC₄F₈)*_{c1}-*(OC₃F₆)*_{d1}-*(OC₂F₄)*ₑ₁-*(OCF₂)*_{f1}*-
dans laquelle *a1, b1, c1, d1* et *e1* sont chacun indépendamment un entier de 0-200 et (*a*1*+b*1*+c*1*+d*1*+e*1*+f*1)*, f1* est un entier de 1-200, et l'ordre des unités de répétition respectives en parenthèses avec les indices *a1-f1* n'est pas limité ; R¹² est H ou alkyle inférieur ;
R¹³ est H ou halogène ;
R¹⁴ est H ou C₁₋₂₂-alkyle ;
R¹⁵ est OH ou un groupe hydrolysable ;
n est un entier de 0-3 dans chaque unité (-SiR¹⁴ₙR¹⁵₃₋ₙ) ; à condition que au moins un R¹⁵ soit présent dans la molécule ;
X¹⁰¹ est une liaison simple ou un groupe organique di-à décavalent ;
X¹⁰² est une liaison simple ou un groupe organique divalent ;
*t* est un entier de 1-10 ;
α est un entier de 1-9 ; et
α' est un entier de 1-9 ;
(Rf-PFPE)_{β'}-X¹⁰⁵ -(SiR¹⁴ₙR¹⁵₃₋ₙ)_{β} ··· (B1)
(R¹⁵₃₋ₙR¹⁴ₙSi)_{β}-X¹⁰⁵-PFPE-X¹⁰⁵-(SiR¹⁴ₙR¹⁵₃₋ₙ)_{β} ··· (B2)
dans lesquelles Rf, PFPE, R¹⁴, R¹⁵ et *n* sont comme définis dans les formules (A1) et (A2) et, chacun indépendamment à chaque occurrence,
X¹⁰⁵ est une liaison simple ou un groupe organique di- à décavalent ;
β est un entier de 1-9 ;
β' est un entier de 1-9 ;
(Rf-PFPE)_{γ'}-X¹⁰⁷-(SiR^{a3}ₖR^{b3}ₗR^{c3}ₘ)_{γ} ··· (C1)
(R^{c3}ₘR^{b3}ₗR^{a3}ₖSi)_{γ}-X¹⁰⁷-PFPE-X¹⁰⁷-(SiR^{a3}ₖR^{b3}ₗR^{c3}ₘ)_{γ} ··· (C2)
dans lesquelles Rf et PFPE sont comme définis dans les formules (A1) et (A2) et, chacun indépendamment à chaque occurrence,
X¹⁰⁷ est une liaison simple ou un groupe organique di- à décavalent ;
γ est un entier de 1-9 ;
γ' est un entier de 1-9 ;
R^{a3} est -Z³-SiR⁷¹*ₚ*R⁷²*_{q}*R⁷³*ᵣ* dans laquelle, chacun indépendamment à chaque occurrence,
Z³ est -O- ou un groupe organique divalent ;
R⁷¹ a la même signification que R^{a3} ;
le nombre d'atomes de Si liés linéairement par un groupe Z³ dans R^{a3} est ≤ 5 ;
R⁷² est OH ou un groupe hydrolysable ;
R⁷³ est H ou alkyle inférieur ;
*p* est un entier de 0-3 ;
*q* est un entier de 0-3 ;
*r* est un entier de 0- 3 ;
à condition que dans chaque -Z³-SiR⁷¹*ₚ*R⁷²*_{q}*R⁷³*ᵣ* (*p+q+r*) = 3 et au moins un R⁷² est présent dans les formules (C1) and (C2) ;
R^{b3} est OH ou un groupe hydrolysable ;
R^{c3} est H ou alkyle inférieur ;
*k* est un entier de 1-3;
*l* est un entier de 0-2;
*m* est un entier de 0-2;
à condition que, dans l'unité en parentheses avec γ,
(*k+l+m*) = 3 ;
(Rf-PFPE)_{δ'}-X¹⁰⁹-(CR^{d3}_{k'}R^{e3}_{l'}R^{f3}_{m'})_{δ} ··· (D1)
(R^{f3}_{m'}R^{e3}_{l'}R^{d3}_{k'}C)_{δ}-X¹⁰⁹-PFPE-X¹⁰⁹-(CR^{d3}_{k'}R^{e3}_{l'}R^{f3}_{m'})_{δ} ··· (D2)
dans lesquelles Rf et PFPE sont comme définis dans les formules (A1) et (A2) et, chacun indépendamment à chaque occurrence,
X¹⁰⁹ est une liaison simple ou un groupe organique di- à décavalent ;
δ est un entier de 1-9 ;
δ' est un entier de 1-9 ;
R^{d3} est -Z³'-CR⁸¹*_{p'}*R⁸²*_{q'}*R⁸³*_{r'}* dans laquelle, chacun indépendamment à chaque occurrence,
Z^{3'} est -O- ou un groupe organique divalent ;
R⁸¹ a la même signification que R^{d3} ;
le nombre d'atomes de C liés linéairement par un groupe Z^{3'} dans R^{d3} est ≤ 5 ;
R⁸² est -Y³-SiR⁸⁵*ⱼ*R⁸⁶_{3-*j*} dans laquelle, chacun indépendamment à chaque occurrence,
Y³ est un groupe organique divalent ;
R⁸⁵ est OH ou un groupe hydrolysable ;
R⁸⁶ est H ou alkyle inférieur ; et
j est un entier de 1-3 dans chaque unité (-Y³-SiR⁸⁵*ⱼ*R⁸⁶_{3-*j*}) ;
R⁸³ est H, OH ou alkyle inférieur ;
*p*' est un entier de 0-3 ;
*q*' est un entier de 0-3 ;
*r*' est un entier de 0-3 ;
R^{e3} est -Y³-SiR⁸⁵*ⱼ*R⁸⁶_{3-*j*} ;
R^{f3} est H, OH ou alkyle inférieur ;
*k'* est un entier de 0-3 ;
l' est un entier de 0-3 ;
*m'* est un entier de 0-3 ;
à condition que au moins un q' soit 2 ou 3 ou au
moins un *l'* soit 2 ou 3 ;
(Rf-PFPE-G⁵)ₐ₅-Z⁵-((O-R¹⁶)_{c5}-SiR¹⁴ₙR¹⁵₃₋ₙ)_{b5} ··· (E1)
dans laquelle Rf, PFPE, R¹⁴, R¹⁵ et *n* sont comme définis dans les formules (A1) et (A2) et
G⁵ est -R¹⁷-O-, -R¹⁷-CONH-, -CONH-, ou une liaison simple ;
R¹⁷ est un groupe alkylène ;
Z⁵ est un groupe hydrocarboné (*a5*+*b5*)-valent ou un groupe (*a5*+*b5*)-valent ayant ≥ 2 atomes de carbone et ayant au moins un atome d'oxygène éthérique entre des atomes de carbone dans le groupe hydrocarboné ;
R¹⁶ est alkylène ;
*a5* est un entier de ≥ 1 ;
*b5* est un entier de ≥ 1 ;
à condition que (*a5+b5*) soit ≥ 3 ; et
*c5* est 0 ou 1.

8. Le procédé selon l'une quelconque des revendications 1 à 7, dans lequel l'agent de traitement de surface comprend en outre un composé silane contenant un groupe fluoropolyéther ayant une unité OCF₂.

9. Le procédé selon l'une quelconque des revendications 1 à 8, dans lequel le substrat est un substrat en verre.

10. Le procédé selon l'une quelconque des revendications 1 à 9, dans lequel l'article est un verre destiné à une utilisation en extérieur, de préférence un verre automobile.

11. Article comprenant un substrat et, sur une surface du substrat, une couche formée d'un agent de traitement de surface comprenant un composé silane contenant un groupe polyéther de formule (α1) : 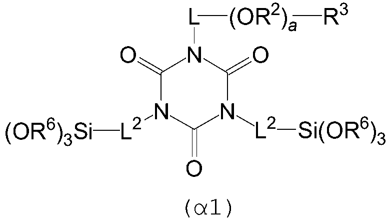 dans laquelle :
R³ est C₁₋₆-perfluoroalkyle,
L est une liaison simple ou -(CX¹²¹X¹²²)ₒ-(CX¹²³X¹²⁴)_{q}- dans laquelle X¹²¹-X¹²⁴ sont chacun indépendamment H ou F, o est un entier de 0-10, et q est un entier de 1-10,
(OR²)ₐ est une chaîne polyéther de la formule :
-(OCF₂CF₂CF₂)ₘ₁₄-
dans laquelle m14 est un entier de 1-200 ; ou de la formule :
-(OCF₂CF₂CF₂CF₂)ₘ₁₃-(OCF₂CF₂CF₂)ₘ₁₄-(OCF₂CF₂)ₘ₁₅-(OCF₂)ₘ₁₆-
dans laquelle m13 et m14 sont chacun un nombre entier compris entre 0 et 30, et m15 et m16 sont chacun un nombre entier compris entre 1 et 200 ; et (m13+m14+m15+m16) est ≥ 5 ; et l'ordre de chaque unité répétitive est arbitraire,
L² est chacun indépendamment -CH₂-, -C₂H₄-, -C₃H₆-, ou - C₄H₈-, et
R⁶ est chacun indépendamment C₁₋₄-alkyle,
dans laquelle la couche est formée par un procédé de revêtement humide.

12. L'article de la revendication 11, qui est un article destiné à être utilisé à l'extérieur, de préférence pour un véhicule, un navire ou un aéronef.

13. L'article de la revendication 11 ou 12, dans lequel le substrat est en verre.
